(19) Europäisches Patentamt
European Patent Office
Office européen des brevets

(11) **EP 3 609 187 A1**

(12) **EUROPEAN PATENT APPLICATION**
published in accordance with Art. 153(4) EPC

(43) Date of publication:
**12.02.2020 Bulletin 2020/07**

(51) Int Cl.:
*H04N 21/2343* (2011.01)  *H04N 21/235* (2011.01)
*H04N 21/81* (2011.01)  *H04N 21/236* (2011.01)

(21) Application number: **17917302.6**

(22) Date of filing: **08.08.2017**

(86) International application number:
**PCT/KR2017/008547**

(87) International publication number:
**WO 2019/013384 (17.01.2019 Gazette 2019/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.07.2017 US 201762530284 P**

(71) Applicant: **LG Electronics Inc.**
**Seoul 07336 (KR)**

(72) Inventors:
• **OH, Hyunmook**
**Seoul 06772 (KR)**
• **OH, Sejin**
**Seoul 06772 (KR)**

(74) Representative: **Plasseraud IP**
**66, rue de la Chaussée d'Antin**
**75440 Paris Cedex 09 (FR)**

(54) **METHOD FOR TRANSMITTING REGION-BASED 360-DEGREE VIDEO, METHOD FOR RECEIVING REGION-BASED 360-DEGREE VIDEO, REGION-BASED 360-DEGREE VIDEO TRANSMISSION DEVICE, AND REGION-BASED 360-DEGREE VIDEO RECEPTION DEVICE**

(57) A 360-degree video data processing method, which is performed by a 360-degree video transmission device, according to the present invention, comprises the steps of: acquiring 360-degree video data which are captured by at least one camera; acquiring a projected picture by processing the 360-degree video data; acquiring a packed picture by applying a region-specific packing process to the projected picture; generating metadata for the 360-degree video data; encoding the packed picture; encoding the packed picture; and performing a process of storage or transmission for the encoded picture and the metadata, wherein the packed picture includes at least one region-specific additional information region for a target region of the packed picture, and the metadata include information for indicating a type of RAI region.

FIG. 9B

| region_wise_auxiliary_information ( payloadSize ) { | Descriptor |
|---|---|
| region_wise_auxiliary_information_cancel_flag | u(1) |
| if(! region_wise_auxiliary_information_cancel_flag ) { | |
| region_wise_auxiliary_information_persistence_flag | u(1) |
| num_regions_minus1 | u(8) |
| target_picture_width | u(16) |
| target_picture_height | u(16) |
| for ( i=0; i<=num_regions_minus1; i++ ) { | |
| packing_type[i] | u(4) |
| region_wise_packing (packing_type[i]) | |
| region_wise_auxiliary_information_present_flag[i] | u(1) |
| if(region_wise_auxiliary_information_present_flag[i]) { | |
| for(j=0; j<4; j++) {   // 0: top, 1: left, 2: bottom, 3: right | |
| rai_width[i][j] | u(8) |
| rai_height[i][j] | u(8) |
| } | |
| rai_not_used_for_pred_flag[i] | u(1) |
| rai_equal_type_flag[i] | u(1) |
| rai_transformation_flag[i] | u(1) |
| rai_corner_present_flag[i] | u(1) |
| rai_extended_coverage_flag[i] | u(1) |
| rai_presentation_flag[i] | u(1) |
| if(rai_equal_type_flag[i]) { | |
| rai_type[i] | u(3) |
| rai_dir[i] | u(2) |
| if(rai_transformation_flag[i]) | |
| rai_transform_type[i] | u(3) |
| rai_hor_scale[i] | u(8) |
| rai_ver_scale[i] | u(8) |
| } | |
| if(rai_type[i] == 2) | |
| rai_delta_QP[i] | i(8) |
| } | |
| ... | |

Printed by Jouve, 75001 PARIS (FR)

Description

**BACKGROUND OF THE DISCLOSURE**

Field of the disclosure

The present disclosure relates to a 360-degree video and, more specifically, to methods and apparatus for transmitting and receiving a 360-degree video.

Related Art

Virtual reality (VR) systems allow users to feel as if they are in electronically projected environments. Systems for providing VR can be improved in order to provide images with higher picture quality and spatial sounds. VR systems allow users to interactively consume VR content.

**SUMMARY**

An object of the present disclosure is to provide a method and apparatus for improving VR video data transmission efficiency for providing a VR system.

Another object of the present disclosure is to provide a method and apparatus for transmitting VR video data and metadata with respect to VR video data.

Another object of the present disclosure is to provide a method and apparatus for transmitting metadata for VR video data and region-based packing procedure of VR video data.

Another object of the present disclosure is to provide a method and apparatus for transmitting metadata for VR video data and region-based additional information of a region to which VR video data is mapped.

According to an embodiment of the present disclosure, it is provided a 360-degree video data processing method performed by a 360 video transmission apparatus. The method includes acquiring 360 video data captured by at least one camera, acquiring a projected picture by processing the 360 video data, acquiring a packed picture by applying region-wise packing to the projected picture, generating metadata for the 360 video data, encoding the packed picture, and performing processing for storage or transmission on the encoded picture and the metadata, wherein the packed picture comprises at least one Region-wise Auxiliary Information (RAI) region for a target region of the packed picture, and wherein metadata comprises information representing a type of the RAI region.

According to another embodiment of the present disclosure, it is provided a 360 video transmission apparatus processing 360-degree video data. The 360 video transmission apparatus includes a data inputter for acquiring 360 video data captured by at least one camera, a projection processor for acquiring a projected picture by processing the 360 video data, a region-wise packing processor for acquiring a packed picture by applying region-wise packing to the projected picture, a metadata processor for generating metadata for the 360 video data, encoding the packed picture, a data encoder for encoding the packed picture and a transmission processor for performing processing for storage or transmission on the encoded picture and the metadata, wherein the packed picture comprises at least one Region-wise Auxiliary Information (RAI) region for a target region of the packed picture, and wherein metadata comprises information representing a type of the RAI region.

According to still another embodiment of the present disclosure, it is provided a 360-degree video data processing method performed by a 360 video reception apparatus. The method includes receiving a signal including information on a packed picture with respect to 360-degree video data and metadata with respect to the 360-degree video data, acquiring the information on the packed picture and the metadata by processing the signal, decoding the packed picture based on the information on the packed picture, and rendering the decoded picture on a 3D space by processing the decoded picture based on the metadata, wherein the packed picture comprises at least one Region-wise Auxiliary Information (RAI) region for a target region of the packed picture, and wherein metadata comprises information representing a type of the RAI region.

According to another embodiment of the present disclosure, a 360 video reception apparatus for processing 360-degree video data. The 360 video reception apparatus includes a receiver for receiving a signal including information on a packed picture with respect to 360-degree video data and metadata with respect to the 360-degree video data, a reception processor for acquiring the information on the packed picture and the metadata by processing the signal, a data decoder for decoding the packed picture based on the information on the packed picture, and a renderer for rendering the decoded picture on a 3D space by processing the decoded picture based on the metadata, wherein the packed picture comprises at least one Region-wise Auxiliary Information (RAI) region for a target region of the packed picture, and wherein metadata comprises information representing a type of the RAI region.

According to the present disclosure, it is possible to efficiently transmit 360-degree content in an environment supporting next-generation hybrid broadcast using terrestrial broadcast networks and the Internet.

According to the present disclosure, it is possible to propose a method for providing interactive experience in 360-degree content consumption of users.

According to the present disclosure, it is possible to propose a signaling method for correctly reflecting the intention of a 360-degree content provider in 360-degree content consumption of users.

According to the present disclosure, it is possible to propose a method for efficiently increasing transmission capacity and forwarding necessary information in 360-degree content transmission.

According to the present disclosure, it is possible to transmit metadata with respect to a 360-degree video data projection and region-wise packing process, thereby improving transmission efficiency.

## BRIEF DESCRIPTION OF THE DRAWINGS

FIG. 1 is a view illustrating overall architecture for providing a 360-degree video according to the present disclosure.

FIGS. 2 and 3 are views illustrating a structure of a media file according to an embodiment of the present disclosure.

FIG. 4 illustrates an example of the overall operation of a DASH based adaptive streaming model.

FIG. 5 is a view schematically illustrating a configuration of a 360-degree video transmission apparatus to which the present disclosure is applicable.

FIG. 6 is a view schematically illustrating a configuration of a 360-degree video reception apparatus to which the present disclosure is applicable.

FIG. 7 illustrates the entire architecture for providing 360-degree video performed by a 360-degree video transmission device/360-degree video reception device.

FIGS. 8a to 8d illustrate the entire architecture for providing 360-degree video considering RAI region performed by a 360-degree video transmission device/360-degree video reception device.

FIGS. 9a to 9c illustrate an example of metadata for the region-wise auxiliary information.

FIG. 10 illustrates an example of metadata representing information for the extension area.

FIGS. 11a and 11b illustrate the region-wise auxiliary information according to a type of the region-wise auxiliary information.

FIG. 12 illustrates an example of RAI regions for regions of a packed picture to which ERP is applied.

FIG. 13 illustrates an example of a packed picture to which the ERP including the RAI regions.

FIG. 14 illustrates an example of compensating a quality difference between regions in the packed picture through the post processing.

FIG. 15 illustrates the RegionWiseAuxiliaryInformationSEIBox transmitted with being included in the VisualSampleEntry or the HEVCSampleEntry.

FIGS. 16a to 16c illustrate RegionWiseAuxiliaryInformationStruct class according to an embodiment of the present disclosure.

FIG. 17 illustrates the ExtendedCoverageInformation class according to an embodiment of the present disclosure.

FIG. 18 illustrates RectRegionPacking class according to an embodiment of the present disclosure.

FIG. 19 illustrates the RegionWiseAuxiliaryInformationStruct class transmitted with being included in the VisualSampleEntry or the HEVCSampleEntry.

FIG. 20 illustrates an example of defining the RegionWiseAuxiliaryInformationStruct class as the timed metadata.

FIGS. 21a to 21f illustrate an example of the metadata in relation to the region-wise auxiliary information described in DASH based descriptor format.

FIG. 22 schematically illustrates a method for processing 360-degree video data by a 360-degree video transmission device according to the present disclosure.

FIG. 23 schematically illustrates a method for processing 360-degree video data by a 360-degree video reception device according to the present disclosure.

## DESCRIPTION OF EXEMPLARY EMBODIMENTS

The present disclosure may be modified in various forms, and specific embodiments thereof will be described and illustrated in the drawings. However, the embodiments are not intended for limiting the disclosure. The terms used in the following description are used to merely describe specific embodiments, but are not intended to limit the disclosure. An expression of a singular number includes an expression of the plural number, so long as it is clearly read differently. The terms such as "include" and "have" are intended to indicate that features, numbers, steps, operations, elements, components, or combinations thereof used in the following description exist and it should be thus understood that the possibility of existence or addition of one or more different features, numbers, steps, operations, elements, components, or combinations thereof is not excluded.

On the other hand, elements in the drawings described in the disclosure are independently drawn for the purpose of convenience for explanation of different specific functions, and do not mean that the elements are embodied by independent hardware or independent software. For example, two or more elements of the elements may be combined to form a single element, or one element may be divided into plural elements. The embodiments in which the elements are combined and/or divided belong to the disclosure without departing from the concept of the disclosure.

Hereinafter, preferred embodiments of the present disclosure will be described in more detail with reference to the attached drawings. Hereinafter, the same reference numbers will be used throughout this specification to refer to the same components and redundant description of the same component will be omitted.

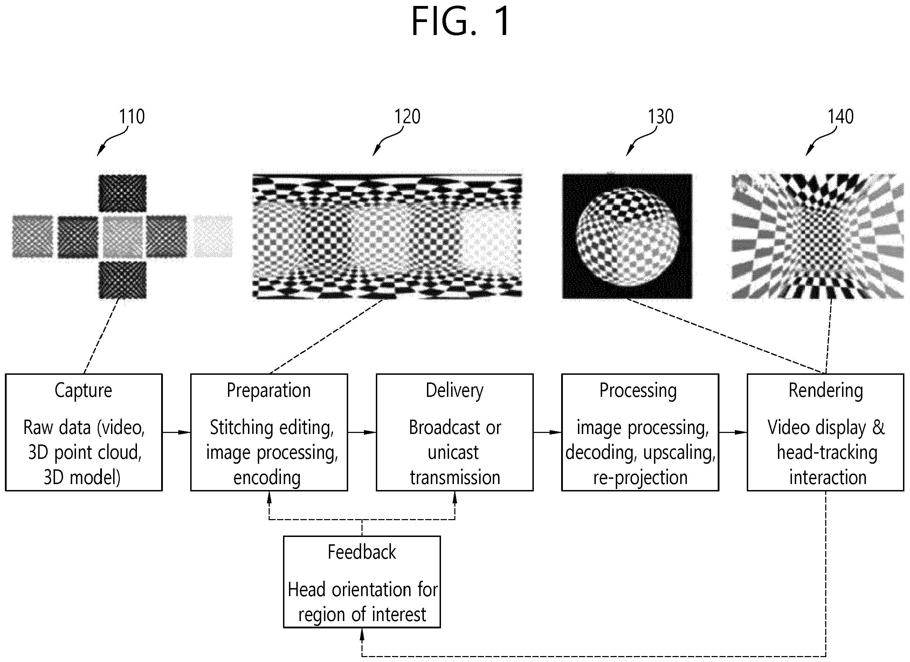

FIG. 1 is a view illustrating overall architecture for providing a 360-degree video according to the present disclosure.

The present disclosure proposes a method of providing 360-degree content in order to provide virtual reality (VR) to users. VR may refer to technology for replicating actual or virtual environments or those environments. VR artificially provides sensory experience to users and thus users can experience electronically projected environments.

360 content refers to content for realizing and providing VR and may include a 360-degree video and/or 360-degree audio. The 360-degree video may refer to video or image content which is necessary to provide VR and is captured or reproduced omnidirectionally (360 degrees). Hereinafter, the 360-degree video may refer to 360-degree video. A 360-degree video may refer to a video or an image represented on 3D spaces in various forms according to 3D models. For example, a 360-degree video can be represented on a spherical surface. The 360-degree audio is audio content for providing VR and may refer to spatial audio content whose audio generation source can be recognized to be located in a specific 3D space. 360 content may be generated, processed and transmitted to users and users can consume VR experiences using the 360 content.

Particularly, the present disclosure proposes a method for effectively providing a 360-degree video. To provide a 360-degree video, a 360-degree video may be captured through one or more cameras. The captured 360-degree video may be transmitted through series of processes and a reception side may process the transmitted 360-degree video into the original 360-degree video and render the 360-degree video. In this manner the 360-degree video can be provided to a user.

Specifically, processes for providing a 360-degree video may include a capture process, a preparation process, a transmission process, a processing process, a rendering process and/or a feedback process.

The capture process may refer to a process of capturing images or videos for a plurality of viewpoints through one or more cameras. Image/video data 110 shown in FIG. 1 may be generated through the capture process. Each plane of 110 in FIG. 1 may represent an image/video for each viewpoint. A plurality of captured images/videos may be referred to as raw data. Metadata related to capture can be generated during the capture process.

For capture, a special camera for VR may be used. When a 360-degree video with respect to a virtual space generated by a computer is provided according to an embodiment, capture through an actual camera may not be performed. In this case, a process of simply generating related data can substitute for the capture process.

The preparation process may be a process of processing captured images/videos and metadata generated in the capture process. Captured images/videos may be subjected to a stitching process, a projection process, a region-wise packing process and/or an encoding process during the preparation process.

First, each image/video may be subjected to the stitching process. The stitching process may be a process of connecting captured images/videos to generate one panorama image/video or spherical image/video.

Subsequently, stitched images/videos may be subjected to the projection process. In the projection process, the stitched images/videos may be projected on 2D image. The 2D image may be called a 2D image frame according to context. Projection on a 2D image may be referred to as mapping to a 2D image. Projected image/video data may have the form of a 2D image 120 in FIG. 1.

Video data projected on the 2D image may be subjected to the region-wise packing process in order to improve video coding efficiency. Region-wise packing may refer to a process of processing video data projected on a 2D image for each region. Here, regions may refer to divided areas of a 2D image. Regions can be obtained by dividing a 2D image equally or arbitrarily according to an embodiment. Further, regions may be divided according to a projection scheme in an embodiment. The region-wise packing process is an optional process and may be omitted in the preparation process.

The processing process may include a process of rotating regions or rearranging the regions on a 2D image in order to improve video coding efficiency according to an embodiment. For example, it is possible to rotate regions such that specific sides of regions are positioned in proximity to each other to improve coding efficiency.

The processing process may include a process of increasing or decreasing resolution for a specific region in order to differentiate resolutions for regions of a 360-degree video according to an embodiment. For example, it is possible to increase the resolution of regions corresponding to relatively more important regions in a 360-degree video to be higher than the resolution of other regions. Video data projected on the 2D image or region-wise packed video data may be subjected to the encoding process through a video codec.

According to an embodiment, the preparation process may further include an additional editing process. In this editing process, editing of image/video data before and after projection may be performed. In the preparation process, metadata regarding stitching/projection/encoding/editing may also be generated. Further, metadata regarding an initial viewpoint or a region of interest (ROI) of video data projected on the 2D image may be generated.

The transmission process may be a process of processing and transmitting image/video data and metadata which have passed through the preparation process. Processing according to an arbitrary transmission protocol may be performed for transmission. Data which has been processed for transmission may be delivered through a broadcast network and/or a broadband. Such data may be delivered to a reception side in an on-demand manner. The reception side may receive the data through various paths.

The processing process may refer to a process of decoding received data and re-projecting projected image/video data on a 3D model. In this process, image/video data projected on the 2D image may be re-projected on a 3D space. This process may be called mapping or projection according to context. Here, 3D model to which image/video data is mapped may have different forms according to 3D models. For example, 3D models may include a sphere, a cube, a cylinder and a pyramid.

According to an embodiment, the processing process may additionally include an editing process and an up-scaling process. In the editing process, editing of image/video data before and after re-projection may be further performed. When the image/video data has been reduced, the size of the image/video data can be increased by up-scaling samples in the up-scaling process. An operation of decreasing the size through down-scaling may be performed as necessary.

The rendering process may refer to a process of rendering and displaying the image/video data re-projected on the 3D space. Re-projection and rendering may be combined and represented as rendering on a 3D model. An image/video re-projected on a 3D model (or rendered on a 3D model) may have a form 130 shown in FIG. 1. The form 130 shown in FIG. 1 corresponds to a case in which the image/video is re-projected on a 3D spherical model. A user can view a region of the rendered image/video through a VR display. Here, the region viewed by the user may have a form 140 shown in FIG. 1.

The feedback process may refer to a process of delivering various types of feedback information which can be acquired in a display process to a transmission side. Interactivity in consumption of a 360-degree video can be provided through the feedback process. According to an embodiment, head orientation information, viewport information representing a region currently viewed by a user, and the like can be delivered to a transmission side in the feedback process. According to an embodiment, a user may interact with an object realized in a VR environment. In this case, information about the interaction may be delivered to a transmission side or a service provider in the feedback process. According to an embodiment, the feedback process may not be performed.

The head orientation information may refer to information about the position, angle, motion and the like of the head of a user. Based on this information, information about a region in a 360-degree video which is currently viewed by the user, that is, viewport information, can be calculated.

The viewport information may be information about a region in a 360-degree video which is currently viewed by a user. Gaze analysis may be performed through the viewpoint information to check how the user consumes the 360-degree video, which region of the 360-degree video is gazed by the user, how long the region is gazed, and the like. Gaze analysis may be performed at a reception side and a result thereof may be delivered to a transmission side through a feedback channel. A device such as a VR display may extract a viewport region based on the position/direction of the head of a user, information on a vertical or horizontal field of view (FOV) supported by the device, and the like.

According to an embodiment, the aforementioned feedback information may be consumed at a reception side as well as being transmitted to a transmission side. That is, decoding, re-projection and rendering at the reception side may be performed using the aforementioned feedback information. For example, only a 360-degree video with respect to a region currently viewed by the user may be preferentially decoded and rendered using the head orientation information and/or the viewport information.

Here, a viewport or a viewport region may refer to a region in a 360-degree video being viewed by a user. A viewpoint is a point in a 360-degree video being viewed by a user and may refer to a center point of a viewport region. That is, a viewport is a region having a viewpoint at the center thereof, and the size and the shape of the region can be determined by an FOV which will be described later.

In the above-described overall architecture for providing a 360-degree video, image/video data which is subjected to the capture/projection/encoding/transmission/decoding/re-projection/rendering processes may be referred to as 360-degree video data. The term "360-degree video data" may be used as the concept including metadata and signaling information related to such image/video data.

To store and transmit media data such as the aforementioned audio and video data, a standardized media file format may be defined. According to an embodiment, a media file may have a file format based on ISO BMFF (ISO base media file format).

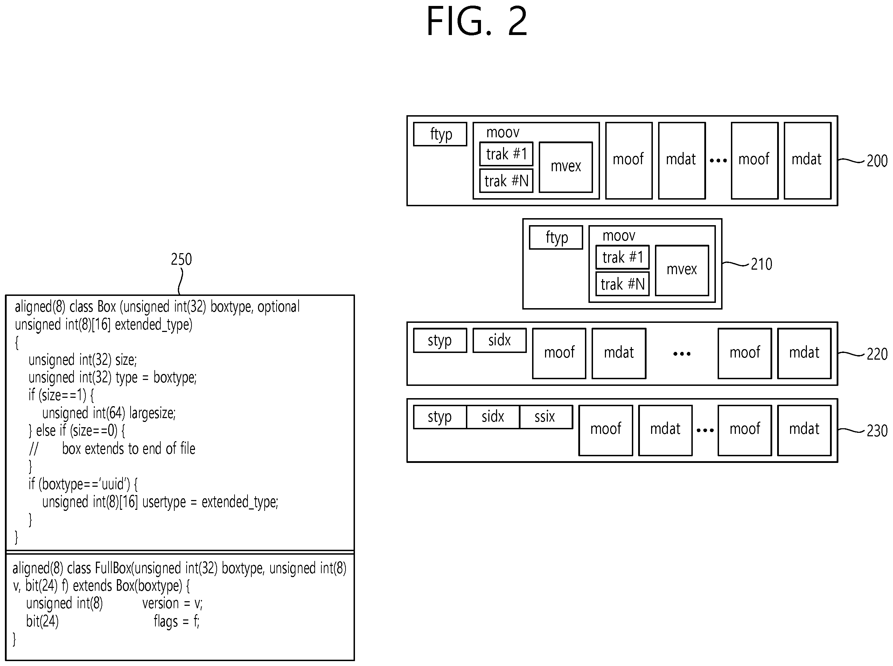

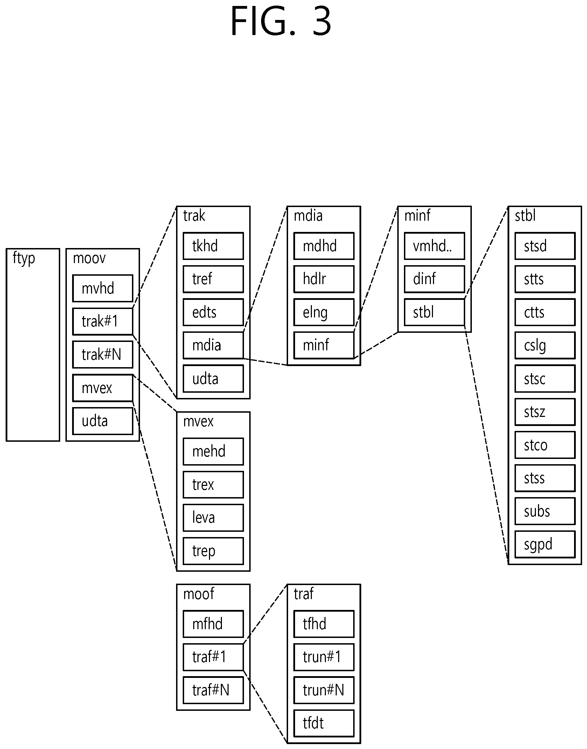

FIGS. 2 and 3 are views illustrating a structure of a media file according to an embodiment of the present disclosure.

The media file according to the present disclosure may include at least one box. Here, a box may be a data block or an object including media data or metadata related to media data. Boxes may be in a hierarchical structure and thus data can be classified and media files can have a format suitable for storage and/or transmission of large-capacity media data. Further, media files may have a structure which allows users to easily access media information such as moving to a specific point of media content.

The media file according to the present disclosure may include an ftyp box, a moov box and/or an mdat box.

The ftyp box (file type box) can provide file type or compatibility related information about the corresponding media file. The ftyp box may include configuration version information about media data of the corresponding media file. A decoder can identify the corresponding media file with reference to ftyp box.

The moov box (movie box) may be a box including metadata about media data of the corresponding media file. The moov box may serve as a container for all metadata. The moov box may be a highest layer among boxes related to metadata. According to an embodiment, only one moov box may be present in a media file.

The mdat box (media data box) may be a box containing actual media data of the corresponding media file. Media data may include audio samples and/or video samples. The mdat box may serve as a container containing such media samples.

According to an embodiment, the aforementioned moov box may further include an mvhd box, a trak box and/or an mvex box as lower boxes.

The mvhd box (movie header box) may include information related to media presentation of media data included in the corresponding media file. That is, the mvhd box may include information such as a media generation time, change time, time standard and period of corresponding media presentation.

The trak box (track box) can provide information about a track of corresponding media data. The trak box can include information such as stream related information, presentation related information and access related information about an audio track or a video track. A plurality of trak boxes may be present depending on the number of tracks.

The trak box may further include a tkhd box (track head box) as a lower box. The tkhd box can include information about the track indicated by the trak box. The tkhd box can include information such as a generation time, a change time and a track identifier of the corresponding track.

The mvex box (movie extend box) can indicate that the corresponding media file may have a moof box which will be described later. To recognize all media samples of a specific track, moof boxes may need to be scanned.

According to an embodiment, the media file according to the present disclosure may be divided into a plurality of fragments (200). Accordingly, the media file can be fragmented and stored or transmitted. Media data (mdat box) of the media file can be divided into a plurality of fragments and each fragment can include a moof box and a divided mdat box. According to an embodiment, information of the ftyp box and/or the moov box may be required to use the fragments.

The moof box (movie fragment box) can provide metadata about media data of the corresponding fragment. The moof box may be a highest-layer box among boxes related to metadata of the corresponding fragment.

The mdat box (media data box) can include actual media data as described above. The mdat box can include media samples of media data corresponding to each fragment corresponding thereto.

According to an embodiment, the aforementioned moof box may further include an mfhd box and/or a traf box as lower boxes.

The mfhd box (movie fragment header box) can include information about correlation between divided fragments. The mfhd box can indicate the order of divided media data of the corresponding fragment by including a sequence number. Further, it is possible to check whether there is missed data among divided data using the mfhd box.

The traf box (track fragment box) can include information about the corresponding track fragment. The traf box can provide metadata about a divided track fragment included in the corresponding fragment. The traf box can provide metadata such that media samples in the corresponding track fragment can be decoded/reproduced. A plurality of traf boxes may be present depending on the number of track fragments.

According to an embodiment, the aforementioned traf box may further include a tfhd box and/or a trun box as lower boxes.

The tfhd box (track fragment header box) can include header information of the corresponding track fragment. The tfhd box can provide information such as a basic sample size, a period, an offset and an identifier for media samples of the track fragment indicated by the aforementioned traf box.

The trun box (track fragment run box) can include information related to the corresponding track fragment. The trun box can include information such as a period, a size and a reproduction time for each media sample.

The aforementioned media file and fragments thereof can be processed into segments and transmitted. Segments may include an initialization segment and/or a media segment.

A file of the illustrated embodiment 210 may include information related to media decoder initialization except media data. This file may correspond to the aforementioned initialization segment, for example. The initialization segment can include the aforementioned ftyp box and/or moov box.

A file of the illustrated embodiment 220 may include the aforementioned fragment. This file may correspond to the aforementioned media segment, for example. The media segment may further include an styp box and/or an sidx box.

The styp box (segment type box) can provide information for identifying media data of a divided fragment. The styp box can serve as the aforementioned ftyp box for a divided fragment. According to an embodiment, the styp box may have the same format as the ftyp box.

The sidx box (segment index box) can provide information indicating an index of a divided fragment. Accordingly, the order of the divided fragment can be indicated.

According to an embodiment 230, an ssix box may be further included. The ssix box (sub-segment index box) can provide information indicating an index of a sub-segment when a segment is divided into sub-segments.

Boxes in a media file can include more extended information based on a box or a FullBox as shown in the illustrated embodiment 250. In the present embodiment, a size field and a largesize field can represent the length of the corresponding box in bytes. A version field can indicate the version of the corresponding box format. A type field can indicate the type or identifier of the corresponding box. A flags field can indicate a flag associated with the corresponding box.

Meanwhile, the fields (attributes) for 360-degree video of the present disclosure can be included and delivered in a DASH based adaptive streaming model.

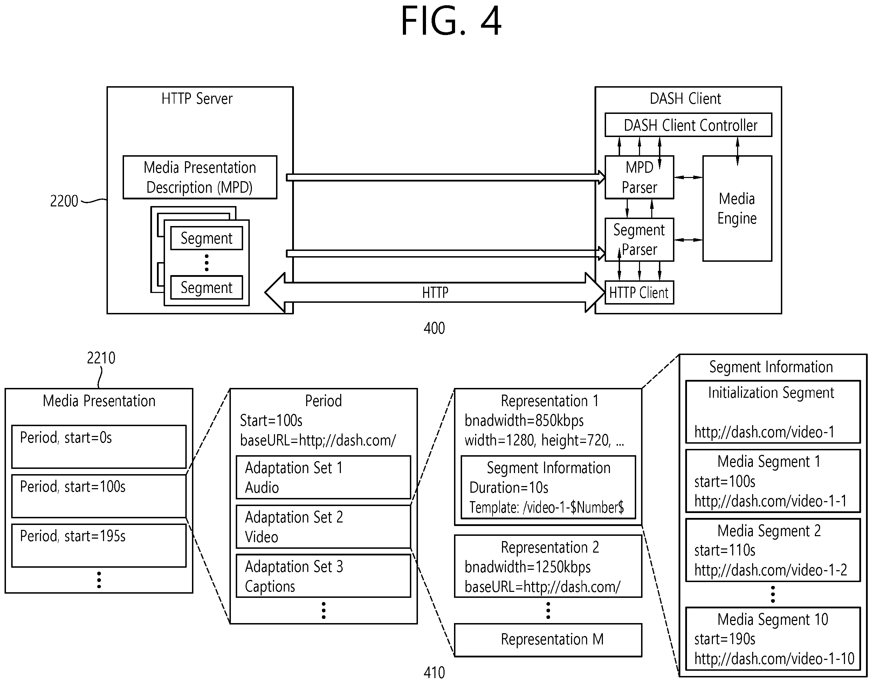

FIG. 4 illustrates an example of the overall operation of a DASH based adaptive streaming model. The DASH based adaptive streaming model according to the illustrated embodiment 400 describes operations between an HTTP server and a DASH client. Here, DASH (Dynamic Adaptive Streaming over HTTP) is a protocol for supporting adaptive streaming based on HTTP and can dynamically support streaming according to network state. Accordingly, seamless AV content reproduction can be provided.

First, a DASH client can acquire an MPD. The MPD can be delivered from a service provider such as an HTTP server. The DASH client can send a request for corresponding segments to the server using information on access to the segments which is described in the MPD. Here, the request can be performed based on a network state.

Upon acquisition of the segments, the DASH client can process the segments in a media engine and display the processed segments on a screen. The DASH client can request and acquire necessary segments by reflecting a reproduction time and/or a network state therein in real time (adaptive streaming). Accordingly, content can be seamlessly reproduced.

The MPD (Media Presentation Description) is a file including detailed information for a DASH client to dynamically acquire segments and can be represented in the XML format.

A DASH client controller can generate a command for requesting the MPD and/or segments based on a network state. Further, this controller can control an internal block such as the media engine to be able to use acquired information.

An MPD parser can parse the acquired MPD in real time. Accordingly, the DASH client controller can generate the command for acquiring necessary segments.

The segment parser can parse acquired segments in real time. Internal blocks such as the media block can perform specific operations according to information included in the segments.

An HTTP client can send a request for a necessary MPD and/or segments to the HTTP server. In addition, the HTTP client can transfer the MPD and/or segments acquired from the server to the MPD parser or a segment parser.

The media engine can display content on a screen using media data included in segments. Here, information of the MPD can be used.

A DASH data model may have a hierarchical structure 410. Media presentation can be described by the MPD. The MPD can describe a temporal sequence of a plurality of periods which forms the media presentation. A period can represent one period of media content.

In one period, data can be included in adaptation sets. An adaptation set may be a set of a plurality of exchangeable media content components. Adaptation can include a set of representations. A representation can correspond to a media content component. Content can be temporally divided into a plurality of segments within one representation. This may be for accessibility and delivery. To access each segment, the URL of each segment may be provided.

The MPD can provide information related to media presentation, and a period element, an adaptation set element and a representation element can respectively describe the corresponding period, adaptation set and representation. A representation can be divided into sub-representations, and a sub-representation element can describe the corresponding sub-representation.

Here, common attributes/elements can be defined. The common attributes/elements can be applied to (included in) adaptation sets, representations and sub-representations. The common attributes/elements may include an essential property and/or a supplemental property.

The essential property is information including elements regarded as essential elements in processing data related to the corresponding media presentation. The supplemental property is information including elements which may be used to process data related to the corresponding media presentation. According to an embodiment, when descriptors which will be described later are delivered through the MPD, the descriptors can be defined in the essential property and/or the supplemental property and delivered.

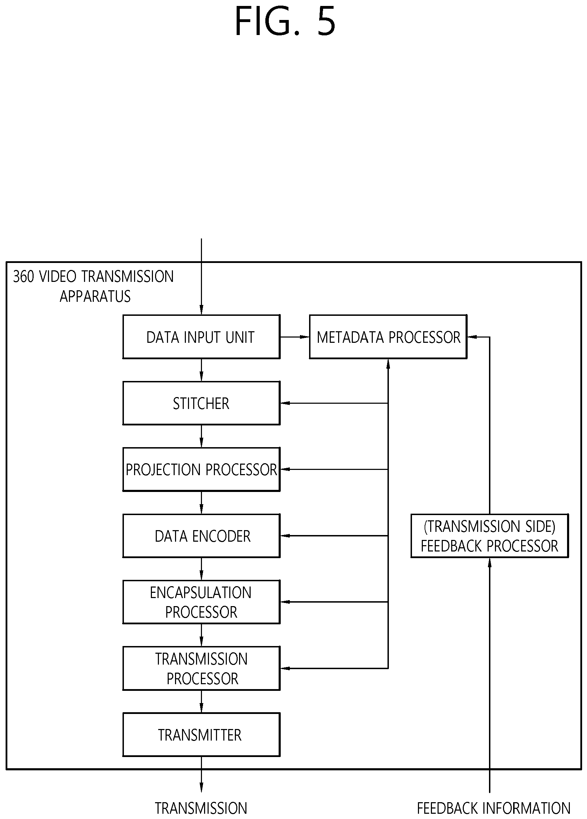

FIG. 5 is a view schematically illustrating a configuration of a 360-degree video transmission apparatus to which the present disclosure is applicable.

The 360-degree video transmission apparatus according to the present disclosure can perform operations related the above-described preparation process and the transmission process. The 360-degree video transmission apparatus may include a data input unit, a stitcher, a projection processor, a region-wise packing processor (not shown), a metadata processor, a (transmission side) feedback processor, a data encoder, an encapsulation processor, a transmission processor and/or a transmitter as internal/external elements.

The data input unit can receive captured images/videos for respective viewpoints. The images/videos for the respective viewpoints may be images/videos captured by one or more cameras. Further, data input unit may receive metadata generated in a capture process. The data input unit may forward the received images/videos for the viewpoints to the stitcher and forward metadata generated in the capture process to the signaling processor.

The stitcher can perform a stitching operation on the captured images/videos for the viewpoints. The stitcher may forward stitched 360-degree video data to the projection processor. The stitcher may receive necessary metadata from the metadata processor and use the metadata for the stitching operation as necessary. The stitcher may forward metadata generated in the stitching process to the metadata processor. The metadata in the stitching process may include information such as information representing whether stitching has been performed, and a stitching type.

The projection processor can project the stitched 360-degree video data on a 2D image. The projection processor may perform projection according to various schemes which will be described later. The projection processor may perform mapping in consideration of the depth of 360-degree video data for each viewpoint. The projection processor may receive metadata necessary for projection from the metadata processor and use the metadata for the projection operation as necessary. The projection processor may forward metadata generated in the projection process to the metadata processor. Metadata generated in the projection processor may include a projection scheme type and the like.

The region-wise packing processor (not shown) can perform the aforementioned region-wise packing process. That is, the region-wise packing processor can perform the process of dividing the projected 360-degree video data into regions and rotating and rearranging regions or changing the resolution of each region. As described above, the region-wise packing process is optional and thus the region-wise packing processor may be omitted when region-wise packing is not performed. The region-wise packing processor may receive metadata necessary for region-wise packing from the metadata processor and use the metadata for a region-wise packing operation as necessary. The region-wise packing processor may forward metadata generated in the region-wise packing process to the metadata processor. Metadata generated in the region-wise packing processor may include a rotation degree, size and the like of each region.

The aforementioned stitcher, projection processor and/or the region-wise packing processor may be integrated into a single hardware component according to an embodiment.

The metadata processor can process metadata which may be generated in a capture process, a stitching process, a projection process, a region-wise packing process, an encoding process, an encapsulation process and/or a process for transmission. The metadata processor can generate 360-degree video related metadata using such metadata. According to an embodiment, the metadata processor may generate the 360-degree video related metadata in the form of a signaling table. 360-degree video related metadata may also be called metadata or 360-degree video related signaling information according to signaling context. Further, the metadata processor may forward the acquired or generated metadata to internal elements of the 360-degree video transmission apparatus as necessary. The metadata processor may forward the 360-degree video related metadata to the data encoder, the encapsulation processor and/or the transmission processor such that the 360-degree video related metadata can be transmitted to a reception side.

The data encoder can encode the 360-degree video data projected on the 2D image and/or region-wise packed 360-degree video data. The 360-degree video data can be encoded in various formats.

The encapsulation processor can encapsulate the encoded 360-degree video data and/or 360-degree video related metadata in a file format. Here, the 360-degree video related metadata may be received from the metadata processor. The encapsulation processor can encapsulate the data in a file format such as ISOBMFF, CFF or the like or process the data into a DASH segment or the like. The encapsulation processor may include the 360-degree video related metadata in a file format. The 360-degree video related metadata may be included in a box having various levels in SOBMFF or may be included as data of a separate track in a file, for example. According to an embodiment, the encapsulation processor may encapsulate the 360-degree video related metadata into a file. The transmission processor may perform processing for transmission on the encapsulated 360-degree video data according to file format. The transmission processor may process the 360-degree video data according to an arbitrary transmission protocol. The processing for transmission may include processing for delivery over a broadcast network and processing for delivery over a broadband. According to an embodiment, the transmission processor may receive 360-degree video related metadata from the metadata processor as well as the 360-degree video data and perform the processing for transmission on the 360-degree video related metadata.

The transmitter can transmit the 360-degree video data and/or the 360-degree video related metadata processed for transmission through a broadcast network and/or a broadband. The transmitter may include an element for transmission through a broadcast network and/or an element for transmission through a broadband.

According to an embodiment of the 360-degree video transmission apparatus according to the present disclosure, the 360-degree video transmission apparatus may further include a data storage unit (not shown) as an internal/external element. The data storage unit may store encoded 360-degree video data and/or 360-degree video related metadata before the encoded 360-degree video data and/or 360-degree video related metadata are delivered to the transmission processor. Such data may be stored in a file format such as ISOBMFF. Although the data storage unit may not be required when 360-degree video is transmitted in real time, encapsulated 360 data may be stored in the data storage medium for a certain period of time and then transmitted when the encapsulated 360 data is delivered over a broadband.

According to another embodiment of the 360-degree video transmission apparatus according to the present disclosure, the 360-degree video transmission apparatus may further include a (transmission side) feedback processor and/or a network interface (not shown) as internal/external elements. The network interface can receive feedback information from a 360-degree video reception apparatus according to the present disclosure and forward the feedback information to the transmission side feedback processor. The transmission side feedback processor can forward the feedback information to the stitcher, the projection processor, the region-wise packing processor, the data encoder, the encapsulation processor, the metadata processor and/or the transmission processor. According to an embodiment, the feedback information may be delivered to the metadata processor and then delivered to each internal element. Internal elements which have received the feedback information can reflect the feedback information in the following 360-degree video data processing.

According to another embodiment of the 360-degree video transmission apparatus according to the present disclosure, the region-wise packing processor may rotate regions and map the rotated regions on a 2D image. Here, the regions may be rotated in different directions at different angles and mapped on the 2D image. Region rotation may be performed in consideration of neighboring parts and stitched parts of 360-degree video data on a spherical surface before projection. Information about region rotation, that is, rotation directions, angles and the like may be signaled through 360-degree video related metadata. According to another embodiment of the 360-degree video transmission apparatus according to the present disclosure, the data encoder may perform encoding differently for respective regions. The data encoder may encode a specific region in high quality and encode other regions in low quality. The transmission side feedback processor may forward feedback information received from the 360-degree video reception apparatus to the data encoder such that the data encoder can use encoding methods differentiated for respective regions. For example, the transmission side feedback processor may forward viewport information received from a reception side to the data encoder. The data encoder may encode regions including an area indicated by the viewport information in higher quality (UHD and the like) than that of other regions.

According to another embodiment of the 360-degree video transmission apparatus according to the present disclosure, the transmission processor may perform processing for transmission differently for respective regions. The transmission processor may apply different transmission parameters (modulation orders, code rates, and the like) to the respective regions such that data delivered to the respective regions have different robustnesses.

Here, the transmission side feedback processor may forward feedback information received from the 360-degree video reception apparatus to the transmission processor such that the transmission processor can perform transmission processes differentiated for respective regions. For example, the transmission side feedback processor may forward viewport information received from a reception side to the transmission processor. The transmission processor may perform a transmission process on regions including an area indicated by the viewport information such that the regions have higher robustness than other regions.

The above-described internal/external elements of the 360-degree video transmission apparatus according to the present disclosure may be hardware elements. According to an embodiment, the internal/external elements may be changed, omitted, replaced by other elements or integrated.

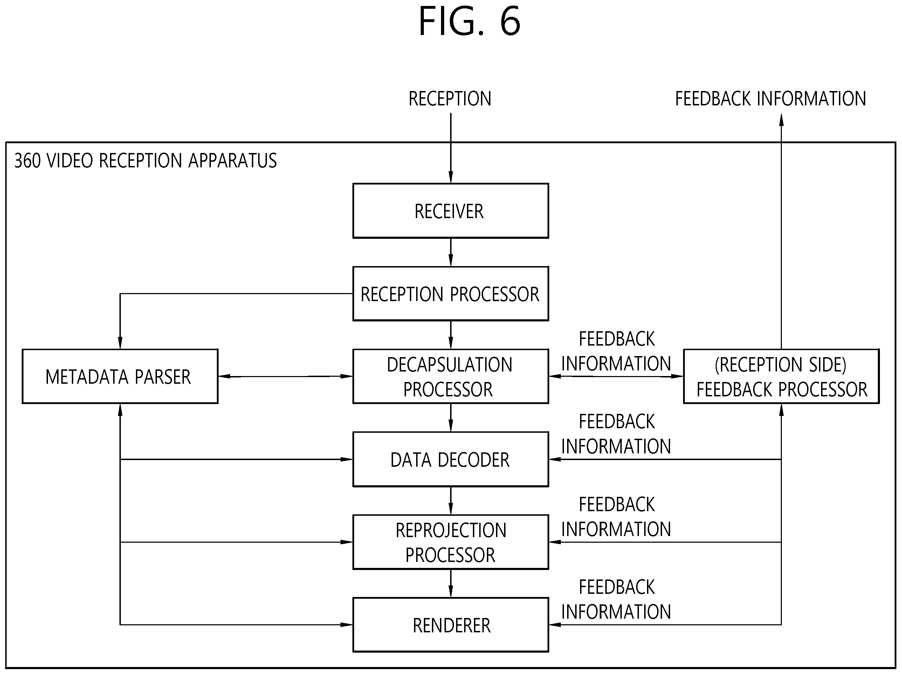

FIG. 6 is a view schematically illustrating a configuration of a 360-degree video reception apparatus to which the present disclosure is applicable.

The 360-degree video reception apparatus according to the present disclosure can perform operations related to the above-described processing process and/or the rendering process. The 360-degree video reception apparatus may include a receiver, a reception processor, a decapsulation processor, a data decoder, a metadata parser, a (reception side) feedback processor, a re-projection processor and/or a renderer as internal/external elements. A signaling parser may be called the metadata parser.

The receiver can receive 360-degree video data transmitted from the 360-degree video transmission apparatus according to the present disclosure. The receiver may receive the 360-degree video data through a broadcast network or a broadband depending on a channel through which the 360-degree video data is transmitted.

The reception processor can perform processing according to a transmission protocol on the received 360-degree video data. The reception processor may perform a reverse process of the process of the aforementioned transmission processor such that the reverse process corresponds to processing for transmission performed at the transmission side. The reception processor can forward the acquired 360-degree video data to the decapsulation processor and forward acquired 360-degree video related metadata to the metadata parser. The 360-degree video related metadata acquired by the reception processor may have the form of a signaling table.

The decapsulation processor can decapsulate the 360-degree video data in a file format received from the reception processor. The decapsulation processor can acquired 360-degree video data and 360-degree video related metadata by decapsulating files in ISOBMFF or the like. The decapsulation processor can forward the acquired 360-degree video data to the data decoder and forward the acquired 360-degree video related metadata to the metadata parser. The 360-degree video related metadata acquired by the decapsulation processor may have the form of a box or a track in a file format. The decapsulation processor may receive metadata necessary for decapsulation from the metadata parser as necessary.

The data decoder can decode the 360-degree video data. The data decoder may receive metadata necessary for decoding from the metadata parser. The 360-degree video related metadata acquired in the data decoding process may be forwarded to the metadata parser.

The metadata parser can parse/decode the 360-degree video related metadata. The metadata parser can forward acquired metadata to the data decapsulation processor, the data decoder, the re-projection processor and/or the renderer.

The re-projection processor can perform re-projection on the decoded 360-degree video data. The re-projection processor can re-project the 360-degree video data on a 3D space. The 3D space may have different forms depending on 3D models. The re-projection processor may receive metadata necessary for re-projection from the metadata parser. For example, the re-projection processor may receive information about the type of a used 3D model and detailed information thereof from the metadata parser. According to an embodiment, the re-projection processor may re-project only 360-degree video data corresponding to a specific area of the 3D space on the 3D space using metadata necessary for re-projection.

The renderer can render the re-projected 360-degree video data. As described above, re-projection of 360-degree video data on a 3D space may be represented as rendering of 360-degree video data on the 3D space. When two processes simultaneously occur in this manner, the re-projection processor and the renderer may be integrated and the renderer may perform the processes. According to an embodiment, the renderer may render only a part viewed by a user according to viewpoint information of the user.

The user may view a part of the rendered 360-degree video through a VR display or the like. The VR display is a device which reproduces 360-degree video and may be included in a 360-degree video reception apparatus (tethered) or connected to the 360-degree video reception apparatus as a separate device (un-tethered).

According to an embodiment of the 360-degree video reception apparatus according to the present disclosure, the 360-degree video reception apparatus may further include a (reception side) feedback processor and/or a network interface (not shown) as internal/external elements. The reception side feedback processor can acquire feedback information from the renderer, the re-projection processor, the data decoder, the decapsulation processor and/or the VR display and process the feedback information. The feedback information may include viewport information, head orientation information, gaze information, and the like. The network interface can receive the feedback information from the reception side feedback processor and transmit the feedback information to a 360-degree video transmission apparatus.

As described above, the feedback information may be consumed at the reception side as well as being transmitted to the transmission side. The reception side feedback processor may forward the acquired feedback information to internal elements of the 360-degree video reception apparatus such that the feedback information is reflected in processes such as rendering. The reception side feedback processor can forward the feedback information to the renderer, the re-projection processor, the data decoder and/or the decapsulation processor. For example, the renderer can preferentially render an area viewed by the user using the feedback information. In addition, the decapsulation processor and the data decoder can preferentially decapsulate and decode an area being viewed or will be viewed by the user.

The above-described internal/external elements of the 360-degree video reception apparatus according to the present disclosure may be hardware elements. According to an embodiment, the internal/external elements may be changed, omitted, replaced by other elements or integrated. According to an embodiment, additional elements may be added to the 360-degree video reception apparatus.

Another aspect of the present disclosure may pertain to a method for transmitting a 360-degree video and a method for receiving a 360-degree video. The methods for transmitting/receiving a 360-degree video according to the present disclosure may be performed by the above-described 360-degree video transmission/reception apparatuses or embodiments thereof.

Embodiments of the above-described 360-degree video transmission/reception apparatuses and transmission/reception methods and embodiments of the internal/external elements of the apparatuses may be combined. For example, embodiments of the projection processor and embodiments of the data encoder may be combined to generate as many embodiments of the 360-degree video transmission apparatus as the number of cases. Embodiments combined in this manner are also included in the scope of the present disclosure.

Meanwhile, 360-degree video data may be projected on 2D image according to various projection schemes, the detailed contents therefor may be as below. In addition, metadata representing the projection scheme may include projection_scheme field. The projection_scheme field may represent a projection scheme of a picture to which the 360-degree video data is mapped. Here, the projection scheme may also be represented as a projection type, and the projection_scheme field may be represented as projection_type field.

According to an embodiment of the present disclosure, a projection may be performed using equirectangular projection scheme. The equirectangular projection scheme may also be represented as Equirectangular Projection (ERP). In the case that the projection_scheme field represents the equirectangular projection scheme, a point $(r, \theta_0, 0)$ on a spherical surface, that is, a point denoted by $\theta = \theta_0$, $\varphi = 0$ and a center pixel of 2D image may be mapped. In addition, a principal point of a front camera may be assumed to be $(r, 0, 0)$ point of the spherical surface. Further, it is fixed to $\varphi_0 = 0$. Therefore, a value $(x, y)$ transformed into XY coordinate system may be transformed into a $(X, Y)$ pixel on the 2D image through the following equation.

[Equation 1]

$$X = K_x * x + X_O = K_x * (\theta - \theta_0) * r + X_O$$
$$Y = -K_y * y - Y_O$$

In addition, if a left top pixel on the 2D image is positioned at $(0, 0)$ in the XY system, an offset value for X axis and an offset value for Y axis may be represented by the following equation.

[Equation 2]

$$X_O = K_x * \pi * r$$
$$Y_O = -K_y * \pi / 2 * r$$

Using the above, a transformation equation into the XY coordinate system may be as below.

[Equation 3]

$$X = K_x x + X_O = K_x * (\pi + \theta - \theta_0) * r$$
$$Y = -K_y y - Y_O = K_y * (\pi / 2 - \varphi) * r$$

For example, if $\theta_0 = 0$, that is, if a central pixel on a 2D image indicates data of $\theta = 0$ on a spherical surface, the spherical surface may be mapped to an area of a horizontal length (width) = $2K_x \pi r$ and a vertical length (height) = $K_x \pi r$ on the 2D image based on $(0, 0)$. Data of $\varphi = \pi / 2$ on the spherical surface may be mapped to the whole upper edge on the 2D image. In addition, data of $(r, \pi / 2, 0)$ on the spherical surface may be mapped to a point of $(3\pi K_x r / 2, \pi K_x r / 2)$ on the 2D image.

At the reception side, 360 video data on the 2D image may be re-projected to the spherical surface. This may be represented by a transformation equation as below.

[Equation 4]

$$\theta = \theta_0 + X/K_x \ast r - \pi$$
$$\varphi = \pi/2 - Y/K_y \ast r$$

For example, a pixel at XY coordinates of $(K_{x\pi r}, 0)$ on a 2D image may be re-projected to a point where $\theta = \theta_0$ and $\varphi = \pi/2$ on a spherical surface.

In the case that the equirectangular projection scheme is used, the center_theta field described above may represent a value such as $\theta_0$.

According to another embodiment of the present disclosure, a projection may be performed using a Cubic Projection scheme. The Cubic Projection scheme may also be represented as cube map projection (CMP). For example, the stitched 360-degree video data may appear on a spherical surface. The projection-processor may project the 360-degree video data on the 2D image in the form of a cube. The 360-degree video data on the spherical surface may correspond to respective surfaces of the cube and projected on the 2D image.

In another embodiment of the present disclosure, a projection may be performed using a cylindrical projection scheme. On the assumption that the stitched 360-degree video data appear on a spherical surface, the projection-processor may project the 360-degree video data on the 2D image in the form of a cylinder. The 360-degree video data on the spherical surface may correspond to the side, the top, and the bottom of the cylinder and projected on the 2D image.

In a further embodiment of the present disclosure, a projection may be performed using a Tile-based projection scheme. In the case that the Tile-based projection scheme is used, the projection-processor described above may project 360-degree video data on the 2D image in the form of one or more detailed areas. The detailed area may be called a tile.

In another embodiment of the present disclosure, a projection may be performed using a pyramidal projection scheme. On the assumption that the stitched 360-degree video data appears on a spherical surface, the projection-processor may project the 360-degree video data on the 2D image in the form of a pyramid. The 360-degree video data on the spherical surface may correspond to the front, the left top, the left bottom, the right top, and the right bottom of the pyramid and projected on the 2D image. Here, the front surface may be an area included in the data obtained by a camera facing the front surface.

In another embodiment of the present disclosure, a projection may be performed using a panoramic projection scheme. In the case that the panoramic projection scheme is used, the projection-processor may project only a side surface of the 360-degree video data on the 2D image on the spherical surface. This may be the same as the case that a top and a bottom are not present in the cylindrical projection scheme. The panorama_height field may represent a height of panorama which is applied when projection is performed. The metadata representing the projection scheme may include the panorama_height field in the case that the panorama_scheme field represents that the projection scheme is the panoramic projection scheme.

In another embodiment of the present disclosure, a projection may be performed without stitching. That is, the panorama_scheme field may represent the case that a projection is performed without stitching. In the case that a projection may be performed without stitching, the projection-processor described above may project the 360-degree video data on the 2D image without any change. In this case, the stitching is not performed, and each of the images captured by the camera is projected on the 2D image without any change. For example, two images captured by the camera may be projected on the 2D image without any change. Each of the images may be fish-eye image captured by each sensor of the spherical camera. As described above, the image data obtained from the camera sensors in the receiver may be stitched, and the stitched image data is mapped on a spherical surface, and the spherical video, that is, 360-degree video may be rendered.

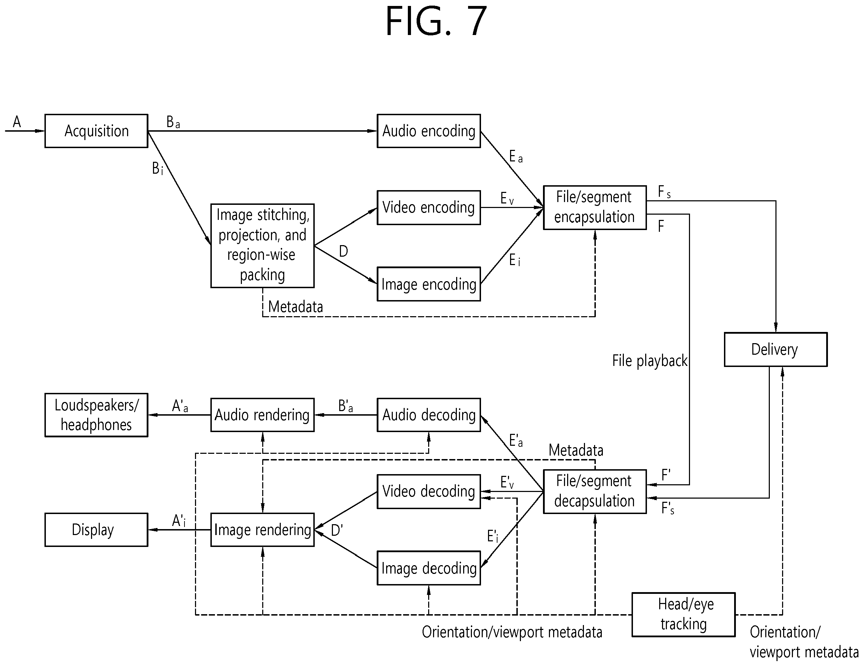

FIG. 7 illustrates the entire architecture for providing 360-degree video performed by a 360-degree video transmission apparatus/360-degree video reception apparatus.

The 360-degree video may be provided by the architecture shown in FIG. 7. The 360-degree contents may be provided in a file format or in the form of segment-based download such as DACH or streaming service. Here, the 360-degree contents may be called VR contents.

As described above, the 360-degree video data and/or the 360-degree audio data may be acquired.

The 360-degree audio data may go through an Audio Preprocessing process or Audio encoding process. In this process, metadata related to audio may be generated, and the encoded audio or the audio-related metadata may be going through a process (file/segment encapsulation) for transmission.

The 360-degree video data may go through the process described above. A stitcher of the 360-degree video transmission apparatus may perform a stitching to the 360-degree video data (Visual stitching). This process may be omitted according to an embodiment but performed in a reception side.

Also, the projection-processor of the 360-degree video transmission apparatus may project the 360-degree video data on the 2D image (Projection and mapping (packing)). The projection-processor may receive the 360-degree video data (Input Images), and in this case, stitching and projection process may be performed. Particularly, the projection process may include projecting the stitched 360-degree video data on 3D space, and the projected 360-degree video data may be arranged on the 2D image. In this specification, this process may be represented that the 360-degree video data is projected on the 2D image. Here, the 3D space may include a sphere, a cube or the like. The 3D space may be the same as the 3D space used for re-projection at a reception side.

The 2D image may be called a Projected frame or a Projected picture. Also, the Region-wise packing process may be further performed selectively to the 2D image. In the case that the Region-wise packing process is performed, a position, a form and a size of each Region is indicated, and accordingly, the Regions on the 2D image may be mapped on a packed frame. The packed frame may be called a packed picture. In the case that Region-wise packing process is not performed in the projected frame, the projected frame may be the same as the packed frame. The Region will be described below. The projection and the Region-wise packing process may be represented that each of the Regions of the 360-degree video data is projected on the 2D image. Depending on a design, the 360-degree video data may be directly transformed to the packed frame without an intervening process.

Referring to FIG. 7, the packed frame for the 360-degree video data may be image-encoded or video-encoded. Meanwhile, even for the same 360-degree video contents, depending on viewpoints, different 360-degree video data may be existed. In this case, the 360-degree video data for each viewpoints of the contents may be encoded with different bit streams. The encoded 360-degree video data may be processed to a file format such as ISOBMFF by the encapsulation processor described above. Alternatively, the encapsulation processor may process the encoded 360-degree video data with segments. The segments may be included in an individual track for a transmission based on DASH.

Together with the process of the 360-degree video data, as described above, the metadata in relation to 360-degree video may be generated. The metadata may be transferred with being included in a video stream or a file format. The metadata may also be used for the process such as an encoding process, a file format encapsulation, a process for transmission, and the like.

The 360-degree audio/video data may go through the process for a transmission according to a transport protocol, and then, transmitted. The 360-degree video reception apparatus described above may receive it through a broadcasting network or broadband.

Meanwhile, as shown in FIG. 7, Loudspeakers/headphones, a Display and a Head/eye tracking component may be performed by an external device or a VR application of the 360-degree video reception apparatus, but according to an embodiment, the 360-degree video reception apparatus may include all of the Loudspeakers/headphones, Display and Head/eye tracking component. According to an embodiment, the Head/eye tracking component may correspond to the feedback processor at a reception side.

The 360-degree video reception apparatus may perform File/segment decapsulation process for receiving the 360-degree audio/video data. The 360-degree audio data may go through Audio decoding and Audio rendering and provided to a user through the Loudspeakers/headphones.

The 360-degree video data may go through image decoding or video decoding and Visual rendering process and provided to a user through the Display. Here, the Display may be a display supporting VR or a normal display.

As described above, according to the rendering process, particularly, the 360-degree video data may be re-projected on 3D space, and the re-projected 360-degree video data may be rendered. This may also be represented that the 360-degree video data is rendered on the 3D space.

The Head/eye tracking component may acquire and process head orientation information of a user, gauge information, viewport information, and the like. The contents therefor may be as described above.

At a reception side, a VR application may be present, which communicates with the processes at the reception side described above.

Meanwhile, in the case that the 360-degree video data subsequent in a 3D space are mapped into a region of the 2D image, the 360-degree video data may be coded in region-wise manner of the 2D image and then delivered to the reception side. Therefore, in the case that the 360-degree video data mapped into the 2D image is again rendered in the 3D space, a problem may occur in that a boundary between regions occurs in the 3D space due to a difference in coding processing between the respective regions. The problem that the boundary between the regions occurs in the 3D space may be called a boundary error. The boundary error may deteriorate an immersion level for a virtual reality of a user, and the present disclosure proposes a method of providing Region-wise Auxiliary Information and metadata therefor to solve the boundary error. The Region-wise Auxiliary Information may be used in a blending process between samples located in a boundary of a target region and samples of a region adjacent to the target region as a method for reducing the boundary error and a replacement process that the samples located in a boundary of a target region are replaced by the Region-wise Auxiliary Information. In addition, the Region-wise Auxiliary Information may also be used for extending a viewport without a decoding process for the region adjacent to the target region.

Meanwhile, the packed frame may include a Region-wise Auxiliary Information (RAI) area. The RAI region is an area adjacent to a boundary of the target region in the packed frame and may include picture information of RAI region (offset area) for the target region. The RAI region may also be called an offset area or a guard band.

The process of outputting a final picture by reconstructing, transmitting and regenerating the 360-degree video data considering the RAI region may be as below.

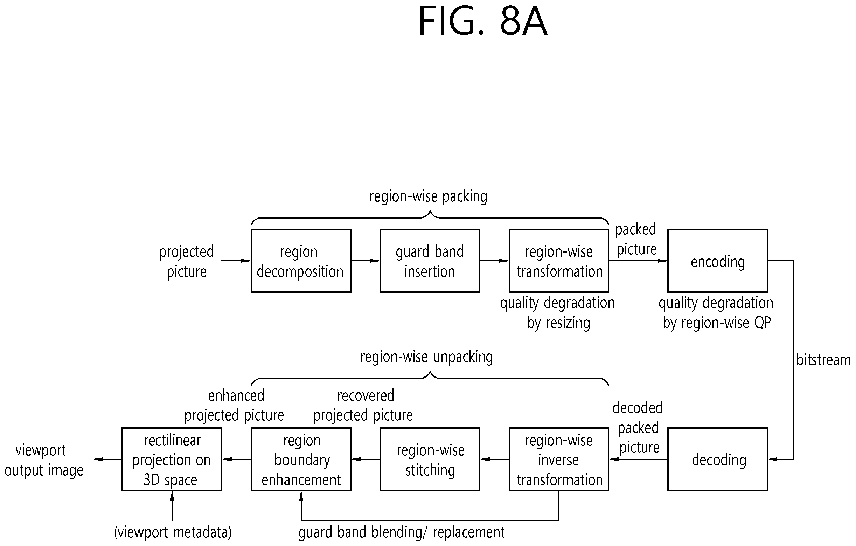

FIGS. 8a to 8d illustrate the entire architecture for providing 360-degree video considering RAI region performed by a 360-degree video transmission apparatus/360-degree video reception apparatus. Referring to FIG. 8a, 360-degree video data captured by at least one camera may be acquired, and a projected picture generated by processing the 360-degree video data may be acquired. The region-wise packing process may be performed for the projected picture. In the case that the region-wise packing process is performed, a region decomposition process in which the 360-degree video data projected on the projected picture is divided for each region may be performed, and a process that the RAI region for each region is added (guard band insertion) may be performed. In addition, since it is transformed for each region, the 360-degree video transmission apparatus may adjust a quality for each region by adjusting a size for each region. The region-wise packing process is performed for the projected picture, and a packed picture may be derived.

Referring to FIG. 8a, the information for the packed picture may be encoded and output through a bitstream. In this case, a quality may be changed for each region through a region-wise quantization parameter. The information for the encoded packed picture may be transmitted through a bitstream.

Referring to FIG. 8a, the 360-degree video reception apparatus may decode the information for the packed picture acquired through a bitstream. A region-wise unpacking process may be performed for the decoded packed picture.

In the case that the region-wise unpacking process is performed for the decoded packed picture, a region-wise inverse transformation process may be performed for the packed picture. In other words, the region-wise inverse transformation may be performed based on transform information for a target region of the packed picture.

Also, a stitching process may be performed for the decoded packed picture selectively. The stitching process may represent a process of connecting each of the captured image/videos, that is, the regions of the packed picture and make it one picture. In the case that the stitching process is already performed in the 360-degree video transmission apparatus, the 360-degree video reception apparatus may not perform the stitching process.

The packed picture may be reconstructed to a projected picture through the region-wise inverse transformation process. Alternatively, the packed picture may be reconstructed to a projected picture through the region-wise inverse transformation process and the stitching process. A region boundary enhancement process may be performed to the reconstructed projected picture. The region boundary enhancement process may include a process of deriving a new sample value by interpolating a sample value of a sample in the RAI region corresponding to a target sample of the target region of the projected picture and a sample value of the target sample, a process of blending that derives the derived new sample value as a sample value of the target sample and a process of replacing the sample value of the target sample of the target region by the sample value in the RAI region corresponding to the target sample.

Particularly, for example, for a sample in (x, y) position in the target region of the projected picture, the new sample value may be derived based on a monotone increasing function alpha(x)[0:1] to which the existing sample value of the sample, the sample value in the RAI region corresponding to the target sample and a distance d between the sample in the RAI region and the boundary of the target region are applied. Here, the monotone increasing function alpha(x)[0:1] may be represented as a weighting function. Through this, the region-wise auxiliary information of the RAI region (sample value of the sample in the RAI region) is used as being close to the boundary of the target region, and the existing information, that is, the information of the target region (the existing sample value of the sample in (x, y) position in the target region) is used as being away from the boundary more than a predetermined distance, and accordingly, a picture may be changed smoothly. In the case that the blending process is applied, the new sample value of the sample in (x, y) position may be derived based on the following equation.

[Equation 5]

$$output[x][y] = alpha(d) * input[x][y] + (1-alpha(d)) * RAI[x][y]$$

Herein, output[x][y] may represent the new sample value of the sample in (x, y) position in the target region, input[x][y] may represent the existing sample value of the sample in (x, y) position in the target region and RAI[x][y] may represent sample value of the sample in the RAI region corresponding to the sample in (x, y) position.

Meanwhile, in the case that a value of rai_type filed for the RAI region is 2, that is, the RAI region is an area in which image quality is gradually changed, and rai_delta_QP field is given for the RAI region, the weighting function for deriving the new sample value may be defined as a function of difference between a distance from the boundary and a quantization parameter (QP) of the boundary. In this case, the new sample value of the sample in (x, y) position in the target region may be derived based on the following equation. The detailed description for the rai_type filed and the rai_delta_QP field is described below.

[Equation 6]

$$output[x][y]= alpha(d, delta\_QP) * input[x][y] + (1-alpha(d, delta\_QP)) * RAI[x][y]$$

Meanwhile, in the case that the replacement process is applied, the information given by the RAI region may be usable without any separate process up to a predetermined range, and in this case, when the target region and the adjacent region are attached and rendered on the target region and the spherical surface, the RAI region may be used for the part of the target region which is overlapped with the RAI region. For example, in the case that there is image quality difference between the target region and the adjacent region, and the RAI region includes information in which image quality is gradually changed, the video data included in the RAI region may be used in rendering without any change.

The reconstructed projected picture may be derived as an enhanced projected picture through the region boundary enhancement process. Through this, a degree of error occurrence that may be shown in the boundary of the target region may be reduced.

The enhanced projected picture may be mapped on the 3D space. Meanwhile, the process described above may be represented as the 360-degree video data is rendered on the 3D space. In this case, a viewport image is generated and displayed based on the received viewport metadata. Here, the viewport image may also be called a viewport. The viewport metadata may be information for an area that a current user watches in the 360-degree video.

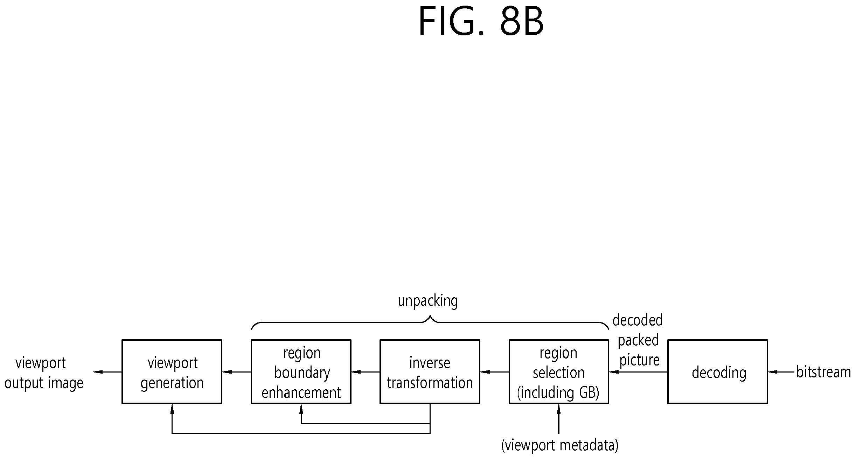

Meanwhile, only a part of picture, not the entire picture, among the encoded picture may be decoded, and in this case, a receiver may be configured to perform the process as shown in FIG. 8b. Referring to FIG. 8b, the 360-degree video reception apparatus may decode the information for the packed picture acquired through a bitstream. In this case, a region-wise unpacking process may be performed for a part of area of the decoded packed picture. Particularly, a target region of the decoded packed picture may be selected. For example, the target region may be selected based on the received viewport metadata. The viewport metadata may represent information for an area that a current user watches in the 360-degree video, and the target region may be included in the area that the current user watches in the 360-degree video. Meanwhile, in the case that a RAI region for the target region is existed, the RAI region may also be selected.

In addition, inverse transform may be performed for the selected target region and the RAI region. Information for transform of the target region may be received, and an inverse transform may be performed for the target region based on the information for transform. In this case, the information for transform of the RAI region may be received, and the inverse transform may be performed for the RAI region based on the information for transform of the RAI region.

In addition, a region boundary enhancement process may be performed for the target region and the RAI region. The region boundary enhancement process may include a blending and replacement process described above. Through the region boundary enhancement process, a degree of error occurrence that may be shown in the boundary of the target region may be reduced. In addition, a viewport image including the target region may be generated and displayed.

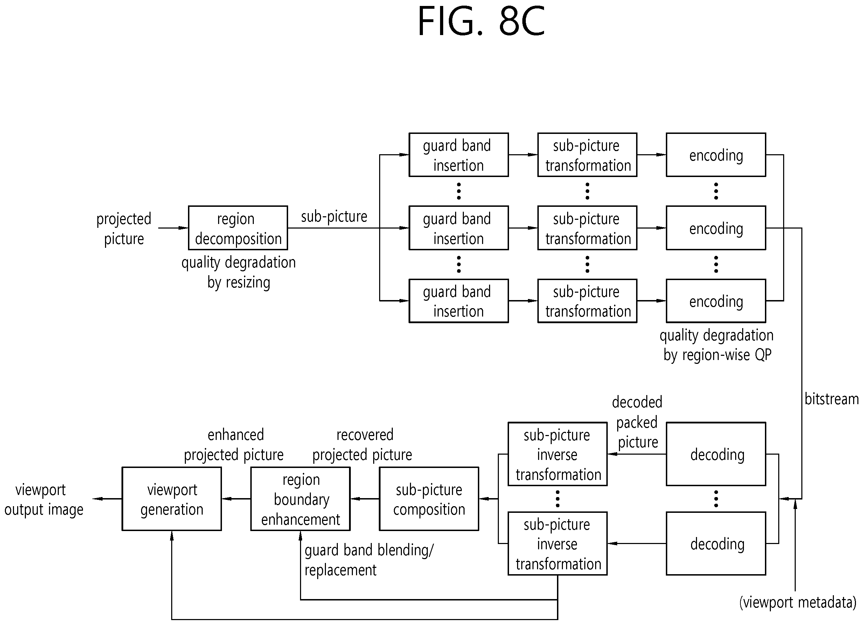

Meanwhile, the projected picture may be packed by being divided into a plurality of sub-pictures, and each of the packed sub-pictures may be encoded and transmitted. Here, the sub-picture may represent a picture unit which can be independently decoded, and the sub-picture may correspond to a tile, a motion constrained tile set (MCTS) or a region. In this case, as shown in FIG. 8c, a region decomposition process may be performed that the projected picture is divided for each region. In addition, since the projected picture can be transformed for each region, the 360-degree video transmission apparatus may adjust a size for each region and adjust a quality for each region. The projected picture may be divided into a plurality of sub-pictures. The sub-pictures may correspond to the regions of the projected picture.

Also, the region-wise packing process may be performed for each sub-picture, and each sub-picture may be encoded and transmitted through a bitstream. The region-wise packing process may be as described above.

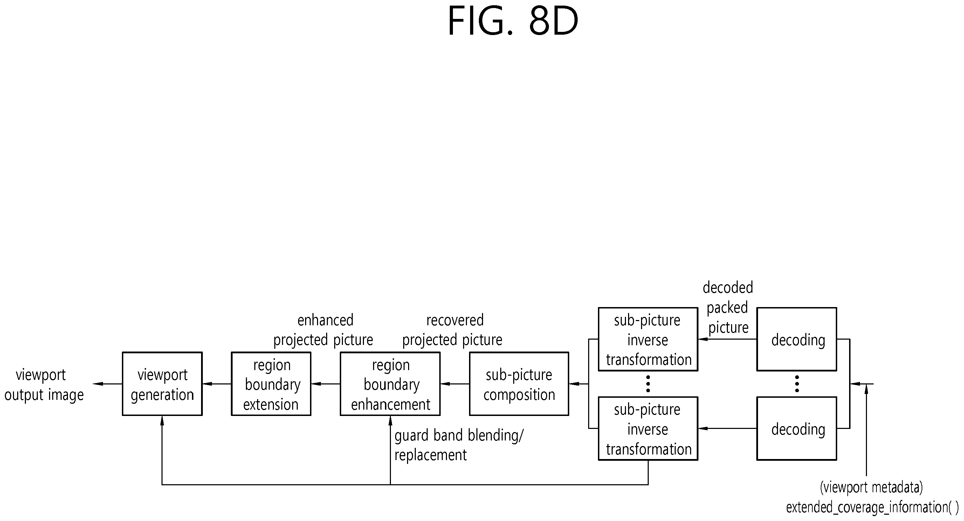

Referring to FIG. 8d, the 360-degree video reception apparatus may decode information for each sub-picture obtained through a bitstream. Also, an inverse transform for each sub-picture may be performed. Information for transform of each sub-picture may be received, and based on the information for transform, the inverse transform for each sub-picture may be performed.

The inverse-transformed sub-pictures may include a reconstructed projected picture. The process may be represented as a sub-picture composition process. For example, a plurality of sub-pictures may be merged into one picture, and the picture may be represented as a reconstructed projected picture. The region boundary enhancement process may be performed for the reconstructed projected picture. The region boundary enhancement process as described above. Meanwhile, in the case that an area designated in viewport metadata is covered by one sub-picture, that is, the area designated in viewport metadata is included in the one sub-picture, the sub-picture composition process and the region boundary enhancement process may be omitted.

Also, the enhanced projected picture may be mapped on the 3D space. In this case, a viewport image may be generated and displayed based on the received viewport metadata. The viewport metadata may be information for an area that a current user watches in 360-degree video.

Meanwhile, a viewport image designated by the viewport metadata may be generated based on a combination of one sub-picture and the information included in the RAI region for the sub-picture. In this case, when rai_present_flag value is 1, without the region boundary enhancement process for a plurality of sub-picture, an output image may be generated based on the information included in the RAI region, and through this, coding rate may be more improved. Here, the rai_present_flag may be a flag indicating whether information for the RAI region and the region-wise auxiliary information for the sub-picture are signaled. The detailed contents for the rai_present_flag will be described below.

Meanwhile, as a method for transferring the region-wise auxiliary information for the packed picture divided into a plurality of regions, the region-wise auxiliary information may be signaled through the following syntax. Particularly, for example, the metadata for the region-wise auxiliary information may be transmitted, and the metadata for the region-wise auxiliary information may be transmitted through SEI message of HEVC. Also, the metadata for the region-wise auxiliary information may be information essentially used in a video level, and in this case, may be transmitted through VPS, SPS or PPS. In addition to the video level such as the VPS, the SPS or the PPS, the same as or similar information to the metadata for the region-wise auxiliary information may be transferred through digital wired/wireless interface, file format of system level, and the like.

The syntax described below may represent an embodiment for the case that the metadata for the region-wise auxiliary information is the entire image, that is, the entire packed picture is transmitted. However, in the case that an image is transmitted with a sub-picture, the metadata for the region-wise auxiliary information may further include information representing whether the RAI region for the sub-picture is included, that is, whether the RAI region for the sub-picture is existed, information whether the RAI region is adjacent to a boundary among top, bottom, left or right boundary based on the target region in the sub-picture and information for a type of the RAI region.

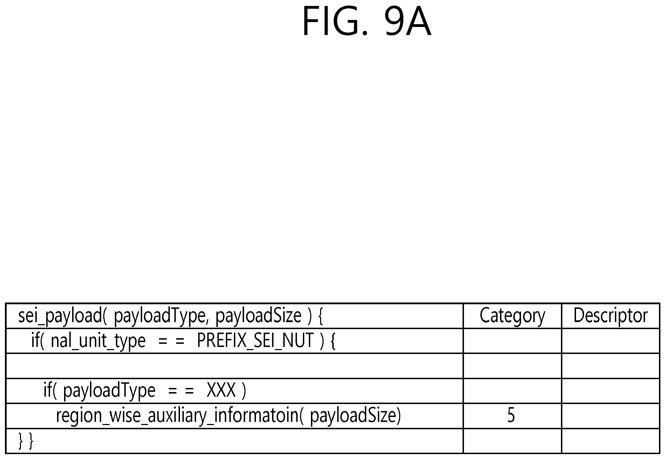

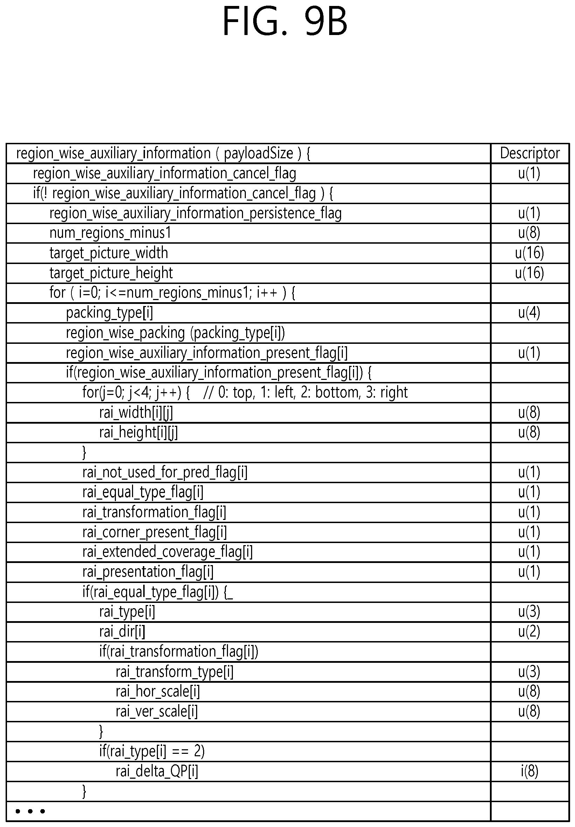

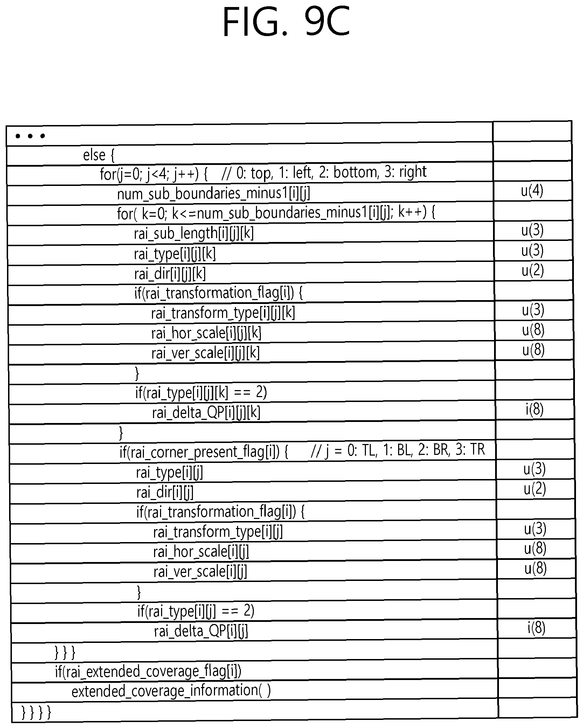

FIGS. 9a to 9c illustrate an example of metadata for the region-wise auxiliary information. Referring to FIG. 9a, in the case that payloadType value represents a predetermined value, the metadata for the region-wise auxiliary information may be transmitted. The detailed metadata for the region-wise auxiliary information may be as shown in FIG. 9b and FIG. 9c.

Referring to FIG. 9b and FIG. 9c, the region-wise auxiliary information may be transmitted with being included in the syntax for information for region-wise packing process. That is, the metadata for region-wise packing process may include the metadata for the region-wise auxiliary information. Meanwhile, the metadata for the region-wise auxiliary information may be transmitted through a separate syntax.

Referring to FIG. 9b, the metadata for the region-wise auxiliary information may include num_regions field. The num_regions field may represent the number of regions in the packed picture (or sub-picture). Meanwhile, the metadata for the region-wise auxiliary information may include num_regions_minusl field instead of the num_regions field. The num_regions_minus1 field may represent a value of the number of regions in the packed picture (or sub-picture) minus 1.

Also, referring to FIG. 9b, the metadata for the region-wise auxiliary information may include target_picture_width field and target_picture_height field. The target_picture_width field and the target_picture_height field may represent a width and a height of a final image, that is, a picture which is finally derived from an input image. For example, the target_picture_width field and the target_picture_height field may represent a width and a height of a projected picture for 360-degree video data. The target_picture_width field and the target_picture_height field may also be referred as proj_picture_width field and proj_picture_height field, respectively. Meanwhile, information for a width and a height a packed picture (or sub-picture) of a current image, that is, an input image may be transmitted through VPS (video parameter set), SPS (sequence parameter set) or PPS (picture parameter set), and if it is required, may be transmitted through separate information.

In addition, referring to FIG. 9b, the metadata for the region-wise auxiliary information may include region_wise_auxiliary_information_present_flag field. In the case that the region_wise_auxiliary_information_present_flag field value is 1, this may represent that the region-wise auxiliary information for the packed picture (or sub-picture) is transmitted. The region_wise_auxiliary_information_present_flag field value is 0, this may represent that the region-wise auxiliary information for the packed picture (or sub-picture) is not transmitted. The region_wise_auxiliary_information_present_flag field value may also be represented as rai_present_flag field or guard_band_flag field.

Also, referring to FIG. 9b, the metadata for the region-wise auxiliary information may include packing_type field. The packing_type field represents a type of the region-wise packing applied to the packed picture (or sub-picture). For example, in the case that the packing_type field value is 0, this may represent that the region-wise packing applied to the packed picture (or sub-picture) is rectangular region-wise packing.

Also, referring to FIG. 9b, the metadata for the region-wise auxiliary information may include rai_width field and rai_height field. The rai_width field and the rai_height field may also be represented as gb_width field and gb_height field. The rai_width field and the rai_height field may represent a width and a height of the RAI region which is adjacent to top, bottom, left or right boundary. In the case that the region-wise auxiliary information for the packed picture (or sub-picture) is transmitted, that is, in the case that the region_wise_auxiliary_information_present_flag field value is 1, the rai_width field and the rai_height field may be transmitted. Meanwhile, the rai_width[0] field and the rai_height[0] field may represent a width and a height of the RAI region which is adjacent to a top boundary of the target region, and the rai_width[1] field and the rai_height[1] field may represent a width and a height of the RAI region which is adjacent to a left boundary of the target region, the rai_width[2] field and the rai_height[2] field may represent a width and a height of the RAI region which is adjacent to a bottom boundary of the target region, and the rai_width[3] field and the rai_height[3] field may represent a width and a height of the RAI region which is adjacent to a right boundary of the target region. Alternatively, the rai_width[0] field and the rai_height[0] field may represent a width and a height of the RAI region which is adjacent to a top boundary of the $i^{th}$ region, and the rai_width[1] field and the rai_height[1] field may represent a width and a height of the RAI region which is adjacent to a left boundary of the $i^{th}$ region, the rai_width[2] field and the rai_height[2] field may represent a width and a height of the RAI region which is adjacent to a bottom boundary of the $i^{th}$ region, and the rai_width[3] field and the rai_height[3] field may represent a width and a height of the RAI region which is adjacent to a right boundary of the $i^{th}$ region.

Particularly, for example, in the case that the RAI region adjacent to a left boundary of the target region is existed, the rai_width[1] field and the rai_height[1] field may be transmitted, and the the rai_width[1] field and the rai_height[1] field may represent a width and a height of the RAI region. Generally, the rai_width[1] field may represent a value which is the same as a height of the target region. However, in the case that different transforms are performed for the target region and the RAI region or a height of the RAI region has different range of a height of the target region, the rai_height[1] field may represent a value different from a height of the target region. In this case, a height of the RAI region may be defined as a height of a value represented by the rai_height[1] field which is symmetric with reference to a center of the target region, alternatively, position information for a top left point of the RAI region may be separately signaled, and a height of a value represented by the rai_height[1] field from a position of the top left point may be configured as a height of the RAI region.

Also, referring to FIG. 9b, the metadata for the region-wise auxiliary information may include rai_not_used_for_pred_flag field. The rai_not_used_for_pred_flag field may also be represented as gb_not_used_for_pred_flag field. The rai_not_used_for_pred_flag field may represent whether the region-wise auxiliary information included in the RAI region is used for a prediction in encoding/decoding process. For example, in the case that rai_not_used_for_pred_flag field value is 1, this may represent that the region-wise auxiliary information included in the RAI region is not used for a prediction in encoding/decoding process. In addition, in the case that rai_not_used_for_pred_flag field value is 0, this may represent that the region-wise auxiliary information included in the RAI region is used for a prediction in encoding/decoding process.

Also, referring to FIG. 9b, the metadata for the region-wise auxiliary information may include rai_equal_type_flag field. The rai_equal_type_flag field may represent whether types of the region-wise auxiliary information included in the RAI regions for the target region are information of the same type. For example, in the case that the rai_equal_type_flag field value is 1, this may represent that the RAI regions for the target region, that is, all the RAI regions adjacent to top, bottom, left or right boundary of the target region include the region-wise auxiliary information of the same type. In addition, in the case that the rai_equal_type_flag field value is 0, this may represent that the RAI regions for the target region, that is, all the RAI regions adjacent to top, bottom, left or right boundary of the target region include the region-wise auxiliary information of different types. Meanwhile, a type of the region-wise auxiliary information included in the RAI regions may be transmitted through rai_type field described below, and the region-wise auxiliary information according to a detailed type will be described below.

Also, referring to FIG. 9b, the metadata for the region-wise auxiliary information may include rai_transformation_flag field. The rai_transformation_flag field may represent whether transform information of the RAI region for the rai_transformation_flag field is transmitted. In the case that the rai_transformation_flag field value is 1, this may represent that the transform information of the RAI region is transmitted, and in the case that the rai_transformation_flag field value is 0, this may represent that the transform which is the same as the target region of the RAI region is performed.

Also, referring to FIG. 9b, the metadata for the region-wise auxiliary information may include rai_corner_present_flag field. The rai_corner_present_flag field may represent whether the region-wise auxiliary information is included in at least one area among top left, top right, bottom right and bottom left neighboring area of the target region. For example, in the case that the rai_corner_present_flag field value is 1, this may represent that the top left, top right, bottom right and bottom left neighboring RAI region of the target region including the region-wise auxiliary information is transmitted. The top left, top right, bottom right and bottom left boundary RAI region may be called a corner RAI region. In addition, in the case that the rai_corner_present_flag field value is 0, this may represent that the top left, top right, bottom right and bottom left neighboring RAI region of the target region including the region-wise auxiliary information is not transmitted. For example, in providing 360-degree video or panorama video, video information of the target region may be extended based on the RAI region for fast viewport response. Here, the viewport response may represent a response of changing a viewport image in response to a change of a direction in the case that the direction that a user faces is changed owing to a reason such as a movement of the user. In this case, it may be more efficient that the region-wise auxiliary information is transferred to a corner neighboring area as well as the region-wise auxiliary information adjacent to top, bottom, left or right boundary of the target region, and accordingly, the rai_corner_present_flag field value is determined to be 1, and image information for a movement toward a corner direction is transferred.

In addition, in the case that the rai_corner_present_flag field value is 1, the rai_type field for each corner neighboring area, that is, top left, top right, bottom right and bottom left RAI regions may be signaled. Meanwhile, in the case that the rai_equal_type_flag field value is 1, a type of the region-wise auxiliary information of the corner neighboring areas may also be the same, and in the case that the rai_equal_type_flag field value is 0, the rai_transformation field for each of the corner neighboring areas as well as the rai_type field for each corner neighboring areas, that is, top left, top right, bottom right and bottom left RAI regions may be signaled. For example, in the case that the rai_equal_type_flag field value is 0, and the rai_transformation field value is 0, the rai_type field for each corner neighboring areas and the rai_transformation field may be signaled.

Also, referring to FIG. 9b, the metadata for the region-wise auxiliary information may include rai_extended_coverage_flag field. The rai_extended_coverage_flag field may represent whether information for an extension area of the target region is transmitted. Here, the extension area may represent the target region and an area including the RAI region for the target region. For example, in the case that the rai_extended_coverage_flag field value for the target region is 1 and the information for the RAI region for the target region is transmitted, the target region and the information for the extension area may be signaled, and in the case that the rai_extended_coverage_flag field value for the target region is 0, the information for the extension area may not be signaled. The detailed contents for the extension area may be as below.

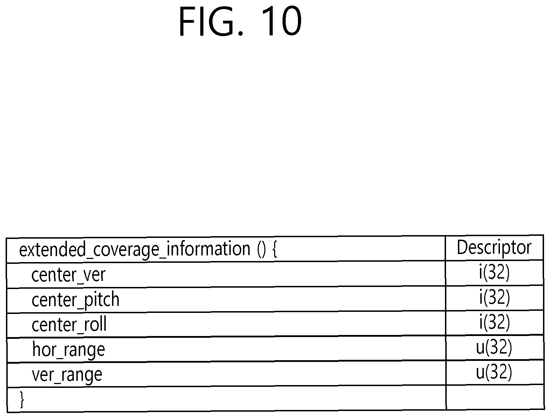

FIG. 10 illustrates an example of metadata representing information for the extension area. The metadata representing information for the extension area may be represented as extended_coverage_information. Referring to FIG. 10, the metadata representing information for the extension area may include center_yaw field, center_pitch field and center_roll field. The center_yaw field, the center_pitch field and the center_roll field may represent a 3D space of the extension area, for example, a position of a spherical surface. Particularly, a position of each point on the spherical surface may be represented based on an Aircraft Principal Axes. For example, the axis constructing the 3D may be a pitch axis, a yaw axis and a roll axis, respectively, and the position of each point on the spherical surface may be represented through the pitch, yaw and roll. In this specification, these may be represented as a pitch, yaw, roll to pitch direction, yaw direction and roll direction in a short term. The center_yaw filed may represent a yaw value of a center point on the spherical surface of the extension area, the center_pitch field may represent a pitch value of a center point on the spherical surface of the extension area, and the center_roll field may represent a roll value of a center point on the spherical surface of the extension area.

Also, referring to FIG. 10, the metadata representing the information for the extension area may include hor_range field and ver_range field. The hor_range field and the ver_range field may represent a horizontal range and a vertical range of the extension area, respectively. The horizontal range and the vertical range of the extension area represented by the hor_range field and the ver_range field may be equal to or greater than a horizontal range and a vertical range of the target region for the extension area. Meanwhile, the metadata representing the information for the extension area may be included in the metadata for the region-wise packing process described above or may be generated as separate information and signaled.

Also, referring to FIG. 9b, the metadata for the region-wise auxiliary information may include rai_presentation_flag field. The rai_presentation_flag field may also be represented as guard_band_flag field. The rai_presentation_flag field for the target region may be 360-degree video data in which the region-wise auxiliary information is included in the RAI region of the target region and information consecutive on the spherical surface and may represent whether it is used for generating a viewport image. For example, in the case that the rai_presentation_flag field value for the target region is 1, this may represent that the region-wise auxiliary information included in the RAI region is consecutive information on which the 360-degree video data included in the RAI region and on the spherical surface and represent that is may be used for generating a viewport image. Particularly, in the RAI region, the region-wise auxiliary information of which rai_type described below is 2, 3 or 4 in the RAI region, that is, the region-wise auxiliary information representing a part of an image (e.g., 360-degree video data) of an adjacent region of the target region on the spherical surface or a processed form may be included, and in this case, the entire information for the adjacent region is not received and decoded, but a viewport image may be generated through the target region and video information in the RAI region for the target region. Through this, the viewport image may be generated more quickly and efficiently. Accordingly, in the case that the region-wise auxiliary information included in the RAI region support such a function, the rai_presentation_flag field is configured to 1, and in the 360-degree video reception apparatus, it may be represented that the region-wise auxiliary information included in the RAI region may be used for generating a viewport image. Meanwhile, in the case that the rai_presentation_flag field is 0, it may be represented that the region-wise auxiliary information included in the RAI region may not be used for generating a viewport image.

Meanwhile, in the case that at least one RAI region among the RAI regions adjacent to top boundary, bottom boundary, left boundary and right boundary of the target region is used for generating a viewport image, the rai_presentation_flag field value may be configured to 1. In addition, the rai_presentation_flag field value for each direction, that is, each of the RAI regions adjacent to top boundary, bottom boundary, left boundary and right boundary may be signaled, and based on the rai_presentation_flag field for each of the RAI regions, it may be derived on whether the region-wise auxiliary information for each direction may be used for generating a viewport image.

Also, referring to FIG. 9b, the metadata for the region-wise auxiliary information may include rai_type field. The rai_type field may also be represented as gb_type field. The rai_type field may represent a type of the region-wise auxiliary information included in the RAI region in relation to the rai_type field. The region-wise auxiliary information included in the RAI region may be as below.

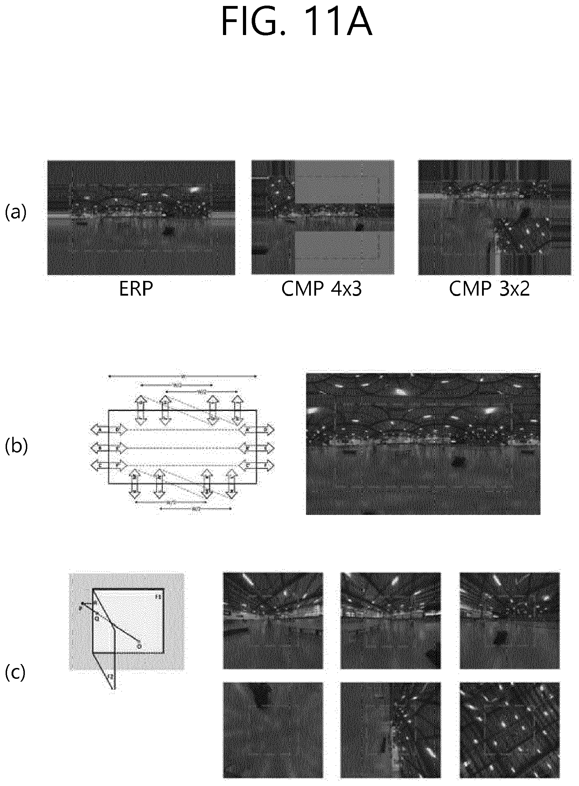

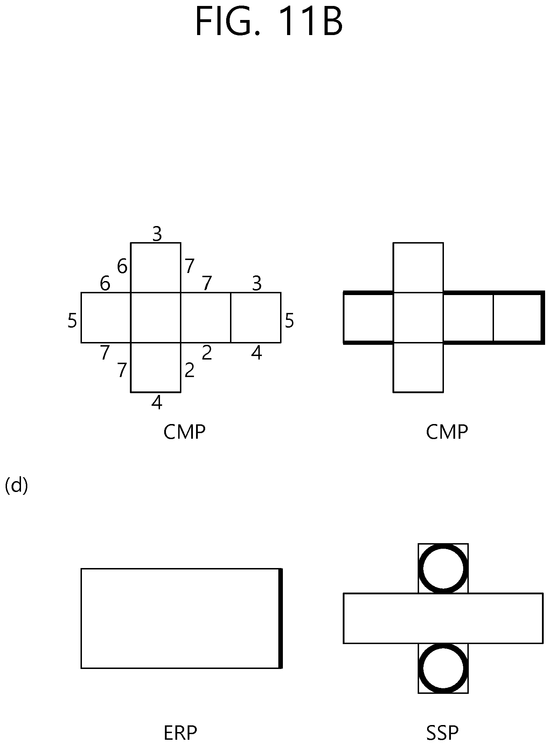

FIGS. 11a and 11b illustrate the region-wise auxiliary information according to a type of the region-wise auxiliary information. The type represents an attribute of an image included in the RAI region adjacent to a boundary of the target region, that is, an attribute of the region-wise auxiliary information included in the RAI region. In the case that the rai_type field value is 0, the rai_type field may represent that the information included in the RAI region is not designated.

In the case that the rai_type field value is 1, the RAI region may include information for samples located in a boundary of the target region repeatedly. In other words, the RAI region may include information in which the samples located in a boundary of the target region adjacent to the RAI region are copied. (a) of FIG. 11a may show the region-wise auxiliary information in the case that the rai_type field value is 1.

In the case that the rai_type field value is 2, the RAI region may include information of a specific area in the target region adjacent to a boundary of the target region, and the boundary of the target region may represent a boundary adjacent to the RAI region, and the information of a specific area may have gradual change of image quality. Particularly, for example, in the case that the target region includes 360-degree video data of high image quality, and a neighboring region adjacent to the target region on a spherical surface includes 360-degree video data of low image quality, the RAI region may include the information of a specific area in the target region adjacent to the boundary of the target region, but the information of a specific area included in the RAI region may have gradual change of image quality from the high quality of the target region to the low quality of the neighboring region as a distance from the boundary of the target region increases.

In the case that the rai_type field value is 3, the RAI region may include information of a specific area in the target region adjacent to a boundary of the target region, and the boundary of the target region may represent a boundary adjacent to the RAI region, and the information of a specific area may have the same image quality as the target region. (b) of FIG. 11a above may represent the region-wise auxiliary information in the case that the rai_type field value is 3. Also, (b) of FIG. 11a above may represent the RAI regions neighboring a corner for the target region in the case that the rai_corner_present_flag field value described above is 1.

In the case that the rai_type field value is 4, the RAI region may include information for an image which is projected on a viewport plane. In other words, in the case that the rai_type field value is 4, the RAI region may include information of a neighboring region adjacent to the target region on a spherical surface. Here, the viewport plane may correspond to the viewport image described above. In the case that the rai_type field value is 4, the RAI region may be used for extending a viewport for the target region. (c) of FIG. 11a above may represent the region-wise auxiliary information included in the RAI region of the target region in the case that the rai_type field value is 4. The cubic projection scheme may also be called a cube map projection (CMP). Also, (c) of FIG. 11a above may represent the RAI regions neighboring a corner for the target region in the case that the rai_corner_present_flag field value described above is 1.

In the case that the rai_type field value is 5, the rai_type field may represent that the region-wise auxiliary information which is the same as the RAI region of a boundary of a neighboring region adjacent to a boundary of the target region on a 3D space (e.g., spherical surface) is included in the RAI region of the target region. Here, the boundary of the target region may represent a boundary on which the target region and the RAI region of the target region are adjacent on a packed picture, and the 3D space may represent a 3D projection structure for a projection scheme applied to the packed picture. In other words, the RAI region of the target region does not include direct information, but the information for the RAI region on a boundary of the neighboring region adjacent to the boundary of the target region may be used on the 3D space as the information of the RAI region of the target region. (d) of FIG. 11b above may illustrate boundaries adjacent to the 3D space among the boundaries of regions. In the case that the packed picture is mapped on the 3D space, a neighboring region adjacent to a boundary of the target region may be derived as one, only the presence of the RAI region of the target region may be signaled only with the rai_type field. However, information such as a position of the neighboring region, a size of the RAI region of the neighboring region and/or an image quality of the RAI region of the neighboring region may be signaled.

Meanwhile, referring to FIG. 9b, the metadata for the region-wise auxiliary information may include rai_dir field. The rai_dir field may represent a directionality of information of the region-wise auxiliary information included in the RAI region of the target region based on a boundary of the target region which is adjacent to the RAI region. For example, the rai_dir field may represent whether the region-wise auxiliary information included in the RAI region is information of inner direction or information of outer direction based on a boundary of the target region. For example, in the case that the rai_dir field value is 0, the region-wise auxiliary information included in the RAI region may be the information of outer direction of the boundary of the target region, in the case that the rai_dir field value is 1, the region-wise auxiliary information included in the RAI region may be the information of inner direction of the boundary of the target region, and in the case that the rai_dir field value is 2, the region-wise auxiliary information included in the RAI region may include both of the information of inner direction of the boundary of the target region and the information of outer direction of the boundary of the target region. Here, the information of inner direction of the boundary may represent information derived based on the information included in a specific area in the target region adjacent to the boundary of the target region, and the information of outer direction of the boundary may represent information derived based on the information included in a specific area in the neighboring region adjacent to the boundary of the target region on the 3D space. In the case that the region-wise auxiliary information included in the RAI region includes all of both sides of information, the specific area in the target region and the specific area in the neighboring region may have the same size. Meanwhile, it may be additionally signaled information of the ratio between image information of the specific area in the target region including image information with different ratio between the specific area in the target region and the specific area in the neighboring region and image information of the specific area in the neighboring region. Also, in the case that the specific area in the target region and the specific area in the neighboring region may have different width or height, the information for the width or height of the specific areas may be additionally signaled.

Also, referring to FIG. 9b, the metadata for the region-wise auxiliary information may include rai_transform_type field. The rai_transform_flag field may represent whether transform information for the RAI region of the target region is signaled. For example, in the case that the rai_transform_type field value is 1, the transform information for the RAI region may be signaled. In this case, the rai_transform_flag field may represent that a transform process different from that of the information of the target region is performed for the region-wise auxiliary information included in the RAI region. In addition, in the case that the rai_transform_type field value is 1, the rai_transform_type field for the RAI region may be signaled, and the rai_transform_type field may represent the transform information of the RAI region. That is, when the region-wise auxiliary information included in the RAI region is used for generating a viewport image, the RAI region may be inversely transformed based on the transform information defined in the rai_transform_type field, and the inversely transformed RAI region may be used for generating the viewport image. The transform information represented by the rai_transform_type field value may be defined as represented in the following table.

[Table 1]

| |
|---|
| 0: no transform |
| 1: mirroring horizontally |
| 2: rotation by 180 degrees (counter-clockwise) |
| 3: rotation by 180 degrees (counter-clockwise) after mirroring horizontally |
| 4: rotation by 90 degrees (counter-clockwise) after mirroring horizontally |
| 5: rotation by 90 degrees (counter-clockwise) |
| 6: rotation by 270 degrees (counter-clockwise) after mirroring horizontally |
| 7: rotation by 270 degrees (counter-clockwise) |

In the case that the rai_transform_type field value is 0, the rai_transform_type field may represent that the transform process for the RAI region is not performed. In the case that the rai_transform_type field value is 1, the rai_transform_type field may represent that transform process of horizontal mirroring to the RAI region is performed. Here, the mirroring may represent to an action of symmetric reflection with a vertical axis that goes across a center point at the center as it is reflected by a mirror.

In the case that the rai_transform_type field value is 2, the rai_transform_type field may represent that the transform process of counterclockwise rotation of 180 degree is performed for the RAI region.

In the case that the rai_transform_type field value is 3, the rai_transform_type field may represent that transform process of horizontal mirroring and counterclockwise rotation of 180 degree to the RAI region are performed.

In the case that the rai_transform_type field value is 4, the rai_transform_type field may represent that transform process of horizontal mirroring and counterclockwise rotation of 90 degree to the RAI region are performed.

In the case that the rai_transform_type field value is 5, the rai_transform_type field may represent that transform process of counterclockwise rotation of 90 degree to the RAI region is performed.

In the case that the rai_transform_type field value is 6, the rai_transform_type field may represent that transform process of horizontal mirroring and counterclockwise rotation of 270 degree to the RAI region are performed.

In the case that the rai_transform_type field value is 7, the rai_transform_type field may represent that transform process of counterclockwise rotation of 270 degree to the RAI region is performed.

Also, referring to FIG. 9b, the metadata for the region-wise auxiliary information may include rai_hor_scale field and rai_ver_scale field. In the case that the rai_transform_type field value is 1, the rai_hor_scale field and the rai_ver_scale field may be signaled, and the rai_hor_scale field and the rai_ver_scale field may represent a horizontal scale coefficient and a vertical scale coefficient in the transform process applied to the RAI region. The rai_hor_scale field and the rai_ver_scale field may be represented in 0.01 unit, and the horizontal scale coefficient and the vertical scale coefficient may be defined to represent the horizontal and vertical directions before the transform process derived based on the rai_transform_type is applied.

Also, referring to FIG. 9b, the metadata for the region-wise auxiliary information may include rai_delta_QP field. The rai_delta_QP field may represent a different between a Quantization Parameter (QP) of the target region and a QP of a neighboring region adjacent to the target region in a 3D space. In the case that the rai_type field value related to a boundary to which the target region and the neighboring region are adjacent is 2, the region-wise auxiliary information included in the RAI region may have an image quality change. In this case, to transfer specific information for the image quality change, the rai_delta_QP field may be used. Particularly, different QPs are used for the target region and the neighboring region adjacent on the 3D space after reconstruction, and the image quality change may occur between the target region and the neighboring region. In this case, the RAI region for the target region may include an image of which QP is gradually changed for the purpose of alleviating the QP difference between the target region and the neighboring region. In this case, each of information for a starting QP and an end QP may be transferred, or the rai_delta_QP field representing a difference between the starting QP and the end QP may be transferred.

In this case, for example, the QP of the target region is configured as the starting QP and the QP of the neighboring region is configured as the ending QP, the samples may be gradually changed from the samples of which QPs is adjacent to a boundary of the target region in the RAI region. In this case, the starting QP may be applied to the samples of the RAI region adjacent to the boundary of the target region, and the ending QP may be applied to the samples of the RAI region farthest from the boundary of the target region. In the case that the rai_delta_QP field is applied, a value of the QP of the target region minus the rai_delta_QP field value may be derived as the ending QP. In the case that only the case described above is assumed to an input image, and in the case that the rai_type field value of the RAI region is 2, the QP of the target region is configured as the starting QP and the OP of the neighboring region is configured as the ending QP, and it may be explicitly described that the QPs of the information in the RAI region may be gradually changed.

Meanwhile, for a difference of image quality factor except the QP described above, the rai_delta_QP field may represent a different for the different image quality factor except the QP. For example, the RAI region may include an image of which a quality level is gradually changed for the purpose of alleviating a difference between the quality level of the target region and the quality level of the neighboring region, and in this case, each of information for a starting quality level and an ending quality level may be transferred. Alternatively, the rai_delta_QP field representing a different between the starting quality level and the ending quality level may be transferred. Here, the quality level may mean an image quality factor indicating a relative image quality.

Also, referring to FIG. 9c, the metadata for the region-wise auxiliary information may include num_sub_boundaries_minus1 field. For example, a plurality of RAI regions including the region-wise auxiliary information of different types may be generated for a boundary of the target region. The plurality of RAI regions may be called sub-RAI regions. The num_sub_boundaries_minus1 field may represent the number of the sub-RAI regions for a boundary of the target region. For example, a value of the num_sub_boundaries_minus1 field value plus 1 may represent the number of the sub-RAI regions for a boundary of the target region.

Also, referring to FIG. 9c, the metadata for the region-wise auxiliary information may include rai_sub_length field. In the case that the sub-RAI regions are generated for a boundary of the target region, the rai_sub_length field for each of the sub-RAI regions may be signaled, and the rai_sub_length field for each of the sub-RAI regions may represent a length of a sub-boundary of the target region for each sub-RAI region. Here, the sub-boundary may represent a part adjacent to each sub-RAI region of a boundary of the target region. Particularly, for example, rai_sub_length[i][j][k] field may represent a length of $k^{th}$ sub-boundary for $j^{th}$ boundary of $i^{th}$ region. Also, in the case of a boundary of a horizontal direction among the boundaries of the target region, the rai_sub_length field may be applied in the order from left to right, and in the case of a boundary of a vertical direction among the boundaries of the target region, the rai_sub_length field may be applied in the order from top to bottom.

Meanwhile, the metadata for the region-wise packing process may include information for a position and a size of the target region on the projected picture and include information for a position and a size of the target region on the packed picture. In addition, the metadata for the region-wise packing process may include transform information for the target region. The information for the target region may be as represented in the following table.

[Table 2]

| region wise packing () { | Descriptor |
|---|---|
| projected_ region_ width | u(16) |
| projected_region_height | u(16) |
| projected_region_top | u(16) |
| projected_ region_ left | u(16) |
| transform_type | u(3 ) |
| packed_region_ width | u(16) |
| packed_region_ height | u(16) |
| packed_region_ top | u(16) |
| packed_ region_ left | u(16) |
| } | |

Herein, projected_region_width field may represent a width of the target region on the projected picture, and projected_region_height field may represent a height of the target region on the projected picture. In addition, projected_region_top field may represent y component of a top left sample of the target region on the projected picture, and projected_region_left field may represent x component of a top left sample of the target region on the projected picture.

In addition, rai_transform_type field may represent transform information of the target region. The transform information represented by the rai_transform_type field may be as represented in Table 1 above. Particularly, in the case that the rai_transform_type field value is 0, the rai_transform_type field may represent that the transform information of the target region is not performed. In the case that the rai_transform_type field value is 1, the rai_transform_type field may represent that transform process of horizontal mirroring to the target region is performed. Here, the mirroring may represent to an action of symmetric reflection with a vertical axis that goes across a center point at the center as it is reflected by a mirror.

In the case that the rai_transform_type field value is 2, the rai_transform_type field may represent that the transform process of counterclockwise rotation of 180 degree is performed for the target region.

In the case that the rai_transform_type field value is 3, the rai_transform_type field may represent that transform process of horizontal mirroring and counterclockwise rotation of 180 degree to the target region are performed.

In the case that the rai_transform_type field value is 4, the rai_transform_type field may represent that transform process of horizontal mirroring and counterclockwise rotation of 90 degree to the target region are performed.

In the case that the rai_transform_type field value is 5, the rai_transform_type field may represent that transform process of counterclockwise rotation of 90 degree to the target region is performed.

In the case that the rai_transform_type field value is 6, the rai_transform_type field may represent that transform process of horizontal mirroring and counterclockwise rotation of 270 degree to the target region are performed.

In the case that the rai_transform_type field value is 7, the rai_transform_type field may represent that transform process of counterclockwise rotation of 270 degree to the target region is performed.

In addition, packed_region_width field may represent a width of the target region on the packed picture, and packed_region_height field may represent a height of the target region on the packed picture. In addition, packed_region_top field may represent y component of a top left sample of the target region on the packed picture, and packed_region_left field may represent x component of a top left sample of the target region on the packed picture.

Meanwhile, the packed picture in the case that the RAI regions of the target region include different types of the region-wise auxiliary information may be as represented below.

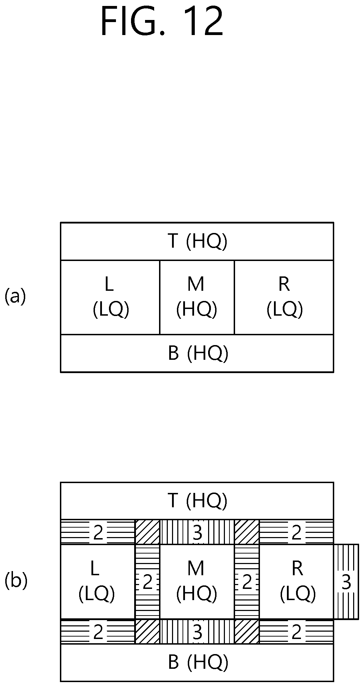

FIG. 12 illustrates an example of RAI regions for regions of a packed picture to which ERP is applied. Referring to FIG. 12(a), the projected picture based on the ERP may be coded with being divided into a plurality of regions according to a quality. That is, projected picture may be derived as a picture packed with a plurality of regions of which quality is different. For example, center region M, top region T and bottom region B of the packed picture are assumed as important parts and designated as High Quality (HQ), and the remaining left region L and right region R except the regions may be designated as Low Quality (LQ). The information for each region of the packed picture may be transmitted with a separate stream based on a technique such as MCTS. Also, each of the regions may be encoded in a separate area based on Tiling, and the 360-degree video reception apparatus may decode only a required region among the regions selectively, and through this, a coding rate may be more improved. However, in the case that the region designated as HQ and the region designated as LQ are displayed together, an undesired boundary phenomenon may occur in the part in which the region designated as HQ and the region designated as LQ border. Accordingly, to reduce the boundary phenomenon, as shown in FIG. 12(b), the region-wise auxiliary information (RAI) derived according to the property of each region may be transferred. The region-wise auxiliary information for each region may be different from the region-wise auxiliary information of another region.

Referring to FIG. 12(b), the RAI regions including the region-wise auxiliary information for each region may be derived. The numbers of the RAI region shown in FIG. 12(b) may represent types of the region-wise auxiliary information included in the RAI region. That is, the rai_type field may be signaled for each of the RAI regions including the region-wise auxiliary information, and the number for each of the RAI regions may represent a value of the rai_type field. In the case that the rai_type field value is 2, as described above, the RAI region for the rai_type field may include information of a specific area in the target region adjacent to a boundary of the target region, and the information of a specific area may have gradual image quality change. In addition, in the case that the rai_type field value is 3, as described above, the RAI region for the rai_type field may include information of a specific area in the target region adjacent to a boundary of the target region without any change.

Referring to FIG. 12(b), the RAI regions including the region-wise auxiliary information of different types adjacent to a center region of the packed picture may be existed. In this case, the rai_equal_type_flag field value for the center region may be 0. Also, the RAI regions adjacent to the center region may be used for generating a viewport, and in this case, the rai_present_flag field value for the center region may be represented as 1. Also, in a corner part (part denoted by a diagonal line of FIG. 12(b)) of the RAI region and the part including the center region, that is, the corner neighboring area of the center region, the region-wise auxiliary information for the center region may be existed. In this case, the rai_corner_present_flag field value for the center region may be represented as 1. Also, the region-wise auxiliary information included in the corner neighboring area may be used for generating a viewport.

Also, referring to FIG. 12(b), the RAI region between the center region and the left region may include the region-wise auxiliary information of which image quality is gradually changed from HQ to LQ. In this case, based on a region of the RAI region, the region-wise auxiliary information of the RAI region may represent a directionality of the information. That is, the directionality of the region-wise auxiliary information may be derived in an inner direction or an outer direction according to the region to which the RAI region is belonged.

For example, in the case that the RAI region is a RAI region for the center region, it may be derived that the region-wise auxiliary information going from left boundary to the outer direction of the center region is included. That is, the region-wise auxiliary information of the RAI region may be represented as information having directionality of the outer direction. In this case, the rai_dir field value for the RAI region may be represented as 0.

Also, as another example, in the case that the RAI region is a RAI region for the left region, it may be derived that the region-wise auxiliary information incoming to inner direction from the right boundary of the left region is included. That is, the region-wise auxiliary information of the RAI region may be represented as information having directionality of the inner direction. In this case, the rai_dir field value for the RAI region may be represented as 1.

Also, referring to FIG. 12(b), the RAI region adjacent to the top region and the left region, the RAI region adjacent to the top region and the center region and the RAI region adjacent to the top region and the right region may be the RAI regions for the top region. In this case, three types of region-wise auxiliary information of different types may be derived for the bottom boundary of the top region. In this case, based on the rai_type field of each of the RAI regions for the bottom boundary of the top region, a sub-boundary may be configured, and different types of information may be signaled for each of the RAI regions. Particularly, for example, 5 sub-boundaries for the bottom boundary may be derived, and the rai_type field of the RAI region for each sub-boundary may be signaled as 2, 0, 3, 0 and 2 value in the order of left to right.

Meanwhile, the packed picture to which the ERP including the RAI regions of the target region may be derived in various forms as below.

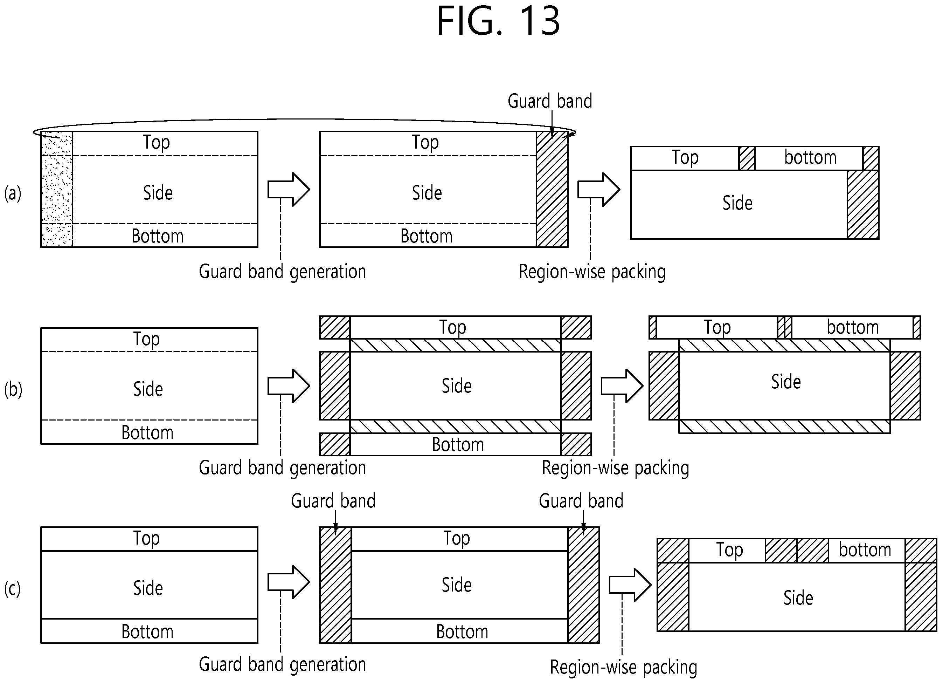

FIG. 13 illustrates an example of a packed picture to which the ERP including the RAI regions. In the case that the ERP is applied to a projection type for 360-degree video, FIG. 13(a) shows a picture in each step in the method of deriving the projection picture as the packed picture through the ERP. The 360-degree video data may be projected through the ERP, and after being projected, a RAI region for the projected picture may be generated. As shown in FIG. 13(a), a RAI region adjacent to the right boundary of the projected picture may be generated, and the RAI region may be generated based on the left area of the projected picture. And then, the region-wise packing process for the projected picture including the RAI region may be performed. Particularly, as shown in FIG. 13(a), through the region-wise packing process, top region, bottom region and side region may be rearranged in a position of the packed picture. In this case, the top region and the bottom region which are horizontally down-sampled in the projected picture may be located on an upper side of the side region in the packed picture. Also, in the region-wise packing process, the RAI region of each region in the packed picture may be transformed according to a transform of the region corresponding to the RAI region.

Also, FIG. 13(b) shows another embodiment of a method of deriving a projected picture as the packed picture through the ERP. As shown in FIG. 13(b), the RAI region adjacent to a right boundary and the RAI region adjacent to a left boundary of the projected picture may be generated, and the region-wise packing process for the projected picture including the RAI region may be performed. Particularly, as shown in FIG. 13(b), through the region-wise packing process, the regions of the projected picture may be rearranged, and the packed picture for the projected picture may be derived.

Also, FIG. 13(c) shows another embodiment of a method of deriving a projected picture as the packed picture through the ERP. Referring to FIG. 13(c), the RAI regions adjacent to left boundaries and right boundaries of a top region, a bottom region and a side region of the projected picture may be generated. In addition, the regions of the projected picture and the RAI regions may be rearranged through the region-wise packing process. Meanwhile, referring to FIG. 13(c), a transform of the RAI regions may be differently applied for each RAI region. For example, a transform of the RAI regions for the top region and the bottom region may be performed independently from a transform of the region corresponding to each of the RAI regions. Particularly, for example, 1/2 horizontal down-scaling may not be applied, but 1/4 horizontal down-scaling may be applied to the RAI regions. Through this, as shown in FIG. 13(c), the RAI regions may be positioned in an area of greater size in the packed picture. In addition, to reduce image quality difference between regions, the RAI region adjacent to the top boundary and the RAI region adjacent to the bottom boundary among the RAI regions for the side region may have gradual image quality change. In this case, the rai_type field value for the RAI region adjacent to the left boundary and the RAI region adjacent to the right boundary among the RAI regions for the side region may be configured as 3 to represent that the information of a specific area in the side region is included without any change. Also, the rai_type field value for the RAI region adjacent to the top boundary and the RAI region adjacent to the bottom boundary among the RAI regions for the side region may be configured as 3 to represent to have gradual image quality change. Accordingly, the RAI regions corresponding to the boundaries of the side region may be generated as different types with each other. In the case that the RAI regions of different types for the side region is generated, the boundary shown between the regions through the RAI region adjacent to the left boundary and the RAI region adjacent to the right boundary may be disappeared, and through the RAI region adjacent to the left boundary and the RAI region adjacent to the right boundary, it is smoothly changed from the region of high image quality to the region of low image quality.

Meanwhile, as described above, in the case that the RAI regions of different types for the ith region in the packed picture are generated, the image contents included in the RAI regions, that is, the 360-degree video data may be derived from an area adjacent to the ith region in the projected picture for the packed picture. The region adjacent to the ith region in the projected picture may be represented as a corresponding area, and the projected picture may be represented as a source picture. The syntax element including information for the corresponding area in the RAI regions may be derived as represented in the following table.

[Table 3]

```
aligned(8) class RegionWisePackingStruct {
    unsigned int(8) num_ regions;
    unsigned int(16) proj_picture_ width;
    unsigned int(16) proj_picture_height;
    for (i = 0; i < num_regions; i++) {
        bit(3) reserved = 0;
        unsigned int(1) guard_band_flag[i];
        unsigned int(4) packing_type[i];
        if (packing_type[i] == 0) {
RectRegionPacking(i);
            if (guard_band_flag[i]) {
                unsigned int(8) left_gb_width[i];
                unsigned int(8) right_gb_width[i];
                unsigned int(8) top_gb_height[i];
                unsigned int(8) bottom_gb_height[i];
                unsigned int(1) gb_not_used_for_pred_flag
[i];
                unsigned int(3) gb_type[i];
                bit(4) reserved = 0;
                unsigned int(8) gb_source_left[i];
                unsigned int(8) gb_source_top[i];
                unsigned int(8) gb_source_width[i];
                unsigned int(8) gb_source_height[i];
```

(continued)

```
                    unsigned int(3) gb_transform_type[i];
                    bit(5) reserved = 0;
                }
            }
        }
}
```

Herein, gb_source_width[i] may represent a width of the corresponding area of the source picture that corresponds to the RAI region of the $i^{th}$ region in the packed picture, gb_source_height[i] may represent a height of the corresponding area of the source picture that corresponds to the RAI region of the $i^{th}$ region in the packed picture, gb_source_top[i] may represent y component of the top left sample of the corresponding area of the source picture that corresponds to the RAI region of the $i^{th}$ region in the packed picture, and gb_source_left[i] may represent x component of the top left sample of the corresponding area of the source picture that corresponds to the RAI region of the $i^{th}$ region in the packed picture.

Also, the syntax element including information for the corresponding area in the RAI regions may be derived as represented in the following table.

[Table 4]

```
aligned(8) class RegionWisePackingStruct {
    unsigned int(8) num_regions;
    unsigned int(16) proj_picture_ width;
    unsigned int(16) proj_picture_height;
    for (i = 0; i < num_regions; i++) {
        bit(3) reserved = 0;
        unsigned int(1) guard_band_flag[i];
        unsigned int(4) packing_type[i];
        if (packing_type[i] == 0) {
            RectRegionPacking(i);
            if (guard_band_flag[i]) {
                unsigned int(8) left_gb_width[i];
                unsigned int(8) right_gb_width[i];
                unsigned int(8) top_gb_height[i];
                unsigned int(8) bottom_gb_height[i];
                unsigned int(1) gb_not_used_for_pred_flag
[i];
                unsigned int(3) gb_type[i];
                unsigned int(3) gb_transform_type[i];
                unsigned int(1) guard_band_src_flag[i];
                if (guard_band_src_flag[i])
                {
                    unsigned int(8) gb_source_type[i];
                    unsigned int(8) gb_source_left[i];
                    unsigned int(8) gb_source_top[i];
                    unsigned int(8) gb_source_width[i];
                    unsigned int(8) gb_source_height[i];
                }
            }
        }
    }
}
```

Herein, gb_source_type[i] may represent the source picture of the RAI region. That is, the RAI region may be derived from the corresponding area in the projected picture as described above but may also be derived from the corresponding area in the packed picture. For example, in the case that the gb_source_type[i] value is 1, the gb_source_type[i] may represent that the projected picture is the source picture, and in the case that the gb_source_type[i] value is 2, the gb_source_type[i] may represent that the packed picture is the source picture. In addition, guard_band_src_flag[i] may represent whether information for the corresponding area is signaled. For example, in the case that the guard_band_src_flag[i] value is 1, gb_source_width[i], gb_source_height[i], gb_source_top[i] and gb_source_left[i] that represent the information for the corresponding area may be signaled, and in the case that the guard_band_src_flag[i] value is 0, the information for the corresponding area may not be signaled. In this case, the 360-degree video data of the RAI region may be derived from the area adjacent to the i$^{th}$ region in the projected picture, and the transform such as that of the i$^{th}$ region in the packed picture may be applied to the RAI region.

Also, the gb_source_width[i] may represent a width of the corresponding area of the source picture that corresponds to the RAI region of the i$^{th}$ region in the packed picture, gb_source_height[i] may represent a height of the corresponding area of the source picture that corresponds to the RAI region of the i$^{th}$ region in the packed picture, gb_source_top[i] may represent y component of the top left sample of the corresponding area of the source picture that corresponds to the RAI region of the i$^{th}$ region in the packed picture, and gb_source_left[i] may represent x component of the top left sample of the corresponding area of the source picture that corresponds to the RAI region of the i$^{th}$ region in the packed picture. Also, the gb_transform_type[i] may represent the transform information of the RAI region as described above.

Also, the syntax element including information for the corresponding area in the RAI regions may be derived as represented in the following table.

[Table 5]

```
aligned(8) class RegionWisePackingStruct {
    unsigned int(8) num_regions;
    unsigned int(16) proj_picture_width;
    unsigned int(16) proj_picture_height;
    for (i = 0; i < num_regions; i++) {
        bit(3) reserved = 0;
        unsigned int(1) guard_band_flag[i];
        unsigned int(4) packing_type[i];
        if (packing_type[i] == 0) {
            RectRegionPacking(i);
            if (guard_band_flag[i]) {
                unsigned int(8) left_gb_width[i];
                unsigned int(8) right_gb_width[i];
                unsigned int(8) top_gb_height[i];
                unsigned int(8) bottom_gb_height[i];
                unsigned int(1) gb_not_used_for_pred_flag[i];
                unsigned int(1) gb_src_proj_pic_flag[i];
                unsigned int(1) gb_types_different_flag[i];
                unsigned int(1) gb_independent_transform_flag
[i];
                if(!gb_types_different_falg[i]) {
                    unsigned int(3) gb_type[i];
                  bit(1) reserved;
                } else {
                    for(j=0; j<4; j++)
                        unsigned int(3) gb_type[i][j];
                }
                if(gb_independent_transform_flag[i]) {
                    for(j=0; j<4; j++)
                        unsigned int(3) gb_transform_type[i][j];
                    bit(4) reserved;
```

(continued)

```
            }
            unsigned int(8) gb_source_region_width[i][j];
            unsigned int(8) gb_source_region_height[i][j];
            unsigned int(16) gb_source_region_top[i][j];
            unsigned int(16) gb_source_region_left[i][j];
        }
    }
  }
}
```

Herein, gb_src_proj_pic_flag[i] may represent the source picture of the RAI region. For example, in the case that the gb_source_type[i] value is 1, the gb_source_type[i] may represent that the projected picture is the source picture, and in the case that the gb_source_type[i] value is 0, the gb_source_type[i] may represent that the packed picture is the source picture.

In addition, gb_types_different_flag[i] may represent the RAI region adjacent to the top boundary, the RAI region adjacent to the bottom boundary, the RAI region adjacent to the left boundary and the RAI region adjacent to the right boundary for the ith region may have different RAI region types with each other. For example, in the case that the gb_types_different_flag[i] value is 1, the RAI region for the ith region may RAI regions of different RAI region types with each other, and in the case that the gb_types_different_flag[i] value is 0, the RAI region for the ith region may RAI regions of the same RAI region type.

In addition, gb_independent_transform_flag[i] may represent whether a transform different from the transform of the ith region is applied to the RAI region for the ith region. For example, in the case that the gb_independent_transform_flag[i] value is 1, the RAI region may be generated through a transform different from the transform of the ith region, and in the case that the gb_independent_transform_flag[i] value is 0, the RAI region may be generated through a transform same as the transform of the ith region.

In addition, the gb_transform_type[i] may represent transform information of the RAI region as described above. In addition, gb_source_width[i] may represent a width of the corresponding area of the source picture that corresponds to the RAI region for the ith region in the packed picture, and the gb_source_height[i] may represent a height of the corresponding area of the source picture that corresponds to the RAI region of the ith region in the packed picture, the gb_source_top[i] may represent y component of the top left sample of the corresponding area of the source picture that corresponds to the RAI region of the ith region in the packed picture, and the gb_source_left[i] may represent x component of the top left sample of the corresponding area of the source picture that corresponds to the RAI region of the ith region in the packed picture.

Meanwhile, the packed picture derived through the region-wise packing process described above may be used as a final display of a user. However, as described above, the regions in the packed picture may have data of different quality, and accordingly, a user may feel inconvenience. Therefore, as described below, a post processing may be applied.

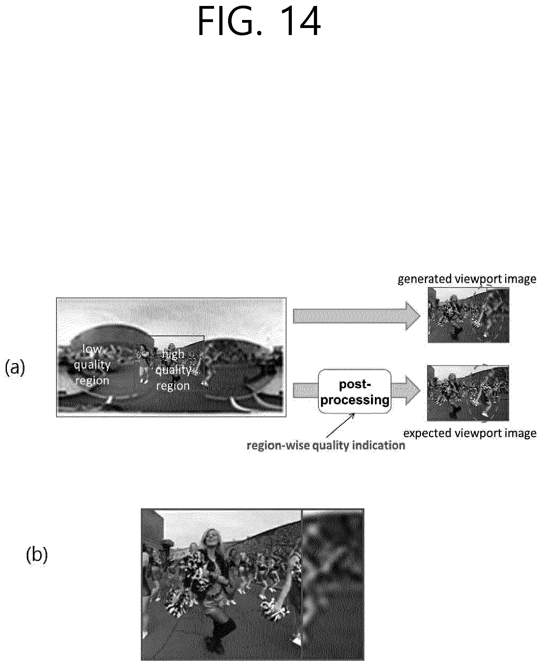

FIG. 14 illustrates an example of compensating a quality difference between regions in the packed picture through the post processing. As shown in (a) and (b) of FIG. 14, the regions in the packed picture may have data of different quality. Accordingly, as a method of minimizing a user inconvenience, the post processing for compensating a quality difference between regions may be required, and for example, Spatial enhancement filter may be applied to the regions of the packed picture. The conventional metadata for 360-degree video includes information for relative quality level of the respective regions, but it may be difficult in performing the post processing only with the information. Therefore, auxiliary information for the post processing may be transmitted. A box including syntax for the auxiliary information may be derived as represented in the following table. The box may be represented as 2DRegionQualityRankingBox.

[Table 6]

```
aligned(8) class 2DRegionQualityRankingBox extends
FullBox('2dqr', 0, 0) {
    unsigned int(8) num_regions;
    unsigned int(1) remaining_area_flag;
    unsigned int(1) view_idc_presence_flag;
    bit(6) reserved = 0;
    for (i = 0; i < num_regions; i++) {
        unsigned int(8) quality_ranking;
```

(continued)

```
if (view_idc_presence_flag==1) {
    unsigned int(2) view_idc;
    bit(6) reserved = 0;
}
if ((i < (num_regions - 1)) || (remaining_area_flag == 0)) {
    unsigned int(16) left_offset;
    unsigned int(16) top_offset;
    unsigned int(16) region_width;
    unsigned int(16) region_height;
    unsigned int(8) num_quality_description_types;
    for(j = 0; j < num_quality_description_types; j++) {
        unsigned int(8) quality_description_types;
        unsigned int(8) num_param;
        for(k = 0; k < num_param; k++)
            unsigned int(8) quality_description_param:
    }
}
}
}
```

Herein, quality_ranking and view_idc may be designated in the same manner as the quality_ranking and view_idc syntax element in the SphereRegionQualityRankingBox. In addition, num_regions may represent the number of quality ranking 2D regions for quality ranking information given by quality ranking information included in the 2DRegionQualityRankingBox. Here, a sample of a decoded picture should not be included in two or more of the quality ranking 2D regions.

Also, in the case that the remaining_area_flag value is 0, the quality ranking 2D regions may be defined based on left_offset, top_offset, region_width and region_height. In the case that the remaining_area_flag value is 1, the first the quality ranking 2D region to $I^{th}$ quality ranking 2D region may be defined based on left_offset, top_offset, region_width and region_height, and the lastly remaining quality ranking 2D region may be defined as a width and a height which are the same as VisualSampleEntry among the area except the area of the first the quality ranking 2D region to $I^{th}$ quality ranking 2D region.

Also, the left_offset, top_offset, region_width and region_height may represent a position and a size of the quality ranking 2D region. Particularly, the left_offset and the top_offset may represent x component and y component of a top left sample of the quality ranking 2D region on a picture in a visual presentation size. Also, the region_width and the region_height may represent a width and a height of the quality ranking 2D region on a picture in a visual presentation size. In this case, the value of the left_offset plus the region_width may be smaller than a width of the TrackHeaderBox, and the top_offset plus the region_height may be smaller than a height of the TrackHeaderBox. Also, the region_width value may be greater than 0, and the region_height value may be greater than 0.

In addition, num_quality_description_types may represent the number of quality_description_types that represent quality description types and details for the quality ranking 2D region. For example, in the case that the num_quality_description_types value is greater than 0, the detailed information for the quality ranking may be derived based on quality_description_type and quality_description_param. The quality_description_type and the quality_description_param may be used in a rendering process for reducing artifact or inconvenience occurred due to a difference between regions in a viewport. The quality_description_type may represent a quality factor applied when the quality ranking 2D region is generated. For example, in the case that the quality_description_type value is 1, the quality_description_type may represent that spatial scaling is applied to the quality ranking 2D region, and in the case that the quality_description_type value is 2, the quality_description_type may represent that quantization process is applied to the quality ranking 2D region. In addition, the num_param may represent the number of parameters that represent a quality difference in relation to the quality_description_type. For example, in the case that quality_description_type value is 1, the num_param value may be derived as 2, and in the case that quality_description_type value is 2, the num_param value may be derived as 1. The quality_description_param may represent a value of the parameter. For example, in the case that quality_description_type value is 1, quality_description_param[i][j][0] may represent a horizontal scaling factor, and quality_description_param[i][j][l] may represent a vertical scaling factor. The horizontal scaling factor and the vertical scaling factor may be calculated by (quality_description_param[i][j][k] + 1) / 64, and the range of the horizontal scaling factor and the vertical scaling factor may be 1/64 to 4. Also, as another example, in the case that quality_description_type value is 1, quality_description_param[i][j][0] may represent a qualtization parameter (QP) of the quality ranking 2D region which is applied in an encoding process.

Meanwhile, to transfer the metadata for 360-degree video for the region-wise auxiliary information, RegionWiseAuxiliaryInformationSEIBox may be newly defined. The RegionWiseAuxiliaryInformationSEIBox may include SEI NAL unit including the metadata for region-wise auxiliary information. The SEI NAL unit may include SEI message including the metadata for region-wise auxiliary information. The RegionWiseAuxiliaryInformationSEIBox may be transferred with being included in VisualSampleEntry, AVCSampleEntry, MVCSampleEntry, SVCSampleEntry, HEVCSampleEntry, and the like.

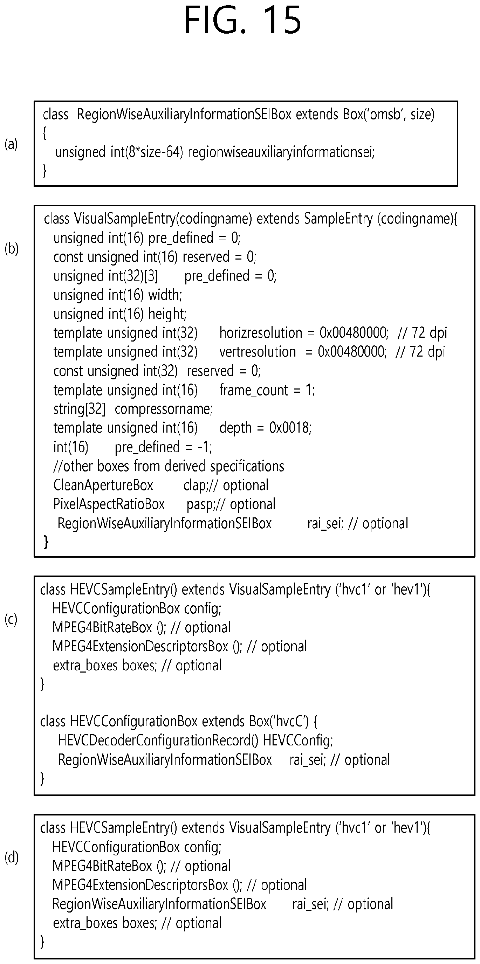

FIG. 15 illustrates the RegionWiseAuxiliaryInformationSEIBox transmitted with being included in the VisualSampleEntry or the HEVCSampleEntry. Referring to FIG. 15(a), the RegionWiseAuxiliaryInformationSEIBox may include regionwiseauxiliaryinformationsei field. The regionwiseauxiliaryinformationsei field may include SEI NAL unit including the metadata for region-wise auxiliary information. The metadata is as described above. The regionwiseauxiliaryinformationsei field may also be represented as rai_sei field.

Also, the RegionWiseAuxiliaryInformationSEIBox may be transferred with being included in VisualSampleEntry, AVCSampleEntry, MVCSampleEntry, SVCSampleEntry, HEVCSampleEntry, and the like.

For example, referring to FIG. 15(b), the RegionWiseAuxiliaryInformationSEIBox may be transferred with being included in the VisualSampleEntry. The VisualSampleEntry may include the rai_sei field that represent whether the RegionWiseAuxiliaryInformationSEIBox is applied. In the case that the rai_sei field represents that the RegionWiseAuxiliaryInformationSEIBox is applied to the VisualSampleEntry, the metadata for region-wise auxiliary information included in the RegionWiseAuxiliaryInformationSEIBox may be applied by being copied to the VisualSampleEntry without any change.

Also, referring to FIG. 15(c), the RegionWiseAuxiliaryInformationSEIBox may be transferred with being included in HEVCDecoderConfigurationRecord of the HEVCSampleEntry. The HEVCDecoderConfigurationRecord of the HEVCSampleEntry may include the rai_sei field that represents whether to apply the RegionWiseAuxiliaryInformationSEIBox. In the case that the rai_sei field represents that the RegionWiseAuxiliaryInformationSEIBox is applied to the HEVCDecoderConfigurationRecord, the metadata for region-wise auxiliary information included in the RegionWiseAuxiliaryInformationSEIBox may be applied by being copied to the HEVCDecoderConfigurationRecord without any change.

Also, referring to FIG. 15(d), the RegionWiseAuxiliaryInformationSEIBox may be transferred with being included in the HEVCSampleEntry. The HEVCSampleEntry may include the rai_sei field that represents whether to apply the RegionWiseAuxiliaryInformationSEIBox. In the case that the rai_sei field represents that the RegionWiseAuxiliaryInformationSEIBox is applied to the HEVCSampleEntry, the metadata for region-wise auxiliary information included in the RegionWiseAuxiliaryInformationSEIBox may be applied by being copied to the HEVCSampleEntry without any change.

Meanwhile, the RegionWiseAuxiliaryInformationSEIBox may include SEI (Supplemental enhancement information) or VUI (Video Usability Information) of an image including the region-wise auxiliary information for the target region described above. Through this, different types of region-wise auxiliary information may be signaled for each region of a video frame which is transferred through a file format.

For example, a video may be stored based on ISOBMFF (ISO Base Media File Format), and the metadata for region-wise auxiliary information associated with a video track (or bitstream), a sample, or a sample group may be stored and signaled. Particularly, the metadata for region-wise auxiliary information may be included and stored on a file format such as visual sample entry. Also, the metadata for region-wise auxiliary information may be included and applied in a file format of another form, for example, Common file format, and the like. The metadata for region-wise auxiliary information associated with a video track or a sample for a video in a file may be stored in a box shape as below.

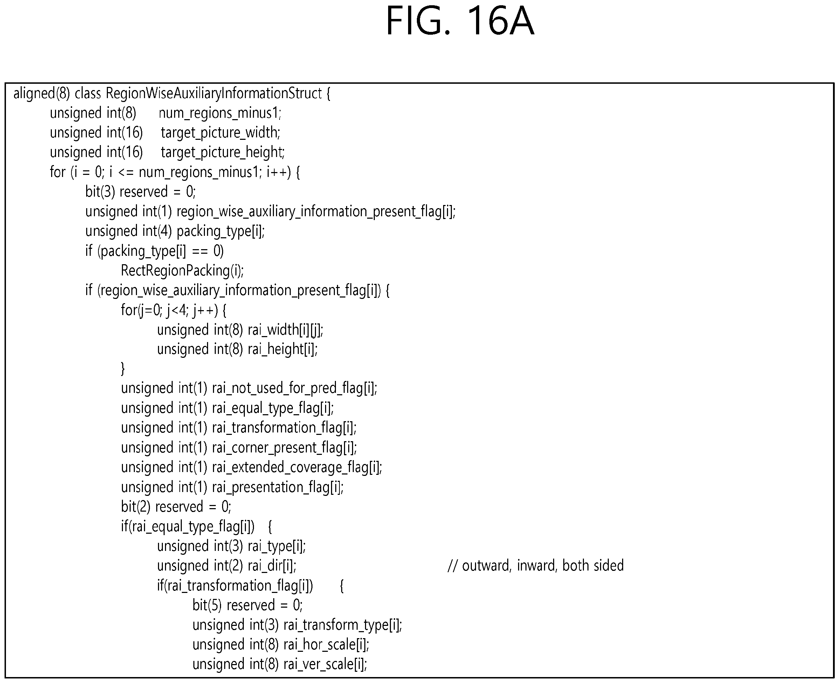

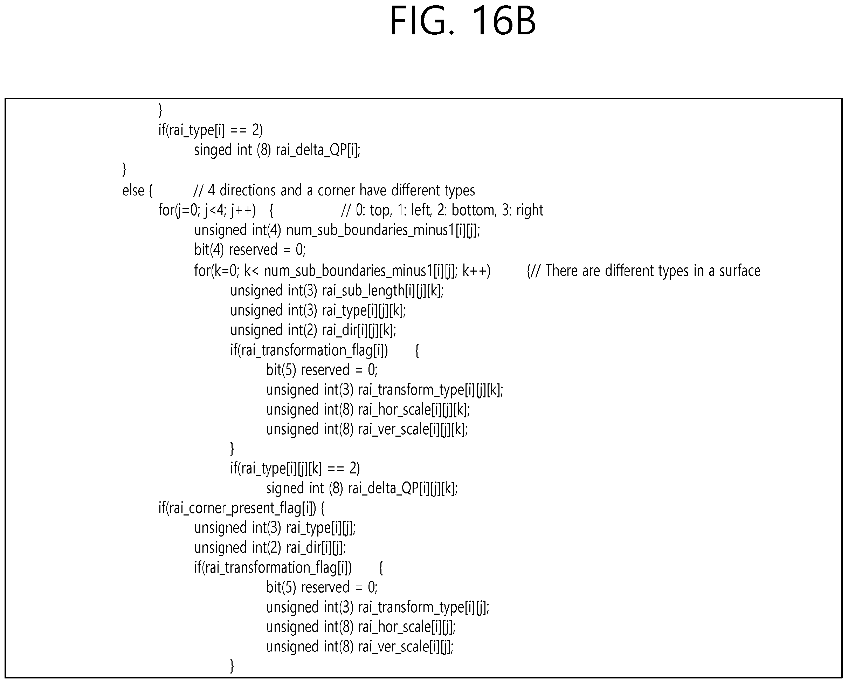

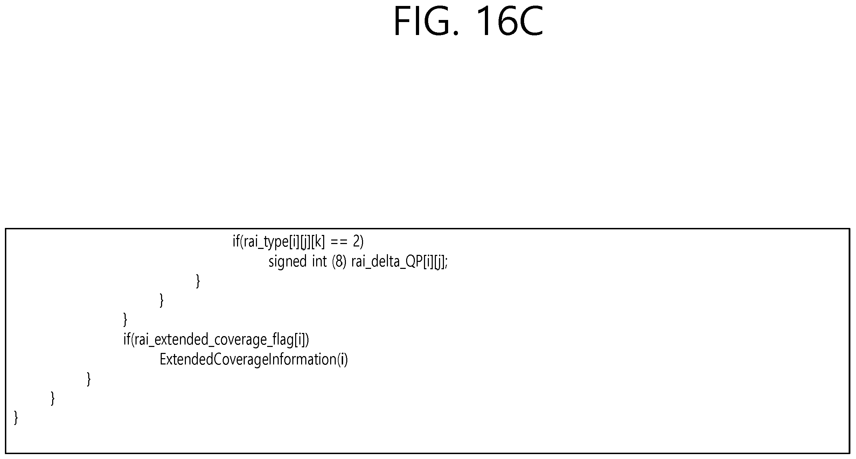

FIGS. 16a to 16c illustrate RegionWiseAuxiliaryInformationStruct class according to an embodiment of the present disclosure.

The RegionWiseAuxiliaryInformationStruct class may include num_regions_minus1 field, target_picture_width field and target_picture_height field. The definitions of the fields are as described above.

In addition, the RegionWiseAuxiliaryInformationStruct class may include region_wise_auxiliary_information_present_flag field and packing_type field for a region of the packed picture. The definitions of the fields are as described above.

In the case that the region_wise_auxiliary_information_present_flag field value for the region of the packed picture is 1, the RegionWiseAuxiliaryInformationStruct class may include rai_width field and rai_height field, and the definitions of the fields are as described above. Also, the RegionWiseAuxiliaryInformationStruct class may include rai_not_used_for_pred_flag field, rai_equal_type_flag field, rai_transformation_flag field, rai_corner_present_flag field, rai_extended_coverage_flag field and rai_presentation_flag field for the region. The definitions of the fields are as described above.

Also, in the case that the rai_equal_type_flag field value is 1, the RegionWiseAuxiliaryInformationStruct class may include the rai_type field and the rai_dir field for the RAI regions of the region. Also, in the case that the rai_transformation_flag field value is 1, the RegionWiseAuxiliaryInformationStruct class may include rai_transform_type field, rai_hor_scale field and rai_ver_scale field for the RAI regions of the region. Also, in the case that the rai_type field for the RAI regions of the region is 2, the RegionWiseAuxiliaryInformationStruct class may include the rai_delta_QP field for the RAI regions. The definitions of the fields are as described above.

Also, in the case that the rai_equal_type_flag field value is 1, the RegionWiseAuxiliaryInformationStruct class may include the num_sub_boundaries_minus1 field for a boundary of the region. Also, the RegionWiseAuxiliaryInformationStruct class may include the rai_sub_length field, the rai_type field and the rai_dir field for the sub-RAI regions adjacent to the boundary. Also, in the case that the rai_transformation_flag field value is 1, the RegionWiseAuxiliaryInformationStruct class may include rai_transform_type field, rai_hor_scale field and rai_ver_scale field for each of the sub-RAI regions. Also, in the case that the rai_type field for each of the sub-RAI regions is 2, the RegionWiseAuxiliaryInformationStruct class may include the rai_delta_QP field for each of the sub-RAI regions. The definitions of the fields are as described above.

Also, in the case that the rai_corner_present_flag field value is 1, the RegionWiseAuxiliaryInformationStruct class may include the rai_type field and the rai_dir field for a corner neighboring RAI region of the region. Also, in the case that the rai_transformation_flag field value is 1, the RegionWiseAuxiliaryInformationStruct class may include rai_transform_type field, rai_hor_scale field and rai_ver_scale field for the corner neighboring RAI region. The definitions of the fields are as described above.

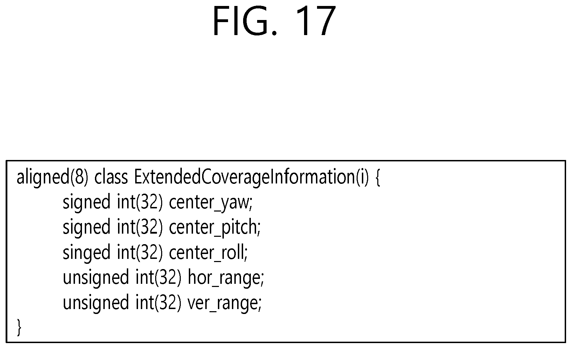

Also, in the case that the rai_corner_present_flag field value is 1, the RegionWiseAuxiliaryInformationStruct class may include ExtendedCoverageInformation class. The ExtendedCoverageInformation class may be as shown in FIG. 17.

FIG. 17 illustrates the ExtendedCoverageInformation class according to an embodiment of the present disclosure. Referring to FIG. 17, the ExtendedCoverageInformation class may include information for the region of the packed picture and the extension area including the RAI regions for the region. For example, the ExtendedCoverageInformation class may include center_yaw field, center_pitch field, center_roll field, hor_range field and ver_range field for the extension area. The definitions of the fields are as described above.

Also, the metadata for region-wise auxiliary information may be included and applied in a file format of another form, for example, Common file format, and the like. The metadata for region-wise auxiliary information associated with a video track or a sample for a video in a file may be stored in a box shape as below.

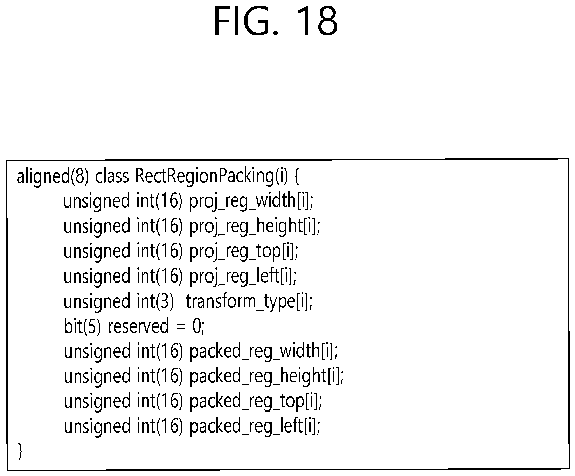

FIG. 18 illustrates RectRegionPacking class according to an embodiment of the present disclosure. Referring to FIG. 18, the RectRegionPacking class may include the metadata for the region-wise packing process of a region in the packed picture. For example, the RectRegionPacking class may include proj_reg_width field, proj_reg_height field, proj_reg_top field, proj_reg_left field, transform_type field, packed_reg_width field, packed_reg_height field, packed_reg_top field and packed_reg_left field for the region. The definitions of the fields are as described above.

Meanwhile, the RegionWiseAuxiliaryInformationStruct(rwai) class may be included in VisualSampleEntry, AVCSampleEntry, MVCSampleEntry, SVCSampleEntry or HEVCSampleEntry.

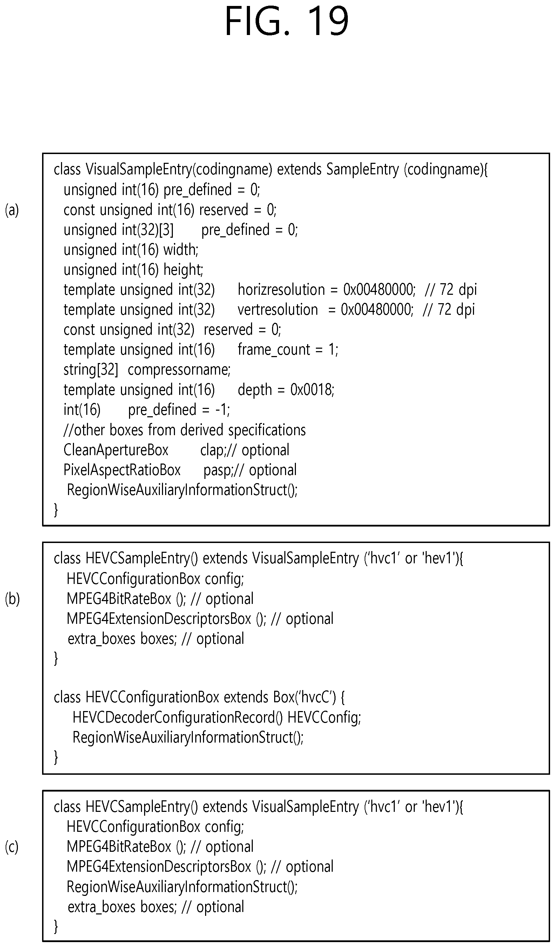

FIG. 19 illustrates the RegionWiseAuxiliaryInformationStruct class transmitted with being included in the VisualSampleEntry or the HEVCSampleEntry. Referring to FIG. 19(a), the RegionWiseAuxiliaryInformationStruct(rwai) class may be transmitted with being included in the VisualSampleEntry. In this case, the metadata for region-wise auxiliary information included in the OMVInformationSEIBox may be copied and applied to the VisualSampleEntry without any change.

In addition, for example, referring to FIG. 19(b), the RegionWiseAuxiliaryInformationStruct class may be transmitted with being included in the HEVCDecoderConfigurationRecord of the HEVCSampleEntry. In this case, the metadata for region-wise auxiliary information included in the RegionWiseAuxiliaryInformationStruct class may be copied and applied to the HEVCDecoderConfigurationRecord without any change.

In addition, for example, referring to FIG. 19(c), the RegionWiseAuxiliaryInformationStruct class may be transmitted with being included in the HEVCSampleEntry. the metadata for region-wise auxiliary information included in the RegionWiseAuxiliaryInformationStruct class may be copied and applied to the HEVCSampleEntry without any change.

Meanwhile, the RegionWiseAuxiliaryInformationStruct(rwai) class may be defined as timed metadata. The timed metadata may be defined as metadata of which value is changed according to a change of time.

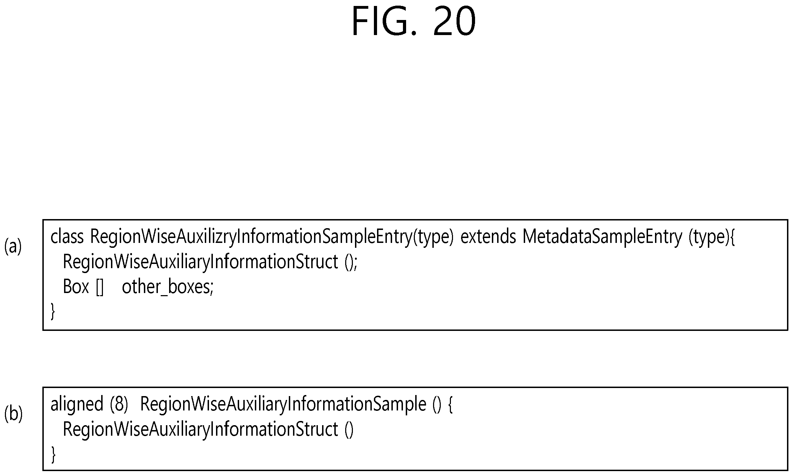

FIG. 20 illustrates an example of defining the RegionWiseAuxiliaryInformationStruct class as the timed metadata. In the case that the region-wise auxiliary information is identically applied to the entire samples for the 360-degreee video data, as shown in FIG. 20(a), the RegionWiseAuxiliaryInformationStruct class may be included in MetadataSampleEntry or header (e.g., moov or moof, etc.) of a timed metadata track. The definition for the fields of the metadata for the region-wise auxiliary information included in the RegionWiseAuxiliaryInformationStruct class may be as described above, and the fields may be applied to all metadata samples in mdat.

Meanwhile, in the case that the region-wise auxiliary information is differently applied to the samples for the 360-degreee video data, as shown in FIG. 20(b), the RegionWiseAuxiliaryInformationStruct class may be included in the RegionWiseAuxiliaryInformationSample box. Meanwhile, even in this case, the region-wise auxiliary information for the entire video sequence in a file format may be transferred. In this case, as shown in FIG. 20(a), the region-wise auxiliary information for the entire video sequence may be included in the MetadataSampleEntry of the timed metadata track, and the meaning may be extended such that the fields of the RegionWiseAuxiliaryInformationStruct class may represent the region-wise auxiliary information for the entire video sequence. For example, region_wise_auxiliary_information_present_flag field, rai_not_used_for_pred_flag field, rai_equal_type_flag field, rai_transformation_flag field, rai_corner_present_flag field, rai_extended_coverage_flag field and rai_presentation_flag field of the RegionWiseAuxiliaryInformationStruct class may be extended to the meaning of informing whether each function is used in the video sequence. In addition, the fields representing maximum and minimum values for rai_width field, rai_height field, rai_hor_scale field and rai_ver_scale field of the RegionWiseAuxiliaryInformationStruct class are added, and the meaning may be extended so as to represent the range of each value in the video sequence. In addition, num_regions_minusl field and num_sub_boundaries_minus1 field of the RegionWiseAuxiliaryInformationStruct class may additionally signal the fields representing maximum and minimum values of the number of sub-boundaries for each picture and each region in the video sequence, and the meaning may be extended. The meaning of packing_type field, rai_type field, rai_dir field, rai_transform_type field and rai_delta_QP field of the RegionWiseAuxiliaryInformationStruct class may be extended by signaling such that all of type, direction and transform information of the RAI regions used in the video sequence are arranged. Furthermore, the meaning of num_sub_boundaries_minus1 field, rai_type field, rai_dir field, rai_transform_type field and rai_delta_QP field of the RegionWiseAuxiliaryInformationStruct class may be extended by informing in detail such that the range for each surface or what is used is arranged.

Meanwhile, in the case that a broadcasting service for the 360-degree video is provided through DASH based adaptive streaming model or the 360-degree video is streamed through DASH based adaptive streaming model, the fields of the metadata for the region-wise auxiliary information may be signaled in DASH based descriptor format included in DASH MPD, and the like. That is, each of the embodiments of the metadata for the region-wise auxiliary information may be rewritten as DASH based descriptor format. The DASH based descriptor format may include EssentialProperty descriptor and SupplementalProperty descriptor. The descriptor representing the fields of the metadata for the region-wise auxiliary information may be included in AdaptationSet, Representation or SubRepresentation of MPD. Through this, a client or the 360-degree video reception apparatus may acquire the fields in relation to the region-wise packing process and the region-wise auxiliary information, and based on the fields, a processing of the 360-degree video may be performed.

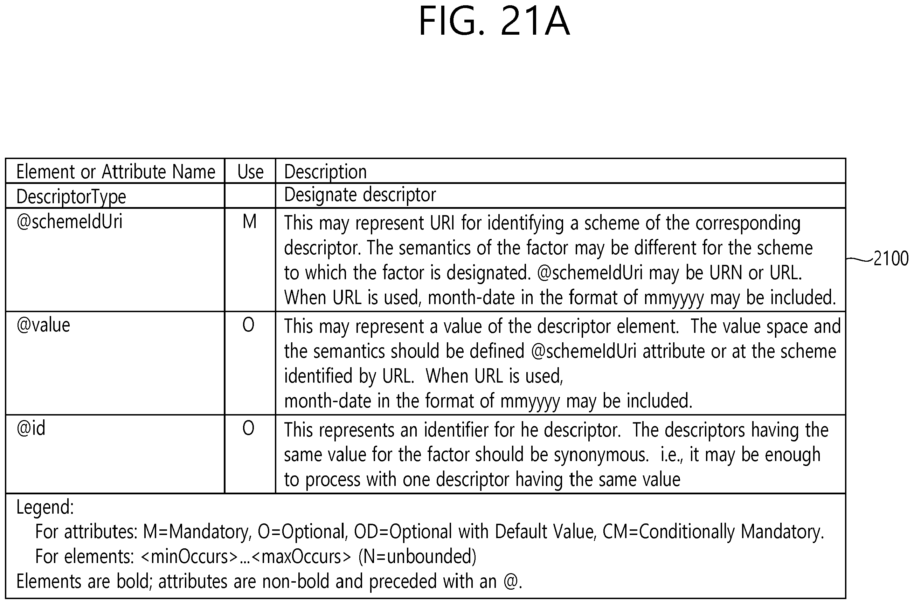

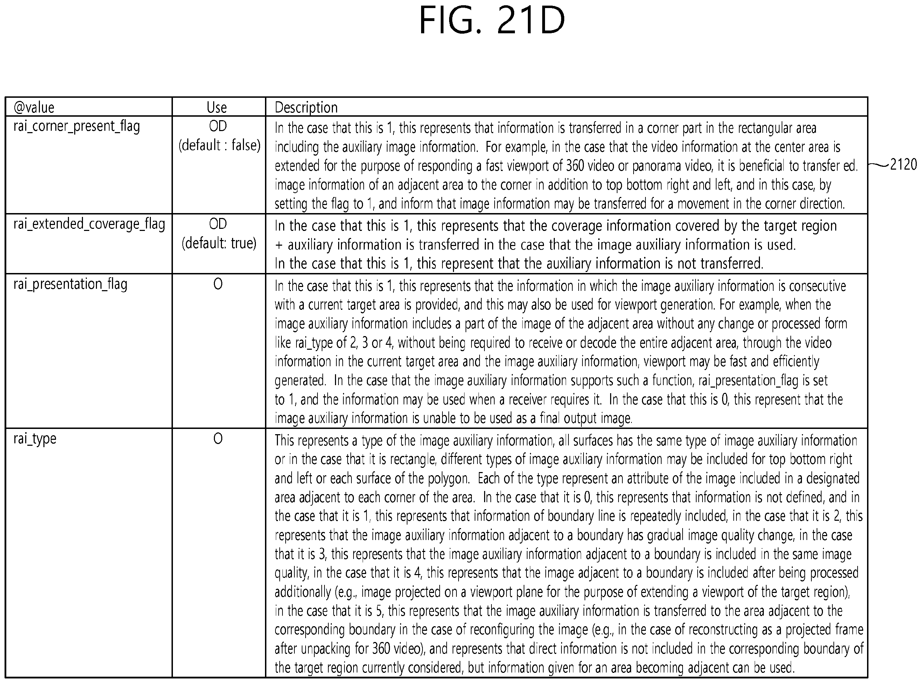

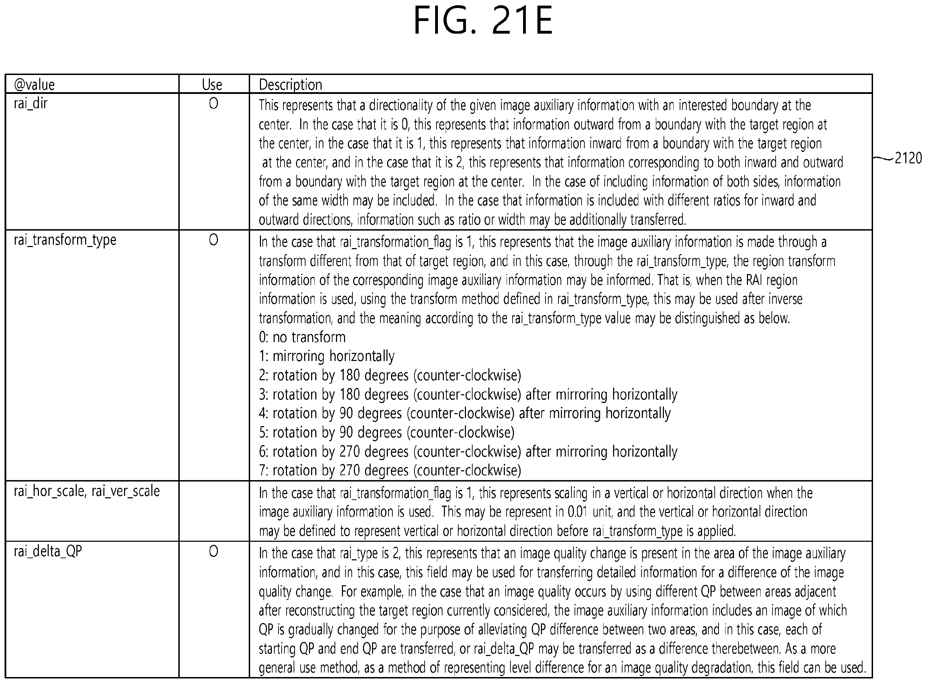

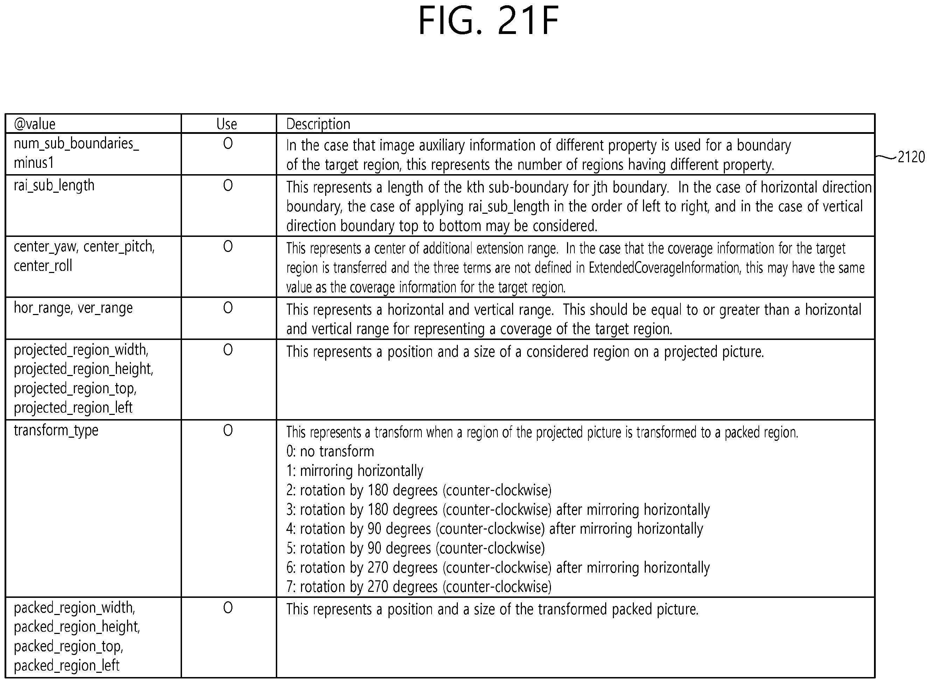

FIGS. 21a to 21f illustrate an example of the metadata in relation to the region-wise auxiliary information described in DASH based descriptor format. As denoted by 2100 of FIG. 21a, the DASH based descriptor may include @schemeIdUri field, @value field and/or @id field. The @schemeIdUri field may provide URI for identifying a scheme of the corresponding descriptor. The @value field may have values of which meanings are defined by the scheme indicated by the @schemeIdUri field. That is, the @value field may have values of descriptor elements according to the corresponding scheme, and these may be called parameters. These may be distinguished by ','. The @id may represent an identifier of the corresponding descriptor. The same identifier may include the same scheme ID, value and parameter.

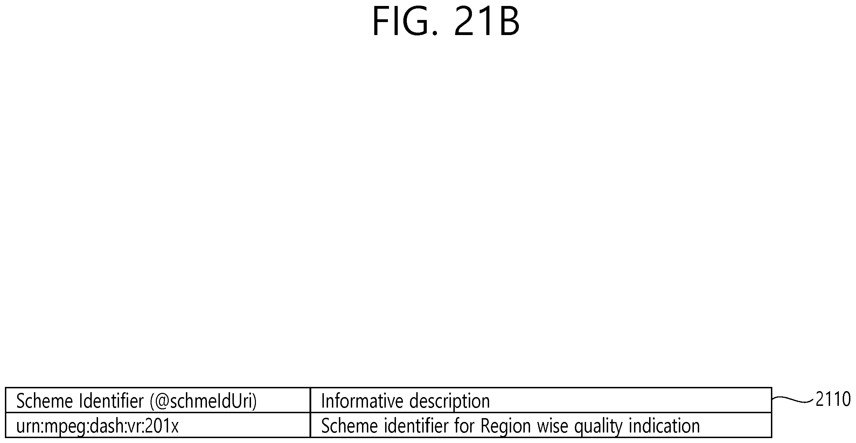

In addition, as denoted by 2110 of FIG. 21b, for the descriptor that transfers the metadata in relation to the region-wise auxiliary information, the @schemeIdUri field may have urn:mpeg:dash:vr:201x value. This may be a value for identifying that the corresponding descriptor is a descriptor for transferring the metadata in relation to the region-wise auxiliary information.

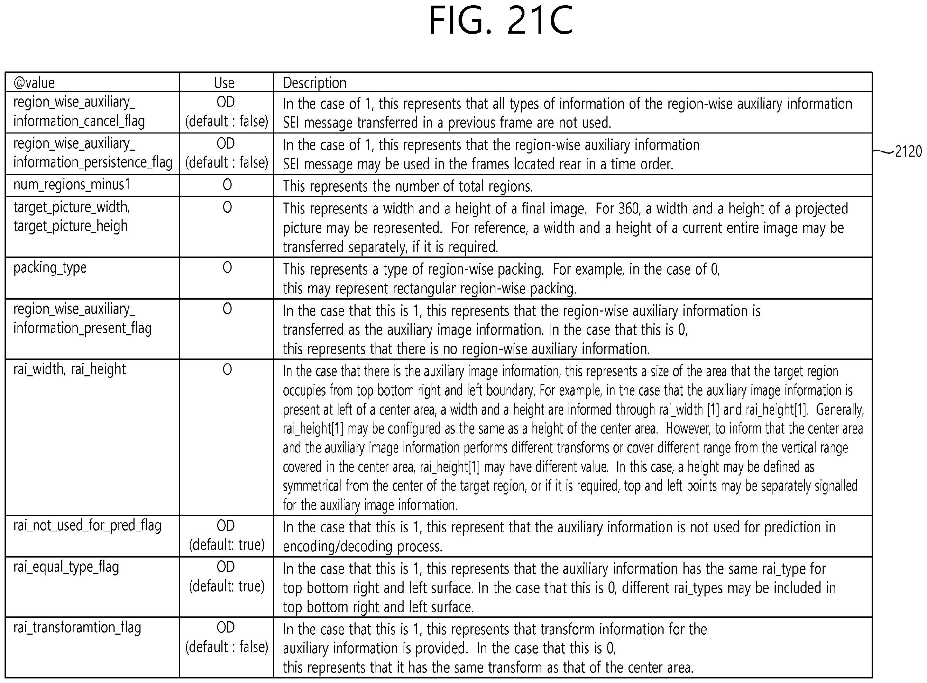

The @value field of the descriptor for transferring each of the metadata in relation to the region-wise auxiliary information may have a value denoted by 2120 shown in FIGS. 21c to 21f. That is, each of the parameter distinguished by ',' of @value may correspond to each of the fields of the metadata in relation to the region-wise auxiliary information. 2120 shown in FIGS. 21c to 21f describes one embodiment among various embodiments of the metadata in relation to the region-wise auxiliary information described above as a parameter of @value, but each of the signaling fields are substituted by parameters, and all embodiments of the metadata in relation to the region-wise auxiliary information may be described above as a parameter of @value. That is, the metadata in relation to the region-wise auxiliary information according to all embodiments described above may also be described in the DASH based descriptor format.

In 2120 shown in FIGS. 21c to 21f, each of the parameters may have the same meaning in the signaling field of the same name. Here, M may mean that the corresponding parameter is mandatory, O may mean that the corresponding parameter is optional, and OD may mean that the corresponding parameter is optional with default. In the case that OD parameter is not given, a predefined default value may be used as the corresponding parameter value. In the shown embodiment, a default value of each of the OD parameters is provided in a parenthesis.

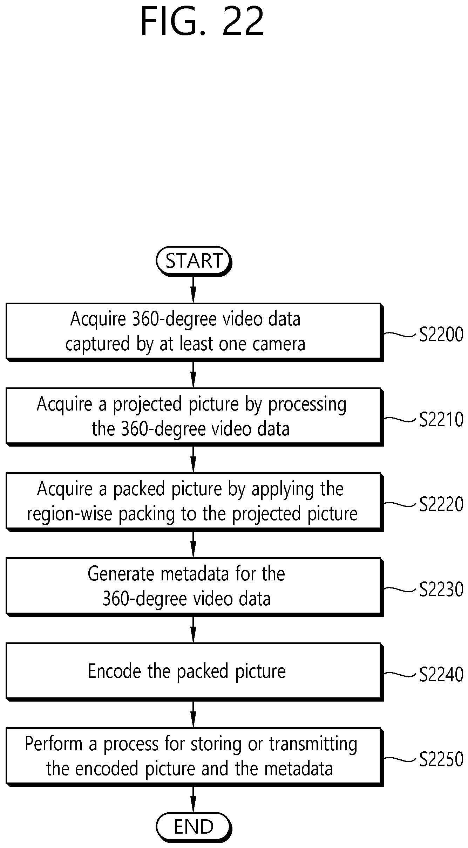

FIG. 22 schematically illustrates a method for processing 360-degree video data by a 360-degree video transmission apparatus according to the present disclosure. The method shown in FIG. 22 may be performed by the 360-degree video transmission apparatus shown in FIG. 5. Particularly, for example, step S2200 of FIG. 22 may be performed by the data input unit of the 360-degree video transmission apparatus, step S2210 may be performed by the projection processor of the 360-degree video transmission apparatus, step S2220 may be performed by the region-wise packing processor of the 360-degree video transmission apparatus, step S2230 may be performed by the metadata processor of the 360-degree video transmission apparatus, step S2240 may be performed by the data encoder of the 360-degree video transmission apparatus, and step S2250 may be performed by the transmission processor of the 360-degree video transmission apparatus. The transmission processor may be included in the transmitter.

The 360-degree video transmission apparatus acquires 360-degree video data captured by at least one camera (step, S2200). The 360-degree video transmission apparatus may acquire the 360-degree video data captured by at least one camera. The 360-degree video data may be a video captured by at least one camera.

The 360-degree video transmission apparatus acquires a projected picture by processing the 360-degree video data (step, S2210). The 360-degree video transmission apparatus may perform a projection on a 2D image according to the projection scheme for the 360-degree video data among several projection schemes and acquire the projected picture. The several projection schemes may include equirectangular projection scheme, cubic scheme, cylindrical projection scheme, tile-based projection scheme, pyramid projection scheme, panoramic projection scheme and the specific scheme projected on the 2D image directly without stitching. In addition, the projection schemes may include an octahedral projection scheme and an icosahedral projection scheme. Meanwhile, in the case that the projection scheme information indicates a specific scheme, the at least one camera may be a fish-eye camera, and in this case, the image acquired by each of the camera may be a circular image. The projected picture may include regions representing surfaces of 3D projection structure of the projection scheme.

The 360-degree video transmission apparatus acquires a packed picture by applying the region-wise packing to the projected picture (step, S2220). The 360-degree video transmission apparatus may perform a processing such as rotating or rearranging each of the regions of the projected picture or changing a resolution of each region. The processing process may be called the region-wise packing process. The 360-degree video transmission apparatus may apply the region-wise packing process to the projected picture and acquire the packed picture including the region to which the region-wise packing process is applied. The packed picture may be called a packed frame.

Meanwhile, the packed picture may include at least one Region-wise Auxiliary Information (RAI) area for a target region of the packed picture.

For example, a region decomposition process for dividing the 360-degree video data projected on the projected picture into each region may be performed, and a region-wise auxiliary information insertion process for adding a RAI region for each region may be performed. Here, the RAI region may be an area including additional 360-degree video data for the target region, and the RAI region may be an area adjacent to a boundary of the target region on the packed picture. The RAI region may also be called a guard band. In addition, a process such as rotating, rearranging the RAI region or changing resolution may be performed.

Also, as another example, the projected picture may be divided into a plurality of sub-pictures, and the region-wise auxiliary information insertion process for adding a RAI region for the target region of the sub-picture may be performed. The sub-picture may correspond to a tile, a motion constrained tile set (MCTS) or a region. In addition, a process such as rotating, rearranging the RAI region or changing resolution may be performed.

The 360-degree video transmission apparatus generates metadata for the 360-degree video data (step, S2230). The metadata may include the num_regions field, the num_regions_minus 1 field, the target_picture_width field, the target_picture_height field, the region_wise_auxiliary_information_present_flag field, the packing_type field, the rai_width field, rai_height field, the rai_not_used_for_pred_flag field, the rai_equal_type_flag field, the rai_transformation_flag field, the rai_corner_present_flag field, the rai_extended_coverage_flag field, the rai_presentation_flag field, the rai_type field, the rai_dir field, the rai_transform_type field, the rai_hor_scale field, the rai_ver_scale field, the rai_delta_QP field, the num_sub_boundaries_minus1 field, the rai_sub_length field, the center_yaw field, the center_pitch field, the center_roll field, the hor_range field, the ver_range field, the projected_region_width field, the projected_region_height field, the projected_region_top field, the projected_region_left field, the packed_region_width field, the packed_region_height field, the packed_region_top field and/or the packed_region_left described above. The meaning of the fields is as described above.

Particularly, for example, the metadata may include information indicating a type of the Region-wise Auxiliary Information (RAI) area for the target region. The information indicating a type of the RAI region may represent the rai_type field. The information indicating a type of the RAI region may represent a type of the Region-wise Auxiliary Information included in the RAI region. For example, the information indicating a type of the RAI region may represent that the information included in the RAI region is not designated. Particularly, in the case that a value of the information indicating a type of the RAI region is 0, the information indicating a type of the RAI region may represent that the information included in the RAI region is not designated. In addition, the information indicating a type of the RAI region may represent that the RAI region includes the 360-degree video data mapped to the samples located in a boundary of the target region repeatedly. Particularly, in the case that a value of the information indicating a type of the RAI region is 1, the RAI region may include the 360-degree video data mapped to the samples located in a boundary of the target region repeatedly. In other words, the RAI region may include information to which the 360-degree video data mapped to the samples located in a boundary of the target region adjacent to the RAI region is copied. In addition, the information indicating a type of the RAI region may represent that the information included in the RAI region is the 360-degree video data (image information) included in the target region, but an image quality of the RAI region may have an image quality gradually changed from the image quality of the target region to the image quality of the region adjacent to the target region on a spherical surface. Particularly, in the case that a value of the information indicating a type of the RAI region is 2, the RAI region may include the 360-degree video data included in the target region, but an image quality of the RAI region may have an image quality gradually changed from the image quality of the target region to the image quality of the region adjacent to the target region on a spherical surface. Particularly, for example, the image quality of the RAI region may be gradually changed to the image quality of the region adjacent to the target region on the spherical surface as a distance from a boundary adjacent to the target region increases. Also, the information indicating a type of the RAI region may represent that the information included in the RAI region is the 360-degree video data (image information) included in the target region. Particularly, in the case that a value of the information indicating a type of the RAI region is 3, the RAI region may include the 360-degree video data included in the target region of the same image quality as the image quality of the target region. Also, the information indicating a type of the RAI region may represent that the information included in the RAI region is the image information of the region adjacent to the target region on the spherical surface. Particularly, in the case that a value of the information indicating a type of the RAI region is 4, the RAI region may include the 360-degree video data of the region adjacent to the target region on the spherical surface. Also, the information indicating a type of the RAI region may represent that the image information of the RAI region of a reference region is used as the image information of the RAI region of the target region. Particularly, in the case that a value of the information indicating a type of the RAI region is 5, the 360-degree video data of the RAI region of the reference region may be used as the 360-degree video data of the RAI region of the target region. Here, the reference region may represent the region adjacent to the target region on the spherical surface. In this case, the RAI region of the target region may not include the 360-degree video data, and if it is required, the 360-degree video data of the RAI region of the reference region may be used as the 360-degree video data of the RAI region of the target region. For example, a projection type of the packed picture is Equirectangular Projection (ERP) and the RAI region of the target region is adjacent to a left boundary of the packed picture, the RAI region of the reference region may be adjacent to a right boundary of the packed picture.

Also, as another example, the packed picture may include a plurality of RAI regions for the target region, and the metadata may include a flag representing whether the RAI regions are the RAI regions having the same type. The flag may represent the rai_equal_type_flag. In the case that the flag value is 1, the metadata may include information indicating types of the RAI regions and include information representing a directionality of the data included in the RAI regions. The information indicating types of the RAI regions may represent the rai_type field, and the information representing a directionality of the data included in the RAI regions may represent the rai_dir field. Also, in the case that the flag value is 0, the metadata may include information indicating each of the types of the RAI regions and include the information representing a directionality of the data included in each of the RAI regions. The information indicating each of the types of the RAI regions may represent the rai_type field, and the information representing a directionality of the data included in each of the RAI regions may represent the rai_dir field.

Also, as another example, the metadata may include a flag representing whether transform information for the RAI region is signaled. The flag may represent the rai_transformation_flag field. In the case that the flag represents that the transform information for the RAI region is signaled, that is, in the case that the flag value is 1, the metadata may include the transform information for the RAI region. The transform information for the RAI region may include information representing a transform type applied to the RAI region and information representing a horizontal scaling coefficient and a vertical scaling coefficient applied to the RAI region. The information representing a transform type applied to the RAI region may represent the rai_transform_type field, and the information representing a horizontal scaling coefficient and a vertical scaling coefficient applied to the RAI region may represent the rai_hor_scale field and the rai_ver_scale field.

Also, as another example, the metadata may include a flag representing whether a corner RAI region of the target region is included in the packed picture. The flag may represent the rai_corner_present_flag field. Here, the corner RAI region may be the RAI region located in a top left, a top right, a bottom left or a bottom right neighboring area of the target region. In the case that the flag value is 1, the packed picture may include the at least one corner RAI region for the target region of the packed picture. Meanwhile, the metadata may include a flag representing whether the RAI regions including the corner RAI region is the RAI regions having the same type. In the case that the flag value is 0, the metadata may include the information indicating a type of the corner RAI region. That is, the metadata may include a flag representing whether the corner RAI region and the RAI regions are the RAI regions having the same type. In the case that the flag value is 0, the metadata may include the information indicating a type of the corner RAI region.

Also, as another example, the metadata may include a flag representing whether information for an extension area of the target region is signaled. Here, the extension area may include the target region and the RAI region. The flag may represent the rai_extended_coverage_flag field. In the case that the flag represents that the information for an extension area is signaled, that is, in the case that the flag value representing whether information for an extension area of the target region is signaled is 1, the metadata may include information representing a yaw value, a pitch value and a roll value of a position on a spherical surface corresponding to a center point of the extension area. The information representing a yaw value, a pitch value and a roll value of the position on the spherical surface may represent the center_yaw field, the center_pitch field and the center_roll field. Also, in the case that the flag value representing whether information for the extension area of the target region is signaled is 1, the metadata may include information representing a horizontal range and a vertical range of the extension area. The information representing the horizontal range and the vertical range of the extension area may represent the hor_range field and the ver_range field, respectively.

Also, as another example, the metadata may include a flag representing whether the 360-degree video data included in the RAI region is used for generating a viewport. The flag may represent the rai_presentation_flag field.

Also, as another example, the packed picture may include sub-RAI regions adjacent to a specific boundary of the target region, and in this case, the metadata may include information representing the number of the sub-RAI regions. The information representing the number of the sub-RAI regions may represent the num_sub_boundaries_minus1 field. Also, the metadata may include information representing a length of a sub-boundary for each of the sub-RAI regions. Here, the sub-boundary for each sub-RAI region may represent a part adjacent to each of the sub-RAI regions among the specific boundary.

Meanwhile, the metadata may be transmitted through SEI message. Also, the metadata may be included in an AdaptationSet, Representation or SubRepresentation of Media Presentation Description (MPD). Here, the SEI message may be used for decoding of a 2D image or assistance for a display of a 2D image to a 3D space.

The 360-degree video transmission apparatus encodes the packed picture (step, S2240). The 360-degree video transmission apparatus may encode the packed picture. Alternatively, the 360-degree video transmission apparatus may encode only a sub-picture selected among the sub-pictures of the packed picture. Also, the 360-degree video transmission apparatus may encode the metadata.

The 360-degree video transmission apparatus performs a process for storing or transmitting the encoded picture and the metadata (step, S2250). The 360-degree video transmission apparatus may encapsulate the encoded 360-degree video data and/or the metadata in a format like a file. The 360-degree video transmission apparatus may encapsulate the encoded 360-degree video data and/or the metadata in a file format such as ISOBMFF, CFF, and the like or process in a format like other DASH segment to store or transmit the encoded 360-degree video data and/or the metadata. The 360-degree video transmission apparatus may include the metadata in a file format. For example, the metadata may be included in a box of various level on ISOBMFF file format or included in a separate track in a file. Also, the 360-degree video transmission apparatus may encapsulate the metadata itself as a file. The 360-degree video transmission apparatus may process for a transmission to the encapsulated 360-degree video data according to a file format. The 360-degree video transmission apparatus may process the 360-degree video data according to an arbitrary transmission protocol. The process for a transmission may include a process for a transfer through a broadcasting network or a process for a transfer through a communication network such as broadband. Also, the 360-degree video transmission apparatus may process for a transmission to the metadata. The 360-degree video transmission apparatus may transmit the 360-degree video data and the metadata in which process for a transmission is performed through a broadcasting network or broadband.

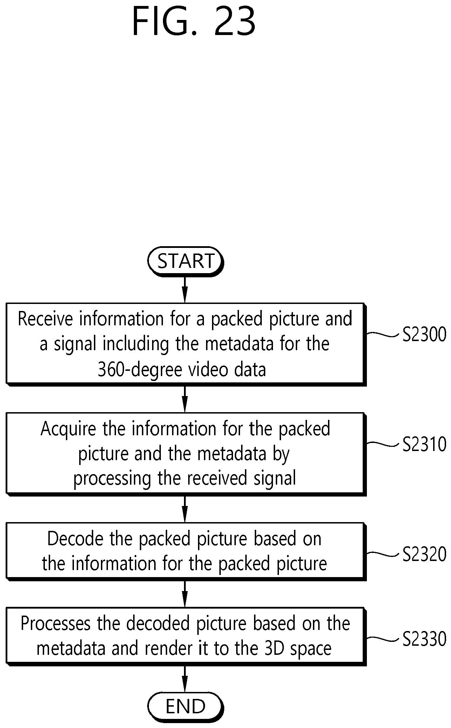

FIG. 23 schematically illustrates a method for processing 360-degree video data by a 360-degree video reception apparatus according to the present disclosure. The method shown in FIG. 23 may be performed by the 360-degree video reception apparatus shown in FIG. 6. Particularly, for example, step S2300 of FIG. 23 may be performed by the receiver of the 360-degree video reception apparatus, step S2310 may be performed by the reception processor of the 360-degree video reception apparatus, step S2320 may be performed by the data decoder of the 360-degree video reception apparatus, and step S2330 may be performed by the renderer of the 360-degree video reception apparatus.

The 360-degree video reception apparatus receives information for a packed picture for 360-degree video data and a signal including the metadata for the 360-degree video data (step, S2300). The 360-degree video reception apparatus may receive the information for the packed picture for the 360-degree video data and the metadata which is signaled from the 360-degree video transmission apparatus through a broadcasting network. The 360-degree video data may be received through sub-pictures of the packed picture. Alternatively, the 360-degree video data may be received through a sub-picture among the sub-pictures of the packed picture. Also, the 360-degree video reception apparatus may receive the information for the packed picture and the metadata through a communication network such as broadband or storage medium. Here, the packed picture may be called a packed frame.

The 360-degree video reception apparatus acquires the information for the packed picture and the metadata by processing the received signal (step, S2310). The 360-degree video reception apparatus may perform a process according to a transmission protocol for the information for the packed picture and the metadata. Also, the 360-degree video reception apparatus may perform an inverse-process of the process for a transmission of the 360-degree video transmission apparatus described above. The metadata may include the num_regions field, the num_regions_minus1 field, the target_picture_width field, the target_picture_height field, the region_wise_auxiliary_information_present_flag field, the packing_type field, the rai_width field, rai_height field, the rai_not_used_for_pred_flag field, the rai_equal_type_flag field, the rai_transformation_flag field, the rai_corner_present_flag field, the rai_extended_coverage_flag field, the rai_presentation_flag field, the rai_type field, the rai_dir field, the rai_transform_type field, the rai_hor_scale field, the rai_ver_scale field, the rai_delta_QP field, the num_sub_boundaries_minus1 field, the rai_sub_length field, the center_yaw field, the center_pitch field, the center_roll field, the hor_range field, the ver_range field, the projected_region_width field, the projected_region_height field, the projected_region_top field, the projected_region_left field, the packed_region_width field, the packed_region_height field, the packed_region_top field and/or the packed_region_left described above. The meaning of the fields is as described above.

Particularly, for example, the metadata may include information indicating a type of the Region-wise Auxiliary Information (RAI) area for the target region. The information indicating a type of the RAI region may represent the rai_type field. The information indicating a type of the RAI region may represent a type of the Region-wise Auxiliary Information included in the RAI region. For example, the information indicating a type of the RAI region may represent that the information included in the RAI region is not designated. Particularly, in the case that a value of the information indicating a type of the RAI region is 0, the information indicating a type of the RAI region may represent that the information included in the RAI region is not designated. In addition, the information indicating a type of the RAI region may represent that the RAI region includes the 360-degree video data mapped to the samples located in a boundary of the target region repeatedly. Particularly, in the case that a value of the information indicating a type of the RAI region is 1, the RAI region may include the 360-degree video data mapped to the samples located in a boundary of the target region repeatedly. In other words, the RAI region may include information to which the 360-degree video data mapped to the samples located in a boundary of the target region adjacent to the RAI region is copied. In addition, the information indicating a type of the RAI region may represent that the information included in the RAI region is the 360-degree video data (image information) included in the target region, but an image quality of the RAI region may have an image quality gradually changed from the image quality of the target region to the image quality of the region adjacent to the target region on a spherical surface. Particularly, in the case that a value of the information indicating a type of the RAI region is 2, the RAI region may include the 360-degree video data included in the target region, but an image quality of the RAI region may have an image quality gradually changed from the image quality of the target region to the image quality of the region adjacent to the target region on a spherical surface. Particularly, for example, the image quality of the RAI region may be gradually changed to the image quality of the region adjacent to the target region on the spherical surface as a distance from a boundary adjacent to the target region increases. Also, the information indicating a type of the RAI region may represent that the information included in the RAI region is the 360-degree video data (image information) included in the target region. Particularly, in the case that a value of the information indicating a type of the RAI region is 3, the RAI region may include the 360-degree video data included in the target region of the same image quality as the image quality of the target region. Also, the information indicating a type of the RAI region may represent that the information included in the RAI region is the image information of the region adjacent to the target region on the spherical surface. Particularly, in the case that a value of the information indicating a type of the RAI region is 4, the RAI region may include the 360-degree video data of the region adjacent to the target region on the spherical surface. Also, the information indicating a type of the RAI region may represent that the image information of the RAI region of a reference region is used as the image information of the RAI region of the target region. Particularly, in the case that a value of the information indicating a type of the RAI region is 5, the 360-degree video data of the RAI region of the reference region may be used as the 360-degree video data of the RAI region of the target region. Here, the reference region may represent the region adjacent to the target region on the spherical surface. In this case, the RAI region of the target region may not include the 360-degree video data, and if it is required, the 360-degree video data of the RAI region of the reference region may be used as the 360-degree video data of the RAI region of the target region. For example, a projection type of the packed picture is Equirectangular Projection (ERP) and the RAI region of the target region is adjacent to a left boundary of the packed picture, the RAI region of the reference region may be adjacent to a right boundary of the packed picture.

Also, as another example, the packed picture may include a plurality of RAI regions for the target region, and the metadata may include a flag representing whether the RAI regions are the RAI regions having the same type. The flag may represent the rai_equal_type_flag. In the case that the flag value is 1, the metadata may include information indicating types of the RAI regions and include information representing a directionality of the data included in the RAI regions. The information indicating types of the RAI regions may represent the rai_type field, and the information representing a directionality of the data included in the RAI regions may represent the rai_dir field. Also, in the case that the flag value is 0, the metadata may include information indicating each of the types of the RAI regions and include the information representing a directionality of the data included in each of the RAI regions. The information indicating each of the types of the RAI regions may represent the rai_type field, and the information representing a directionality of the data included in each of the RAI regions may represent the rai_dir field.

Also, as another example, the metadata may include a flag representing whether transform information for the RAI region is signaled. The flag may represent the rai_transformation_flag field. In the case that the flag represents that the transform information for the RAI region is signaled, that is, in the case that the flag value is 1, the metadata may include the transform information for the RAI region. The transform information for the RAI region may include information representing a transform type applied to the RAI region and information representing a horizontal scaling coefficient and a vertical scaling coefficient applied to the RAI region. The information representing a transform type applied to the RAI region may represent the rai_transform_type field, and the information representing a horizontal scaling coefficient and a vertical scaling coefficient applied to the RAI region may represent the rai_hor_scale field and the rai_ver_scale field.

Also, as another example, the metadata may include a flag representing whether a corner RAI region of the target region is included in the packed picture. The flag may represent the rai_corner_present_flag field. Here, the corner RAI region may be the RAI region located in a top left, a top right, a bottom left or a bottom right neighboring area of the target region. In the case that the flag value is 1, the packed picture may include the at least one corner RAI region for the target region of the packed picture. Meanwhile, the metadata may include a flag representing whether the RAI regions including the corner RAI region is the RAI regions having the same type. In the case that the flag value is 0, the metadata may include the information indicating a type of the corner RAI region. That is, the metadata may include a flag representing whether the corner RAI region and the RAI regions are the RAI regions having the same type. In the case that the flag value is 0, the metadata may include the information indicating a type of the corner RAI region.

Also, as another example, the metadata may include a flag representing whether information for an extension area of the target region is signaled. Here, the extension area may include the target region and the RAI region. The flag may represent the rai_extended_coverage_flag field. In the case that the flag represents that the information for an extension area is signaled, that is, in the case that the flag value representing whether information for an extension area of the target region is signaled is 1, the metadata may include information representing a yaw value, a pitch value and a roll value of a position on a spherical surface corresponding to a center point of the extension area. The information representing a yaw value, a pitch value and a roll value of the position on the spherical surface may represent the center_yaw field, the center_pitch field and the center_roll field. Also, in the case that the flag value representing whether information for the extension area of the target region is signaled is 1, the metadata may include information representing a horizontal range and a vertical range of the extension area. The information representing the horizontal range and the vertical range of the extension area may represent the hor_range field and the ver_range field, respectively. Meanwhile, the extension area may be used for generating a viewport, and in this case, the information for the extension area may be used for the rendering process of the extension area. That is, based on the information for the extension area, an area on the spherical surface to which the extension area is mapped may be derived.

Also, as another example, the metadata may include a flag representing whether the 360-degree video data included in the RAI region is used for generating a viewport. The flag may represent the rai_presentation_flag field. In the case that the flag indicates that the 360-degree video data included in the RAI region generates a viewport, the the 360-degree video data included in the RAI region may be rendered in an area on the spherical surface and displayed.

Also, as another example, the packed picture may include sub-RAI regions adjacent to a specific boundary of the target region, and in this case, the metadata may include information representing the number of the sub-RAI regions. The information representing the number of the sub-RAI regions may represent the num_sub_boundaries_minus1 field. Also, the metadata may include information representing a length of a sub-boundary for each of the sub-RAI regions. Here, the sub-boundary for each sub-RAI region may represent a part adjacent to each of the sub-RAI regions among the specific boundary.

Meanwhile, the metadata may be transmitted through SEI message. Also, the metadata may be included in an AdaptationSet, Representation or SubRepresentation of Media Presentation Description (MPD). Here, the SEI message may be used for decoding of a 2D image or assistance for a display of a 2D image to a 3D space.

The 360-degree video reception apparatus decodes the picture based on the information for the picture (step, S2320). The 360-degree video reception apparatus may decode the picture based on the information for the picture. Also, the 360-degree video reception apparatus may acquire viewport metadata through the received bitstream and decode only the region (or sub-picture) selected based on the viewport metadata. Meanwhile, in the case that the flag value representing whether the information for the extension area of the target region is signaled is 1, the 360-degree video reception apparatus may select an efficient area for generating the viewport designated by the viewport metadata between the extension area including the RAI region and the target region (or sub-picture) not including the RAI region and decode the selected area.

The 360-degree video reception apparatus processes the decoded picture based on the metadata and renders it to the 3D space (step, S2330). The 360-degree video reception apparatus may map the 360-degree video data of the packed picture on the 3D space based on the metadata. Particularly, the 360-degree video reception apparatus perform a region-wise inversion for the target region based on metadata in relation to the region-wise packing process for the target region of the packed picture. Meanwhile, in the case that a transform process different from that of the target region is applied to the RAI region of the target region, that is, in the case that the flag value representing whether the information for the transform information for the RAI region is signaled is 1, based on the transform information for the RAI region (e.g., the rai_transform_type field, the rai_hor_scale field and the rai_ver_scale field for the RAI region), the region-wise inversion for the RAI region may be performed. Also, in the case that the packed picture includes the corner RAI region for the target region, the metadata may include the transform information for the corner RAI region, and based on the transform information for the RAI region (e.g., the rai_transform_type field, the rai_hor_scale field and the rai_ver_scale field for the RAI region), the region-wise inversion for the corner RAI region may be performed.

Also, the 360-degree video reception apparatus may acquire the projected picture from the packed picture based on the metadata, and re-project the projected picture to the 3D space. In this case, the 360-degree video reception apparatus may acquire the projected picture based on the target region and based on the 360-degree video data of the RAI region for the target region, reduce a region boundary error of the projected picture. The region boundary error may mean an error that a boundary between adjacent regions of the projected picture shows as a discrete line or a difference between regions is clearly shown with the boundary at the center such that the picture is not shown as a continuous picture, but an area is distinguished. A method for reducing the region boundary error may include a method for mapping a sample derived through a blending process between the sample of the RAI region and the sample of the projected picture and a replacement method for replacing the sample of the projected sample by the sample of the RAI region.

Also, in the case that the flag value representing whether the 360-degree video data included in the RAI region is used for generating a viewport is 1, the 360-degree video data included in the RAI region may be mapped to the 3D space. Particularly, the extension area including the RAI region and the target region may be mapped to the viewport on the 3D space. The viewport may represent an area in a direction that a user faces on the 3D space.

The above-described steps may be omitted according to an embodiment or replaced by other steps of performing similar/identical operations.

The 360-degree video transmission apparatus according to an embodiment of the present disclosure may include the above-described data input unit, stitcher, signaling processor, projection processor, data encoder, transmission processor and/or transmitter. The internal components have been described above. The 360-degree video transmission apparatus and internal components thereof according to an embodiment of the present disclosure may perform the above-described embodiments with respect to the method of transmitting a 360-degree video of the present disclosure.

The 360-degree video reception apparatus according to an embodiment of the present disclosure may include the above-described receiver, reception processor, data decoder, signaling parser, reprojection processor and/or renderer. The internal components have been described above. The 360-degree video reception apparatus and internal components thereof according to an embodiment of the present disclosure may perform the above-described embodiments with respect to the method of receiving a 360-degree video of the present disclosure.

The internal components of the above-described apparatuses may be processors which execute consecutive processes stored in a memory or hardware components. These components may be located inside/outside the apparatuses.

The above-described modules may be omitted or replaced by other modules which perform similar/identical operations according to embodiments.

The above-described parts, modules or units may be processors or hardware parts executing consecutive processes stored in a memory (or a storage unit). The steps described in the aforementioned embodiments can be performed by processors or hardware parts. Modules/blocks/units described in the above embodiments can operate as hardware/processors. The methods proposed by the present disclosure can be executed as code. Such code can be written on a processor-readable storage medium and thus can be read by a processor provided by an apparatus.

In the above exemplary systems, although the methods have been described based on the flowcharts using a series of the steps or blocks, the present disclosure is not limited to the sequence of the steps, and some of the steps may be performed at different sequences from the remaining steps or may be performed simultaneously with the remaining steps. Furthermore, those skilled in the art will understand that the steps shown in the flowcharts are not exclusive and may include other steps or one or more steps of the flowcharts may be deleted without affecting the scope of the present disclosure.

When the above-described embodiment is implemented in software, the above-described scheme may be implemented using a module (process or function) which performs the above function. The module may be stored in the memory and executed by the processor. The memory may be disposed to the processor internally or externally and connected to the processor using a variety of well-known means. The processor may include Application-Specific Integrated Circuits (ASICs), other chipsets, logic circuits, and/or data processors. The memory may include Read-Only Memory (ROM), Random Access Memory (RAM), flash memory, memory cards, storage media and/or other storage devices.

## Claims

**1.** A 360-degree video data processing method performed by a 360 video transmission apparatus, comprising:

    acquiring 360 video data captured by at least one camera;
    acquiring a projected picture by processing the 360 video data;
    acquiring a packed picture by applying region-wise packing to the projected picture;

generating metadata for the 360 video data;

encoding the packed picture; and

performing processing for storage or transmission on the encoded picture and the metadata,

wherein the packed picture comprises at least one Region-wise Auxiliary Information (RAI) region for a target region of the packed picture, and

wherein metadata comprises information representing a type of the RAI region.

2. The 360-degree video data processing method of claim 1, wherein the information representing the type of the RAI region represents that information included in the RAI region is image information of a region adjacent to the target region on a spherical surface.

3. The 360-degree video data processing method of claim 1, wherein the information representing the type of the RAI region represents that image information of a RAI region of a reference region is used for image information of the RAI region of the target region.

4. The 360-degree video data processing method of claim 3, when a projection type of the packed picture is Equirectangular Projection (ERP) and the RAI region of the target region is adjacent to a left boundary of the packed picture, the RAI region of the reference region is adjacent to a right boundary of the packed picture.

5. The 360-degree video data processing method of claim 1,

wherein the packed picture includes a plurality of RAI regions for the target region,

wherein the metadata includes a flag representing whether the RAI regions are RAI regions having a same type,

when a value of the flag is 0, wherein the metadata includes information representing a type of each of the RAI regions.

6. The 360-degree video data processing method of claim 1, wherein the metadata includes a flag representing whether transform information for the RAI region is signaled,

when a value of the flag is 1, wherein the metadata includes the transform information for the RAI region.

7. The 360-degree video data processing method of claim 1,

wherein the metadata includes a flag representing whether a corner RAI region of the target region is included in the packed picture,

wherein the corner RAI region is a RAI region located in a top left, top right, bottom left or bottom right neighboring region of the target region,

when a value of the flag is 1, wherein the packed picture includes the at least one corner RAI region for the target region of the packed picture.

8. The 360-degree video data processing method of claim 7,

wherein the metadata includes a flag representing whether the corner RAI region and the RAI region are the RAI regions having a same type,

when a value of the flag is 0, wherein the metadata includes information representing a type of the corner RAI region.

9. The 360-degree video data processing method of claim 1,

wherein the metadata includes a flag representing whether the information for extension area of the target region is signaled, and

wherein the extension area includes the target region and the RAI region.

10. The 360-degree video data processing method of claim 9,

when a value of the flag representing whether the information for extension area of the target region is signaled is 1,

wherein the metadata includes information representing a yaw value, a pitch value and a roll value of a position on a spherical surface related to a center point of the extension area.

11. The 360-degree video data processing method of claim 9,

When a value of the flag representing whether the information for extension area of the target region is signaled is 1,

wherein the metadata includes information representing a horizontal range and a vertical range of the extension area.

12. The 360-degree video data processing method of claim 1,

wherein the metadata includes a flag representing whether 360-degree video data included in the RAI region is used for generating a viewport.

**13.** The 360-degree video data processing method of claim 1,
wherein the packed picture includes sub-RAI regions adjacent to a specific boundary of the target region, and
wherein the metadata includes information representing a number of the sub-RAI regions.

**14.** The 360-degree video data processing method of claim 13,
wherein the metadata includes information representing a length of a sub-boundary for each of the sub-RAI regions, and
wherein the sub-boundary for each of the sub-RAI regions is a part in which each of the sub-RAI regions are adjacent among the specific boundary.

**15.** A 360-degree video data processing method performed by a 360 video reception apparatus, comprising:

receiving a signal including information on a packed picture with respect to 360-degree video data and metadata for the 360-degree video data;
acquiring the information on the packed picture and the metadata by processing the signal;
decoding the packed picture based on the information on the packed picture; and
rendering the decoded picture on a 3D space by processing the decoded picture based on the metadata,
wherein the packed picture comprises at least one Region-wise Auxiliary Information (RAI) region for a target region of the packed picture, and
wherein metadata comprises information representing a type of the RAI region.

**16.** The 360-degree video data processing method of claim 15, when a value of the information representing the type of the RAI region is 4, wherein the RAI region includes 360-degree video data of a region adjacent to the target region on a spherical surface.

**17.** The 360-degree video data processing method of claim 15, when a value of the information representing the type of the RAI region is 5, wherein 360-degree video data of a RAI region of a reference region is used as 360-degree video data of the RAI region of the target region.

**18.** The 360-degree video data processing method of claim 17, when a projection type of the packed picture is Equirectangular Projection (ERP) and the RAI region of the target region is adjacent to a left boundary of the packed picture, the RAI region of the reference region is adjacent to a right boundary of the packed picture.

**19.** The 360-degree video data processing method of claim 15,
wherein the packed picture includes a plurality of RAI regions for the target region,
wherein the metadata includes a flag representing whether the RAI regions are RAI regions having a same type,
when value of the flag is 0, wherein the metadata includes information representing a type of each of the RAI regions.

**20.** The 360-degree video data processing method of claim 1,
wherein the metadata includes a flag representing whether 360-degree video data included in the RAI region is used for generating a viewport,
when value of the flag is 1, the 360-degree video data included in the RAI region is used for generating the viewport.

# FIG. 1

110        120        130        140

| Capture | Preparation | Delivery | Processing | Rendering |
|---|---|---|---|---|
| Raw data (video, 3D point cloud, 3D model) | Stitching editing, image processing, encoding | Broadcast or unicast transmission | image processing, decoding, upscaling, re-projection | Video display & head-tracking interaction |

Feedback

Head orientation for region of interest

EP 3 609 187 A1

# FIG. 2

```
aligned(8) class Box (unsigned int(32) boxtype, optional
unsigned int(8)[16] extended_type)
{
    unsigned int(32) size;
    unsigned int(32) type = boxtype;
    if (size==1) {
        unsigned int(64) largesize;
    } else if (size==0) {
    //      box extends to end of file
    }
    if (boxtype=='uuid') {
        unsigned int(8)[16] usertype = extended_type;
    }
}

aligned(8) class FullBox(unsigned int(32) boxtype, unsigned int(8)
v, bit(24) f) extends Box(boxtype) {
    unsigned int(8)        version = v;
    bit(24)                flags = f;
}
```

EP 3 609 187 A1

# FIG. 3

| | | trak | | mdia | | minf | | stbl |
|---|---|---|---|---|---|---|---|---|
| | | tkhd | | mdhd | | vmhd.. | | stsd |
| ftyp | moov | tref | | hdlr | | dinf | | stts |
| | mvhd | edts | | elng | | stbl | | ctts |
| | trak#1 | mdia | | minf | | | | cslg |
| | trak#N | udta | | | | | | stsc |
| | mvex | | | | | | | stsz |
| | udta | mvex | | | | | | stco |
| | | mehd | | | | | | stss |
| | | trex | | | | | | subs |
| | | leva | | | | | | sgpd |
| | | trep | | | | | | |

moof
- mfhd
- traf#1
- traf#N

traf
- tfhd
- trun#1
- trun#N
- tfdt

# FIG. 4

...

# FIG. 5

360 VIDEO TRANSMISSION APPARATUS

DATA INPUT UNIT → METADATA PROCESSOR

STITCHER

PROJECTION PROCESSOR

DATA ENCODER

ENCAPSULATION PROCESSOR

TRANSMISSION PROCESSOR

TRANSMITTER

(TRANSMISSION SIDE) FEEDBACK PROCESSOR

TRANSMISSION

FEEDBACK INFORMATION

# FIG. 6

RECEPTION                    FEEDBACK INFORMATION

**360 VIDEO RECEPTION APPARATUS**

RECEIVER

RECEPTION PROCESSOR

METADATA PARSER ⟷ DECAPSULATION PROCESSOR ⟷ FEEDBACK INFORMATION ⟷ (RECEPTION SIDE) FEEDBACK PROCESSOR

DATA DECODER ← FEEDBACK INFORMATION

REPROJECTION PROCESSOR ← FEEDBACK INFORMATION

RENDERER ← FEEDBACK INFORMATION

EP 3 609 187 A1

# FIG. 7

EP 3 609 187 A1

# FIG. 8A

region-wise packing

projected picture → | region decomposition | → | guard band insertion | → | region-wise transformation | packed picture → | encoding |

quality degradation by resizing

quality degradation by region-wise QP

bitstream

region-wise unpacking

enhanced projected picture

recovered projected picture

decoded packed picture

viewport output image ← | rectilinear projection on 3D space | ← | region boundary enhancement | ← | region-wise stitching | ← | region-wise inverse transformation | ← | decoding |

(viewport metadata)

guard band blending/ replacement

# FIG. 8B

unpacking

decoded
packed
picture

viewport
output image ← viewport
generation ← region
boundary
enhancement ← inverse
transformation ← region
selection
(including GB) ← decoding ← bitstream

(viewport metadata)

# FIG. 8C

projected picture → region decomposition
quality degradation by resizing

sub-picture →

guard band insertion → sub-picture transformation → encoding

guard band insertion → sub-picture transformation → encoding

guard band insertion → sub-picture transformation → encoding

quality degradation by region-wise QP

bitstream

decoded packed picture

sub-picture inverse transformation ← decoding

sub-picture inverse transformation ← decoding

(viewport metadata)

sub-picture composition

recovered projected picture

region boundary enhancement
guard band blending/ replacement

enhanced projected picture

viewport generation

viewport output image

EP 3 609 187 A1

# FIG. 8D

viewport
output image
← viewport
generation
← region
boundary
extension
← region
boundary
enhancement
← sub-picture
composition
← sub-picture
inverse
transformation
← decoding
← decoded
packed
picture

enhanced
projected picture

recovered
projected picture

⋮

sub-picture
inverse
transformation
← decoding

guard band blending/
replacement

(viewport metadata)
extended_coverage_information( )

EP 3 609 187 A1

# FIG. 9A

EP 3 609 187 A1

| sei_payload( payloadType, payloadSize ) { | Category | Descriptor |
|---|---|---|
| if( nal_unit_type  =  =  PREFIX_SEI_NUT ) { | | |
| | | |
| if( payloadType  =  =  XXX ) | | |
| region_wise_auxiliary_informatoin( payloadSize) | 5 | |
| } } | | |

# FIG. 9B

| region_wise_auxiliary_information ( payloadSize ) { | Descriptor |
|---|---|
| region_wise_auxiliary_information_cancel_flag | u(1) |
| if(! region_wise_auxiliary_information_cancel_flag ) { | |
| region_wise_auxiliary_information_persistence_flag | u(1) |
| num_regions_minus1 | u(8) |
| target_picture_width | u(16) |
| target_picture_height | u(16) |
| for ( i=0; i<=num_regions_minus1; i++ ) { | |
| packing_type[i] | u(4) |
| region_wise_packing (packing_type[i]) | |
| region_wise_auxiliary_information_present_flag[i] | u(1) |
| if(region_wise_auxiliary_information_present_flag[i]) { | |
| for(j=0; j<4; j++) {    // 0: top, 1: left, 2: bottom, 3: right | |
| rai_width[i][j] | u(8) |
| rai_height[i][j] | u(8) |
| } | |
| rai_not_used_for_pred_flag[i] | u(1) |
| rai_equal_type_flag[i] | u(1) |
| rai_transformation_flag[i] | u(1) |
| rai_corner_present_flag[i] | u(1) |
| rai_extended_coverage_flag[i] | u(1) |
| rai_presentation_flag[i] | u(1) |
| if(rai_equal_type_flag[i]) {_ | |
| rai_type[i] | u(3) |
| rai_dir[i] | u(2) |
| if(rai_transformation_flag[i]) | |
| rai_transform_type[i] | u(3) |
| rai_hor_scale[i] | u(8) |
| rai_ver_scale[i] | u(8) |
| } | |
| if(rai_type[i] == 2) | |
| rai_delta_QP[i] | i(8) |
| } | |
| • • • | |

# FIG. 9C

| | |
|---|---|
| • • • | |
| else { | |
| for(j=0; j<4; j++) {    // 0: top, 1: left, 2: bottom, 3: right | |
| num_sub_boundaries_minus1[i][j] | u(4) |
| for( k=0; k<=num_sub_boundaries_minus1[i][j]; k++) { | |
| rai_sub_length[i][j][k] | u(3) |
| rai_type[i][j][k] | u(3) |
| rai_dir[i][j][k] | u(2) |
| if(rai_transformation_flag[i]) { | |
| rai_transform_type[i][j][k] | u(3) |
| rai_hor_scale[i][j][k] | u(8) |
| rai_ver_scale[i][j][k] | u(8) |
| } | |
| if(rai_type[i][j][k] == 2) | |
| rai_delta_QP[i][j][k] | i(8) |
| } | |
| if(rai_corner_present_flag[i]) {      // j = 0: TL, 1: BL, 2: BR, 3: TR | |
| rai_type[i][j] | u(3) |
| rai_dir[i][j] | u(2) |
| if(rai_transformation_flag[i]) { | |
| rai_transform_type[i][j] | u(3) |
| rai_hor_scale[i][j] | u(8) |
| rai_ver_scale[i][j] | u(8) |
| } | |
| if(rai_type[i][j] == 2) | |
| rai_delta_QP[i][j] | i(8) |
| } } } | |
| if(rai_extended_coverage_flag[i]) | |
| extended_coverage_information( ) | |
| } } } } | |

# FIG. 10

| extended_coverage_information () { | Descriptor |
|---|---|
| center_ver | i(32) |
| center_pitch | i(32) |
| center_roll | i(32) |
| hor_range | u(32) |
| ver_range | u(32) |
| } | |

# FIG. 11A

(a)

ERP        CMP 4x3        CMP 3x2

(b)

(c)

# FIG. 11B

CMP

CMP

(d)

ERP

SSP

# FIG. 12

(a)

| T (HQ) | | |
|---|---|---|
| L<br>(LQ) | M<br>(HQ) | R<br>(LQ) |
| B (HQ) | | |

(b)

| T (HQ) | | | | |
|---|---|---|---|---|
| 2 | 2 | 3 | 2 | 2 |
| L<br>(LQ) | 2 | M<br>(HQ) | 2 | R<br>(LQ) | 3 |
| 2 | 2 | 3 | 2 | 2 |
| B (HQ) | | | | |

FIG. 13

# FIG. 14

# FIG. 15

(a)

```
class  RegionWiseAuxiliaryInformationSEIBox extends Box('omsb', size)
{
    unsigned int(8*size-64) regionwiseauxiliaryinformationsei;
}
```

(b)

```
class VisualSampleEntry(codingname) extends SampleEntry (codingname){
    unsigned int(16) pre_defined = 0;
    const unsigned int(16) reserved = 0;
    unsigned int(32)[3]      pre_defined = 0;
    unsigned int(16) width;
    unsigned int(16) height;
    template unsigned int(32)     horizresolution = 0x00480000;  // 72 dpi
    template unsigned int(32)     vertresolution  = 0x00480000;  // 72 dpi
    const unsigned int(32)  reserved = 0;
    template unsigned int(16)     frame_count = 1;
    string[32]  compressorname;
    template unsigned int(16)     depth = 0x0018;
    int(16)      pre_defined = -1;
    //other boxes from derived specifications
    CleanApertureBox         clap;// optional
    PixelAspectRatioBox      pasp;// optional
     RegionWiseAuxiliaryInformationSEIBox        rai_sei; // optional
}
```

(c)

```
class HEVCSampleEntry() extends VisualSampleEntry ('hvc1' or 'hev1'){
    HEVCConfigurationBox config;
    MPEG4BitRateBox (); // optional
    MPEG4ExtensionDescriptorsBox (); // optional
    extra_boxes boxes; // optional
}

class HEVCConfigurationBox extends Box('hvcC') {
    HEVCDecoderConfigurationRecord() HEVCConfig;
    RegionWiseAuxiliaryInformationSEIBox    rai_sei; // optional
}
```

(d)

```
class HEVCSampleEntry() extends VisualSampleEntry ('hvc1' or 'hev1'){
    HEVCConfigurationBox config;
    MPEG4BitRateBox (); // optional
    MPEG4ExtensionDescriptorsBox (); // optional
    RegionWiseAuxiliaryInformationSEIBox       rai_sei; // optional
    extra_boxes boxes; // optional
}
```

# FIG. 16A

```
aligned(8) class RegionWiseAuxiliaryInformationStruct {
        unsigned int(8)     num_regions_minus1;
        unsigned int(16)    target_picture_width;
        unsigned int(16)    target_picture_height;
        for (i = 0; i <= num_regions_minus1; i++) {
                bit(3) reserved = 0;
                unsigned int(1) region_wise_auxiliary_information_present_flag[i];
                unsigned int(4) packing_type[i];
                if (packing_type[i] == 0)
                        RectRegionPacking(i);
                if (region_wise_auxiliary_information_present_flag[i]) {
                        for(j=0; j<4; j++) {
                                unsigned int(8) rai_width[i][j];
                                unsigned int(8) rai_height[i];
                        }
                        unsigned int(1) rai_not_used_for_pred_flag[i];
                        unsigned int(1) rai_equal_type_flag[i];
                        unsigned int(1) rai_transformation_flag[i];
                        unsigned int(1) rai_corner_present_flag[i];
                        unsigned int(1) rai_extended_coverage_flag[i];
                        unsigned int(1) rai_presentation_flag[i];
                        bit(2) reserved = 0;
                        if(rai_equal_type_flag[i])   {
                                unsigned int(3) rai_type[i];
                                unsigned int(2) rai_dir[i];                          // outward, inward, both sided
                                if(rai_transformation_flag[i])     {
                                        bit(5) reserved = 0;
                                        unsigned int(3) rai_transform_type[i];
                                        unsigned int(8) rai_hor_scale[i];
                                        unsigned int(8) rai_ver_scale[i];
```

EP 3 609 187 A1

# FIG. 16B

```
                }
                if(rai_type[i] == 2)
                        singed int (8) rai_delta_QP[i];
        }
        else {          // 4 directions and a corner have different types
                for(j=0; j<4; j++)   {              // 0: top, 1: left, 2: bottom, 3: right
                        unsigned int(4) num_sub_boundaries_minus1[i][j];
                        bit(4) reserved = 0;
                        for(k=0; k< num_sub_boundaries_minus1[i][j]; k++)         {// There are different types in a surface
                                unsigned int(3) rai_sub_length[i][j][k];
                                unsigned int(3) rai_type[i][j][k];
                                unsigned int(2) rai_dir[i][j][k];
                                if(rai_transformation_flag[i])      {
                                        bit(5) reserved = 0;
                                        unsigned int(3) rai_transform_type[i][j][k];
                                        unsigned int(8) rai_hor_scale[i][j][k];
                                        unsigned int(8) rai_ver_scale[i][j][k];
                                }
                                if(rai_type[i][j][k] == 2)
                                        signed int (8) rai_delta_QP[i][j][k];
                if(rai_corner_present_flag[i]) {
                        unsigned int(3) rai_type[i][j];
                        unsigned int(2) rai_dir[i][j];
                        if(rai_transformation_flag[i])      {
                                bit(5) reserved = 0;
                                unsigned int(3) rai_transform_type[i][j];
                                unsigned int(8) rai_hor_scale[i][j];
                                unsigned int(8) rai_ver_scale[i][j];
                        }
```

EP 3 609 187 A1

# FIG. 16C

```
                if(rai_type[i][j][k] == 2)
                        signed int (8) rai_delta_QP[i][j];
                }
            }
        }
        if(rai_extended_coverage_flag[i])
                ExtendedCoverageInformation(i)
    }
  }
}
```

EP 3 609 187 A1

# FIG. 17

```
aligned(8) class ExtendedCoverageInformation(i) {
        signed int(32) center_yaw;
        signed int(32) center_pitch;
        singed int(32) center_roll;
        unsigned int(32) hor_range;
        unsigned int(32) ver_range;
}
```

# FIG. 18

```
aligned(8) class RectRegionPacking(i) {
        unsigned int(16) proj_reg_width[i];
        unsigned int(16) proj_reg_height[i];
        unsigned int(16) proj_reg_top[i];
        unsigned int(16) proj_reg_left[i];
        unsigned int(3)  transform_type[i];
        bit(5) reserved = 0;
        unsigned int(16) packed_reg_width[i];
        unsigned int(16) packed_reg_height[i];
        unsigned int(16) packed_reg_top[i];
        unsigned int(16) packed_reg_left[i];
}
```

# FIG. 19

(a)

```
class VisualSampleEntry(codingname) extends SampleEntry (codingname){
    unsigned int(16) pre_defined = 0;
    const unsigned int(16) reserved = 0;
    unsigned int(32)[3]     pre_defined = 0;
    unsigned int(16) width;
    unsigned int(16) height;
    template unsigned int(32)     horizresolution = 0x00480000;  // 72 dpi
    template unsigned int(32)     vertresolution  = 0x00480000;  // 72 dpi
    const unsigned int(32)  reserved = 0;
    template unsigned int(16)     frame_count = 1;
    string[32]  compressorname;
    template unsigned int(16)     depth = 0x0018;
    int(16)     pre_defined = -1;
    //other boxes from derived specifications
    CleanApertureBox       clap;// optional
    PixelAspectRatioBox    pasp;// optional
     RegionWiseAuxiliaryInformationStruct();
}
```

(b)

```
class HEVCSampleEntry() extends VisualSampleEntry ('hvc1' or 'hev1'){
    HEVCConfigurationBox config;
    MPEG4BitRateBox (); // optional
    MPEG4ExtensionDescriptorsBox (); // optional
    extra_boxes boxes; // optional
}

class HEVCConfigurationBox extends Box('hvcC') {
    HEVCDecoderConfigurationRecord() HEVCConfig;
    RegionWiseAuxiliaryInformationStruct();
}
```

(c)

```
class HEVCSampleEntry() extends VisualSampleEntry ('hvc1' or 'hev1'){
    HEVCConfigurationBox config;
    MPEG4BitRateBox (); // optional
    MPEG4ExtensionDescriptorsBox (); // optional
    RegionWiseAuxiliaryInformationStruct();
    extra_boxes boxes; // optional
}
```

# FIG. 20

(a)
```
class RegionWiseAuxilizryInformationSampleEntry(type) extends MetadataSampleEntry (type){
    RegionWiseAuxiliaryInformationStruct ();
    Box []   other_boxes;
}
```

(b)
```
aligned (8)  RegionWiseAuxiliaryInformationSample () {
    RegionWiseAuxiliaryInformationStruct ()
}
```

# FIG. 21A

| Element or Attribute Name | Use | Description |
|---|---|---|
| DescriptorType | | Designate descriptor |
| @schemeIdUri | M | This may represent URI for identifying a scheme of the corresponding descriptor. The semantics of the factor may be different for the scheme to which the factor is designated. @schemeIdUri may be URN or URL. When URL is used, month-date in the format of mmyyyy may be included. |
| @value | O | This may represent a value of the descriptor element.  The value space and the semantics should be defined @schemeIdUri attribute or at the scheme identified by URL.  When URL is used, month-date in the format of mmyyyy may be included. |
| @id | O | This represents an identifier for he descriptor.  The descriptors having the same value for the factor should be synonymous.  i.e., it may be enough to process with one descriptor having the same value |
| Legend:<br>   For attributes: M=Mandatory, O=Optional, OD=Optional with Default Value, CM=Conditionally Mandatory.<br>    For elements: <minOccurs>...<maxOccurs> (N=unbounded)<br>Elements are bold; attributes are non-bold and preceded with an @. | | |

~2100

EP 3 609 187 A1

# FIG. 21B

| Scheme Identifier (@schmeIdUri) | Informative description |
|---|---|
| urn:mpeg:dash:vr:201x | Scheme identifier for Region wise quality indication |

2110

# FIG. 21C

| @value | Use | Description |
|---|---|---|
| region_wise_auxiliary_information_cancel_flag | OD (default : false) | In the case of 1, this represents that all types of information of the region-wise auxiliary information SEI message transferred in a previous frame are not used. |
| region_wise_auxiliary_information_persistence_flag | OD (default : false) | In the case of 1, this represents that the region-wise auxiliary information SEI message may be used in the frames located rear in a time order. |
| num_regions_minus1 | O | This represents the number of total regions. |
| target_picture_width, target_picture_heigh | O | This represents a width and a height of a final image. For 360, a width and a height of a projected picture may be represented. For reference, a width and a height of a current entire image may be transferred separately, if it is required. |
| packing_type | O | This represents a type of region-wise packing. For example, in the case of 0, this may represent rectangular region-wise packing. |
| region_wise_auxiliary_information_present_flag | O | In the case that this is 1, this represents that the region-wise auxiliary information is transferred as the auxiliary image information. In the case that this is 0, this represents that there is no region-wise auxiliary information. |
| rai_width, rai_height | O | In the case that there is the auxiliary image information, this represents a size of the area that the target region occupies from top bottom right and left boundary. For example, in the case that the auxiliary image information is present at left of a center area, a width and a height are informed through rai_width [1] and rai_height[1]. Generally, rai_height[1] may be configured as the same as a height of the center area. However, to inform that the center area and the auxiliary image information performs different transforms or cover different range from the vertical range covered in the center area, rai_height[1] may have different value. In this case, a height may be defined as symmetrical from the center of the target region, or if it is required, top and left points may be separately signalled for the auxiliary image information. |
| rai_not_used_for_pred_flag | OD (default: true) | In the case that this is 1, this represent that the auxiliary information is not used for prediction in encoding/decoding process. |
| rai_equal_type_flag | OD (default: true) | In the case that this is 1, this represents that the auxiliary information has the same rai_type for top bottom right and left surface. In the case that this is 0, different rai_types may be included in top bottom right and left surface. |
| rai_transforamtion_flag | OD (default : false) | In the case that this is 1, this represents that transform information for the auxiliary information is provided. In the case that this is 0, this represents that it has the same transform as that of the center area. |

~2120

# FIG. 21D

| @value | Use | Description |
|---|---|---|
| rai_corner_present_flag | OD (default : false) | In the case that this is 1, this represents that information is transferred in a corner part in the rectangular area including the auxiliary image information. For example, in the case that the video information at the center area is extended for the purpose of responding a fast viewport of 360 video or panorama video, it is beneficial to transfer ed. image information of an adjacent area to the corner in addition to top bottom right and left, and in this case, by setting the flag to 1, and inform that image information may be transferred for a movement in the corner direction. |
| rai_extended_coverage_flag | OD (default: true) | In the case that this is 1, this represents that the coverage information covered by the target region + auxiliary information is transferred in the case that the image auxiliary information is used. In the case that this is 1, this represent that the auxiliary information is not transferred. |
| rai_presentation_flag | O | In the case that this is 1, this represents that the information in which the image auxiliary information is consecutive with a current target area is provided, and this may also be used for viewport generation. For example, when the image auxiliary information includes a part of the image of the adjacent area without any change or processed form like rai_type of 2, 3 or 4, without being required to receive or decode the entire adjacent area, through the video information in the current target area and the image auxiliary information, viewport may be fast and efficiently generated. In the case that the image auxiliary information supports such a function, rai_presentation_flag is set to 1, and the information may be used when a receiver requires it. In the case that this is 0, this represent that the image auxiliary information is unable to be used as a final output image. |
| rai_type | O | This represents a type of the image auxiliary information, all surfaces has the same type of image auxiliary information or in the case that it is rectangle, different types of image auxiliary information may be included for top bottom right and left or each surface of the polygon. Each of the type represent an attribute of the image included in a designated area adjacent to each corner of the area. In the case that it is 0, this represents that information is not defined, and in the case that it is 1, this represents that information of boundary line is repeatedly included, in the case that it is 2, this represents that the image auxiliary information adjacent to a boundary has gradual image quality change, in the case that it is 3, this represents that the image auxiliary information adjacent to a boundary is included in the same image quality, in the case that it is 4, this represents that the image adjacent to a boundary is included after being processed additionally (e.g., image projected on a viewport plane for the purpose of extending a viewport of the target region), in the case that it is 5, this represents that the image auxiliary information is transferred to the area adjacent to the corresponding boundary in the case of reconfiguring the image (e.g., in the case of reconstructing as a projected frame after unpacking for 360 video), and represents that direct information is not included in the corresponding boundary of the target region currently considered, but information given for an area becoming adjacent can be used. |

~2120

# FIG. 21E

| @value | Use | Description | |
|---|---|---|---|
| rai_dir | O | This represents that a directionality of the given image auxiliary information with an interested boundary at the center. In the case that it is 0, this represents that information outward from a boundary with the target region at the center, in the case that it is 1, this represents that information inward from a boundary with the target region at the center, and in the case that it is 2, this represents that information corresponding to both inward and outward from a boundary with the target region at the center. In the case of including information of both sides, information of the same width may be included. In the case that information is included with different ratios for inward and outward directions, information such as ratio or width may be additionally transferred. | ~2120 |
| rai_transform_type | O | In the case that rai_transformation_flag is 1, this represents that the image auxiliary information is made through a transform different from that of target region, and in this case, through the rai_transform_type, the region transform information of the corresponding image auxiliary information may be informed. That is, when the RAI region information is used, using the transform method defined in rai_transform_type, this may be used after inverse transformation, and the meaning according to the rai_transform_type value may be distinguished as below.<br>0: no transform<br>1: mirroring horizontally<br>2: rotation by 180 degrees (counter-clockwise)<br>3: rotation by 180 degrees (counter-clockwise) after mirroring horizontally<br>4: rotation by 90 degrees (counter-clockwise) after mirroring horizontally<br>5: rotation by 90 degrees (counter-clockwise)<br>6: rotation by 270 degrees (counter-clockwise) after mirroring horizontally<br>7: rotation by 270 degrees (counter-clockwise) | |
| rai_hor_scale, rai_ver_scale | | In the case that rai_transformation_flag is 1, this represents scaling in a vertical or horizontal direction when the image auxiliary information is used. This may be represent in 0.01 unit, and the vertical or horizontal direction may be defined to represent vertical or horizontal direction before rai_transform_type is applied. | |
| rai_delta_QP | O | In the case that rai_type is 2, this represents that an image quality change is present in the area of the image auxiliary information, and in this case, this field may be used for transferring detailed information for a difference of the image quality change. For example, in the case that an image quality occurs by using different QP between areas adjacent after reconstructing the target region currently considered, the image auxiliary information includes an image of which QP is gradually changed for the purpose of alleviating QP difference between two areas, and in this case, each of starting QP and end QP are transferred, or rai_delta_QP may be transferred as a difference therebetween. As a more general use method, as a method of representing level difference for an image quality degradation, this field can be used. | |

# FIG. 21F

| @value | Use | Description | |
|---|---|---|---|
| num_sub_boundaries_minus1 | O | In the case that image auxiliary information of different property is used for a boundary of the target region, this represents the number of regions having different property. | ~2120 |
| rai_sub_length | O | This represents a length of the kth sub-boundary for jth boundary. In the case of horizontal direction boundary, the case of applying rai_sub_length in the order of left to right, and in the case of vertical direction boundary top to bottom may be considered. | |
| center_yaw, center_pitch, center_roll | O | This represents a center of additional extension range. In the case that the coverage information for the target region is transferred and the three terms are not defined in ExtendedCoverageInformation, this may have the same value as the coverage information for the target region. | |
| hor_range, ver_range | O | This represents a horizontal and vertical range. This should be equal to or greater than a horizontal and vertical range for representing a coverage of the target region. | |
| projected_region_width, projected_region_height, projected_region_top, projected_region_left | O | This represents a position and a size of a considered region on a projected picture. | |
| transform_type | O | This represents a transform when a region of the projected picture is transformed to a packed region.<br>0: no transform<br>1: mirroring horizontally<br>2: rotation by 180 degrees (counter-clockwise)<br>3: rotation by 180 degrees (counter-clockwise) after mirroring horizontally<br>4: rotation by 90 degrees (counter-clockwise) after mirroring horizontally<br>5: rotation by 90 degrees (counter-clockwise)<br>6: rotation by 270 degrees (counter-clockwise) after mirroring horizontally<br>7: rotation by 270 degrees (counter-clockwise) | |
| packed_region_width, packed_region_height, packed_region_top, packed_region_left | O | This represents a position and a size of the transformed packed picture. | |

# FIG. 22

```
        ( START )
            │
            ▼
┌──────────────────────────────┐
│  Acquire 360-degree video data │ ──── S2200
│  captured by at least one camera │
└──────────────────────────────┘
            │
            ▼
┌──────────────────────────────┐
│ Acquire a projected picture by processing │ ──── S2210
│      the 360-degree video data     │
└──────────────────────────────┘
            │
            ▼
┌──────────────────────────────┐
│ Acquire a packed picture by applying the │ ──── S2220
│ region-wise packing to the projected picture │
└──────────────────────────────┘
            │
            ▼
┌──────────────────────────────┐
│     Generate metadata for the      │ ──── S2230
│       360-degree video data       │
└──────────────────────────────┘
            │
            ▼
┌──────────────────────────────┐
│      Encode the packed picture      │ ──── S2240
└──────────────────────────────┘
            │
            ▼
┌──────────────────────────────┐
│ Perform a process for storing or transmitting │ ──── S2250
│   the encoded picture and the metadata   │
└──────────────────────────────┘
            │
            ▼
        ( END )
```

# FIG. 23

START

Receive information for a packed picture and a signal including the metadata for the 360-degree video data — S2300

Acquire the information for the packed picture and the metadata by processing the received signal — S2310

Decode the packed picture based on the information for the packed picture — S2320

Processes the decoded picture based on the metadata and render it to the 3D space — S2330

END

## INTERNATIONAL SEARCH REPORT

| | International application No. |
|---|---|
| | **PCT/KR2017/008547** |

| A. CLASSIFICATION OF SUBJECT MATTER |
|---|
| *H04N 21/2343(2011.01)i, H04N 21/235(2011.01)i, H04N 21/81(2011.01)i, H04N 21/236(2011.01)i* |
| According to International Patent Classification (IPC) or to both national classification and IPC |

| B. FIELDS SEARCHED |
|---|
| Minimum documentation searched (classification system followed by classification symbols) |
| H04N 21/2343; H04N 5/232; H04N 19/107; H04N 7/26; H04N 5/262; G06T 7/20; H04N 19/10; G03B 15/00; H04N 21/235; H04N 21/81; H04N 21/236 |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br>eKOMPASS (KIPO internal) & Keywords: 360 degree video data, region-wise packing, metadata, encoding, decoding, transmission, efficiency |

| C. DOCUMENTS CONSIDERED TO BE RELEVANT | | |
|---|---|---|
| Category* | Citation of document, with indication, where appropriate, of the relevant passages | Relevant to claim No. |
| A | WO 2016-076680 A1 (SAMSUNG ELECTRONICS CO., LTD.) 19 May 2016<br>See paragraphs [0036], [0041], [0128]; claim 1; and figures 1, 15. | 1-20 |
| A | FU, Chi-Wing et al., "The Rhombic Dodecahedron Map: An Efficient Scheme for Encoding Panoramic Video", ResearchGate, pages 1-11, 03 December 2014<br>(Retrieved from : https://www.researchgate.net/publication/224436861)<br>See section III. | 1-20 |
| A | US 2014-0161196 A1 (MICROSOFT CORPORATION) 12 June 2014<br>See paragraph [0033]; and figure 6. | 1-20 |
| A | JP 2013-027021 A (CANON INC.) 04 February 2013<br>See paragraphs [0023]-[0024]; claims 1-2, 6-7; and figure 1. | 1-20 |
| A | KR 10-2015-0059534 A (SAMSUNG ELECTRONICS CO., LTD.) 01 June 2015<br>See paragraphs [0060]-[0068]; claims 1-6; and figure 3. | 1-20 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 APRIL 2018 (04.04.2018) | **04 APRIL 2018 (04.04.2018)** |

| Name and mailing address of the ISA/KR<br>Korean Intellectual Property Office<br>Government Complex Daejeon Building 4, 189, Cheongsa-ro, Seo-gu,<br>Daejeon, 35208, Republic of Korea<br>Facsimile No. +82-42-481-8578 | Authorized officer<br><br><br>Telephone No. |
|---|---|

Form PCT/ISA/210 (second sheet) (January 2015)

## INTERNATIONAL SEARCH REPORT
Information on patent family members

International application No.

**PCT/KR2017/008547**

| Patent document cited in search report | Publication date | Patent family member | Publication date |
|---|---|---|---|
| WO 2016-076680 A1 | 19/05/2016 | CN 107113414 A<br>EP 3219102 A1<br>KR 10-2017-0084275 A<br>US 2016-0142697 A1 | 29/08/2017<br>20/09/2017<br>19/07/2017<br>19/05/2016 |
| US 2014-0161196 A1 | 12/06/2014 | US 9445112 B2<br>WO 2014-089097 A1 | 13/09/2016<br>12/06/2014 |
| JP 2013-027021 A | 04/02/2013 | NONE | |
| KR 10-2015-0059534 A | 01/06/2015 | US 2015-0149960 A1 | 28/05/2015 |

Form PCT/ISA/210 (patent family annex) (January 2015)